# EUROPÄISCHE PATENTSCHRIFT

(11) **EP 3 856 590 B1**
(45) Veröffentlichungstag und Bekanntmachung des Hinweises auf die Patenterteilung: **14.06.2023**
(21) Anmeldenummer: 19769779.0
(22) Anmeldetag: 16.09.2019
(51) Int. Cl.: B60T 8/32, B60T 8/36

(54) **ALS BAUEINHEIT AUSGEFÜHRTES ELEKTRO-PNEUMATISCHES DRUCKREGELMODUL MIT INTEGRIERTEM INERTIALSENSOR**
PNEUMATIC PRESSURE CONTROL MODULE EMBEDDED WITH AN INERTIAL SENSOR ON A COMMON UNIT
DISPOSITIF DE COMMANDE DE PRESSION PNEUMATIQUE INTÉGRÉ AVEC UN CAPTEUR INERTIEL SUR UN AGGRÉGAT COMMUN

(30) Priorität: 28.09.2018 DE 102018123997
(43) Veröffentlichungstag der Anmeldung: 04.08.2021
(73) Patentinhaber: KNORR-BREMSE Systeme für Nutzfahrzeuge GmbH, 80809 München (DE)
(72) Erfinder: EISENBERGER, Andreas, 72622 NÜRTINGEN (DE); HERGES, Michael, 80935 München (DE); HUBER, Christoph, 80333 München (DE); STEINBERGER, Jürgen, 82194 Gröbenzell (DE)
(86) Internationale Anmeldenummer: PCT/EP2019/074607
(87) Internationale Veröffentlichungsnummer: WO 2020/064377

(56) Entgegenhaltungen:
- EP-A1- 0 652 145
- WO-A2-02/16179
- WO-A2-2010/094481
- DE-A1-102012 022 309

## Beschreibung

Die Erfindung geht aus von einem als Baueinheit ausgeführten wenigstens einkanaligen elektro-pneumatischen Druckregelmodul für eine elektro-pneumatische Betriebsbremseinrichtung eines Fahrzeugs, gemäß dem Oberbegriff von Anspruch 1. Weiterhin betrifft die Erfindung auch eine elektro-pneumatische Betriebsbremseinrichtung eines Fahrzeugs mit einem solchen Druckregelmodul sowie ein Fahrzeug mit einer solchen Betriebsbremseinrichtung gemäß den Ansprüchen 27 und 34.

Eine elektro-pneumatische Betriebsbremseinrichtung eines Fahrzeugs ist aus EP 1 122 142 A1 bekannt und weist ein 2-kanaliges Druckregelmodul für die Hinterachse auf, wobei je ein Kanal eine Radbremse der Hinterachse mit Brems- oder Arbeitsdruck versorgt. Die Radbremszylinder der Vorderachse werden demgegenüber von je einem eigenen 1-Kanal-Druckregelmodul be- bzw. entlüftet. Diese 1-Kanal-Druckregelmoduln weisen zudem jeweils einen rein pneumatischen Back-up-Kreis auf, um bei Ausfall der Elektrik noch durch den von einem Fußbremsventil ausgesteuerten Druck bremsen zu können. Die beiden 1-Kanal-Druckregelmoduln der Vorderachse und das 2-Kanal-Druckregelmodul der Hinterachse werden von einem außerhalb der Druckregelmodule angeordneten zentralen elektronischen Bremssteuergerät angesteuert.

Solche elektro-pneumatischen Betriebsbremseinrichtungen weisen in dem zentralen elektronischen Bremssteuergerät oftmals Routinen einer Fahrdynamik- oder Fahrstabilitätsregelung wie ESP auf, welche Signale wenigstens eines Inertialsensors wie eines Beschleunigungssensors und/oder eines Gierratensensors verarbeiten, um basierend auf diesen Signalen die Druckregelmodule im Bremssinn anzusteuern, um Fahrstabilität durch gezieltes Einbremsen von einzelnen Rädern herzustellen. Bei solchen Inertialsensoren können allerdings Schwingungen und Vibrationen, welche von Schaltvorgängen von Magnetventilen der Druckregelmodule herrühren zu Fehlmessungen führen, wenn diese Schwingungen und Vibrationen als Körperschall auf den wenigstens einen Inertialsensor übertragen werden.

Auch ist einer solchen elektropneumatischen Betriebsbremseinrichtung eine hohe Anzahl von Einzelkomponenten zu vermeiden, welche zahlreiche elektrische und pneumatische Verbindungen und Leitungen zwischen den einzelnen Komponenten erfordern. Dies führt auch wegen der dann zahlreichen Anschlüsse zu einer relativ hohen Fehlerwahrscheinlichkeit.

WO 02/16179 A2 offenbart eine Vorrichtung zur Fahrdynamikregelung bestehend aus einem Ventilblock und einer elektronischen Reglereinheit, wobei innerhalb der Reglereinheit elektronische Bauelemente zumindest für den Bremseneingriff angeordnet sind, die Signale von mindestens einem Fahrdynamiksensor wie Gierratensensor und/oder Beschleunigungssensor verarbeiten und wobei im Ventilblock zumindest elektrohydraulische Ventile angeordnet sind, wobei mindestens ein Fahrdynamiksensor in der Vorrichtung integriert ist. Ein gattungsgemäßes wenigstens einkanaliges elektro-pneumatisches Druckregelmodul, eine gattungsgemäße elektro-pneumatische Betriebsbremseinrichtung sowie ein gattungsgemäßes Fahrzeug sind in WO 2010/094481 A2 offenbart.

Weitere Dokumente des Standes der Technick : EP 0 652 145 A1, DE 10 2012 022309 A1 und WO 02/16179 A2.

Der vorliegenden Erfindung liegt die Aufgabe zugrunde, ein Druckregelmodul derart fortzubilden, dass bei robustem Aufbau eine hohe Funktionssicherheit aufweist. Weiterhin soll auch eine elektro-pneumatische Betriebsbremseinrichtung eines Fahrzeugs mit einem solchen Druckregelmodul sowie ein Fahrzeug mit einer solchen Betriebsbremseinrichtung zur Verfügung gestellt werden.

Diese Aufgabe wird erfindungsgemäß durch die Merkmale der Ansprüche 1, 27 und 34 gelöst.

### Offenbarung der Erfindung

Gemäß ersten bis dritten Aspekten der Erfindung wird ein als Baueinheit ausgeführtes wenigstens einkanaliges elektro-pneumatisches Druckregelmodul für eine elektro-pneumatische Betriebsbremseinrichtung eines Fahrzeugs vorgeschlagen, mit wenigstens einem ersten in Bezug auf einen ersten Betriebsbremsdruck elektrisch regelbaren Druckregelkanal, wobei
a) für den ersten Druckregelkanal auf der Basis einer von wenigstens einem Druckluftvorrat stammenden Arbeitsluft abhängig von einem elektrischen Bremsanforderungssignal eines elektrischen Kanals eines Fußbremsventils der erste Betriebsbremsdruck für wenigstens einen Betriebsbremszylinder der Betriebsbremseinrichtung erzeugt wird, und wobei
b) der erste Druckregelkanal den ersten Betriebsbremsdruck in dem wenigstens einen Betriebsbremszylinder an wenigstens einer ersten Achse erzeugt, und wobei
c) das Druckregelmodul wenigstens Folgendes aufweist: Wenigstens einen Vorratsanschluss zum Anschließen des wenigstens einen Druckluftvorrats wenigstens einen ersten Arbeitsanschluss des ersten Druckregelkanals zum Anschließen des wenigstens einen ersten Betriebsbremszylinders an der wenigstens einen ersten Achse, wenigstens einen ersten elektrischen Kommunikationsanschluss zum Einsteuern wenigstens von einem einen ersten Betriebsbrems-Solldruck für den ersten Druckregelkanal repräsentierenden Signal, welches auf der Basis eines elektrischen Bremsanforderungssignals eines elektrischen Kanals eines Fußbremsventils der elektro-pneumatischen Betriebsbremseinrichtung gebildet wird, und wenigstens eine erste Entlüftung des ersten Druckregelkanals sowie wenigstens einen ersten Spannungsversorgungsanschluss zur Versorgung des Druckregelmoduls mit elektrischer Spannung, und wobei
d) in das Druckregelmodul
   d1) ein elektronisches Steuergerät integriert ist, welches ausgebildet ist, dass es abhängig von den an dem ersten elektrischen Kommunikationsanschluss anstehenden, den ersten Betriebsbrems-Solldruck für den ersten Druckregelkanal repräsentierenden Signal ein dem ersten Soll-Betriebsbremsdruck entsprechendes erstes elektrisches Steuersignal für eine erste elektromagnetische Ventileinrichtung des ersten Druckregelkanals erzeugt, und
   d2) die erste elektro-magnetische Ventileinrichtung integriert ist, welche abhängig von dem ersten elektrischen Steuersignal aus dem Vorratsdruck des wenigstens einen Druckluftvorrats einen ersten Ist-Betriebsbremsdruck an dem ersten Arbeitsanschluss des ersten Druckregelkanals moduliert, und
   d3) wenigstens ein erster Drucksensor integriert ist, welcher ein den gemessenen ersten Ist-Betriebsbremsdruck repräsentierendes erstes Druckmesssignal in das elektronische Steuergerät zum Vergleich mit dem ersten Soll-Betriebsbremsdruck in das elektronische Steuergerät einsteuert, wobei das elektronische Steuergerät weiterhin ausgebildet ist, dass es für den ersten Druckregelkanal einen Abgleich zwischen dem ersten Ist-Betriebsbremsdruck und dem ersten Soll-Betriebsbremsdruck vornimmt und abhängig von diesem Abgleich die erste elektro-magnetische Ventileinrichtung derart ansteuert, dass an dem ersten Arbeitsanschluss der erste Soll-Betriebsbremsdruck ansteht, wobei
e) das elektronische Steuergerät eine elektrische und elektronische Bauteile tragende Platine aufweist, wobei in den elektrischen und elektronischen Bauteilen Routinen wenigstens für die Betriebsbremsdruckregelung wenigstens für den ersten Druckregelkanal implementiert sind, wobei
f) auf oder an der wenigstens einen Platine wenigstens ein Inertialsensor angeordnet und mit wenigstens einigen der elektrischen und elektronischen Bauteilen auf der Platine derart elektrisch leitend verbunden ist, dass die Ausgangssignale des wenigstens einen Inertialsensors in die wenigstens einigen elektrischen und elektronischen Bauteile einsteuerbar sind.

Das Druckregelmodul stellt daher eine Baueinheit in einem gemeinsamen Gehäuse oder in aneinander geflanschten Einzelgehäusen mit den wenigstens den oben erwähnten Anschlüssen dar. Das Druckregelmodul kann insbesondere ein beliebiges 1-kanaliges oder mehrkanaliges Druckregelmodul innerhalb einer elektropneumatischen Betriebsbremseinrichtung darstellen.

Dabei sind an oder auf der elektrische und elektronischen Bauteile tragenden Platine des elektronischen Steuergeräts des Druckregelmoduls, in welchem wenigstens die Routinen für die Bremsdruckregelung implementiert sind und optional auch die Routinen für die Fahrdynamik- oder Fahrstabiliätsregelung implementiert sein können (aber nicht müssen), auch wenigstens ein Inertialsensor (z.B. Gierratensensor, Längsbeschleunigungssensor, Querbeschleunigungssensor) angeordnet, dessen Sensorsignale dann als Eingangssignale für die Fahrdynamik- oder Fahrstabilitätsregelung herangezogen werden. Durch die Intergration des wenigstens einen Inertialsensors in das Druckregelmodul können dann Sensoranschlüsse sowie ein eigenes Sensorgehäuse für den wenigstens einen Inertialsensor entfallen.

Jedoch stellt sich dann das Problem, dass der wenigstens eine Inertialsensor durch Vibrationen und Schwingungen, welche von Schaltvorgängen von Magnetventilen wenigstens der ersten elektropneumatischen Ventileinrichtung herrühren auch auf die Platine und damit auch auf den wenigstens einen auf der Platine angeordneten Inertialsensor übertragen werden, dessen Messsignale dadurch verfälscht werden können.

Gemäß dem ersten Aspekt der Erfindung ist vorgesehen, dass
g1) das Druckregelmodul Schwingungsentkopplungsmittel zum wenigstens teilweisen Entkoppeln des wenigstens einen Inertialsensors von Schwingungen oder Körperschall beinhaltet, welchen die Platine oder Bauteile des Druckregelmoduls im Betrieb ausgesetzt ist/sind, und die Schwingungsentkoppelungsmittel einen Entkopplungsabschnitt eines Platinenkörpers der Platine umfassen, auf welchem der wenigstens eine Inertialsensor gehalten oder angeordnet ist, wobei der Entkopplungsabschnitt mittels wenigstens einer den Platinenkörper der Platine teilweise oder vollständig durchdringenden Ausnehmung von einem restlichen Platinenkörper der Platine mit Ausnahme wenigstens eines Platinenbrückenabschnitts getrennt ist, welcher den Entkopplungsabschnitt mit dem restlichen Platinenkörper insbesondere brückenartig verbindet, wobei entlang des Platinenbrückenabschnitts wenigstens eine elektrische Verbindung zwischen dem wenigstens einen Inertialsensor und den elektrischen und elektronischen Bauteilen auf dem restlichen Platinenkörper gezogen ist, welche die Ausgangssignale des wenigstens einen Inertialsensors an die elektrischen und elektronischen Bauteile leitet.

Das Druckregelmodul beinhaltet insbesondere Schwingungsentkopplungsmittel, welche den wenigstens einen Inertialsensor zwar mit der Platine elektrisch verbinden, ihn aber von Schwingungen oder Körperschall, welchen die Platine im Betrieb des Druckregelmoduls ausgesetzt ist, entkoppeln. Solche unerwünschten Schwingungen werden vor allem durch die Schaltstöße von sich beispielsweise mit hoher Frequenz hin- und herbewegenden Ankern von Magnetventilen erzeugt, welche in dem Druckregelmodul integriert sind. Die Schwingungsentkopplungsmittel beinhalten dann nachgiebige oder "weiche" Elemente wie den wenigstens einen Platinenbrückenabschnitt, welche den Körperschall aufgrund der relativ hohen Anregungsfrequenzen der Magnetventile von dem wenigstens einen Inertialsensor auf dem Entkopplungsabschnitt entkoppeln.

Gemäß einer Weiterbildung des ersten Aspekts beinhaltet die wenigstens eine Ausnehmung wenigstens einen (durchgehenden) Schlitz im Platinenkörper, welcher den Entkopplungsabschnitt mit Ausnahme des wenigstens einen Platinenbrückenabschnitts wenigstens teilweise umgibt. Dann bildet der Platinenbrückenabschnitt eine Art nachgiebige "Federzunge", an welcher der Entkopplungsabschnitt des Platinenkörpers dann zusammen mit dem wenigstens einen Inertialsensor federnd gelagert ist. Der Schlitz kann dabei den Entkopplungsabschnitt des Platinenkörpers wegen des Platinenbrückenabschnitts beispielsweise teilweise umgeben.

Gemäß einer weiteren fortbildenden Maßnahme des ersten Aspekts kann die wenigstens eine Ausnehmung wenigstens teilweise mit einer Dämpfungsmasse befüllt sein. Die Dämpfungsmasse beispielsweise in dem wenigstens einen Schlitz sorgt dann ebenfalls für eine Schwingungsentkopplung.

Auch kann gemäß einer fortbildenden Maßnahme des ersten Aspekts der Platinenbrückenabschnitt wenigstens abschnittsweise eine geringere Dicke als der restliche Platinenkörper und/oder der Entkopplungsabschnitt aufweisen, was ebenfalls zu einer nachgiebigeren Ausgestaltung und damit zu einer besserten Entkopplung führt.

Gemäß dem zweiten Aspekt der Erfindung ist vorgesehen, dass
g2) das Druckregelmodul eine elektrische Kontaktierungsvorrichtung zum federbaren elektrischen Kontaktieren der Platine mit wenigstens einem Magnetventil wenigstens der ersten elektromagnetischen Ventileinrichtung vorgesehen ist, welche wenigstens ein sich von der Platine bis zu dem wenigstens einen Magnetventil erstreckendes Federelement umfasst, durch welches einerseits die Platine und das wenigstens eine Magnetventil in wenigstens einem Bewegungsfreiheitsgrad gegeneinander federnd gelagert und andererseits die Platine und das wenigstens eine Magnetventil miteinander elektrisch leitend verbunden sind.

Folglich stellt das wenigstens eine Federelement im Sinne einer Doppelfunktion einerseits eine gefederte und damit nachgiebige Lagerung zwischen Platine samt Inertialsensor und dem wenigstens einen Magnetventil sowie zugleich eine elektrisch leitende Verbindung zwischen der Platine und dem wenigstens einen Magnetventil zur Verfügung, welche eine Steuerung des wenigstens einen Magnetventils durch auf der Platine angeordnete elektrische und elektronische Komponenten erlaubt, zu welchen dann auch der wenigstens eine Inertialsensor zählt. Vorzugsweise sind in den elektrischen und elektronischen Komponenten der Platine Routinen einer Fahrdynamik- oder Fahrstabilitätsregelung implementiert, durch welche dann das wenigstens eine Magnetventil gesteuert oder geregelt wird, um einzelne Räder gezielt abbremsen zu können.

Gemäß einer fortbildenden Maßnahme des zweiten Aspekts beinhaltet der wenigstens eine Bewegungsfreiheitsgrad einen translatorischen und/oder einen rotatorischen Bewegungsfreiheitsgrad.

Gemäß einer weiteren fortbildenden Maßnahme des zweiten Aspekts kann das wenigstens eine Federelement eine Schraubenfeder beinhalten, welche zwischen der Platine und dem wenigstens einen Magnetventil eingespannt gelagert ist.

Weiterhin kann die wenigstens eine Platine an einer ins Innere des Druckregelmoduls weisenden Fläche eines Deckels eines Modulgehäuses des Druckregelmoduls gekontert sein, beispielsweise durch die Kraft des wenigstens einen Federelements reibschlüssig an der ins Innere weisenden Fläche des Deckels, und beim Aufsetzen des Deckels auf das Modulgehäuse des Druckregelmoduls das wenigstens eine Federelement zwischen der Platine und dem wenigstens einen Magnetventil vorgespannt werden. Darüber hinaus kann das wenigstens eine Federelement an der Platine und/oder an dem wenigstens einen Magnetventil durch Zentriermittel wie beispielsweise eines in das Innere der Schraubenfeder ragenden Vorsprungs zentriert sein. Dann ist das wenigstens eine Federelement in dem Modulgehäuse definiert geführt bzw. festgelegt, erlaubt aber beispielsweise im Falle einer Schraubenfeder in Maßen eine "gefederte" Bewegung zwischen der den wenigstens einen Inertialsensor tragenden Platine und dem wenigstens einen Magnetventil entlang der Längsachse der Schraubenfeder (Translationsfreiheitsgrad), was in einer nachgiebigeren Lagerung der Platine samt Inertialsensor und damit in einer Schwingungsentkopplung zwischen Platine und Magnetventil resultiert. Denn die Schwingungen, welche von Schaltvorgängen von Magnetventilen herrühren sind meist höherfrequent verglichen mit der niedrigeren Eigenfrequenz der durch das wenigstens eine Federelement "weich" gelagerten Platine samt Inertialsensor, so dass eine Übertragung von Körperschall von dem Magnetventil auf die Platine samt Inertialsensor behindert wird.

Gemäß dem dritten Aspekt der Erfindung ist vorgesehen, dass
g3) wenigstens ein Magnetventil der ersten elektromagnetischen Ventileinrichtung durch ein Kippankerventil mit einem schwenkbar ausgebildeten Kippanker gebildet wird.

Solche Kippankerventile mit schwenkbar ausgebildetem Kippanker verursachen im Betrieb eine geringere Schwingungsanregung als übliche Magnetventile mit translatorisch hin- und herbewegtem Anker.

Insbesondere kann das Kippankerventil gemäß einer Weiterbildung des dritten Aspekts wenigstens Folgendes umfassen:
a) eine Halbschale,
b) ein Deckelelement, welches die Halbschale fluiddicht abdeckt, um einen Ventilraum zu bilden, wobei das Deckelelement zumindest eine Steueröffnung und einen Durchlass zum Leiten eines Fluids durch den Ventilraum aufweist,
c) einen magnetisch leitenden Kippanker mit zumindest einem Dichtelement, wobei der Kippanker im Ventilraum zwischen einer Öffnungsposition und einer Schließposition bewegbar angeordnet ist, wobei das Dichtelement die Steueröffnung in der Schließposition fluiddicht verschließt und in der Öffnungsposition freigibt, und
d) eine Spuleneinrichtung, die an einem dem Deckelelement gegenüberliegenden Boden der Halbschale außerhalb des Ventilraums angeordnet und ausgebildet ist, um den Kippanker zwischen der Öffnungsposition und der Schließposition zu bewegen, wobei
e) die Spuleneinrichtung einen magnetisch leitenden Spulenkern und zumindest eine um den Spulenkern gewickelte Spule aufweist, wobei der Spulenkern in Längsrichtung im Wesentlichen parallel zum Boden angeordnet ist.

Gemäß einer Fortbildung dieses dritten Aspekts kann ein Dämpferelement, das an einer dem Boden zugewandten Seite des Kippankers oder an einer dem Kippanker zugewandten Seite des Bodens angeordnet sein, um beim Bewegen des Kippankers in die Öffnungsposition eine mechanische Schwingung des Kippankers, insbesondere eine Vibration und/oder eine Erschütterung und/oder einen Stoß, zu dämpfen, wobei das Dämpferelement insbesondere unter Verwendung eines Klebematerials an dem Kippanker oder dem Boden befestigt ist. Das Dämpferelement sorgt dann für eine noch besser gedämpfte Bewegung des Kippankers.

Gemäß einer Weiterbildung des ersten, zweiten und/oder dritten Aspekts der Erfindung kann das Druckregelmodul durch ein zentrales zweikanaliges elektro-pneumatisches Druckregelmodul für die elektro-pneumatische Betriebsbremseinrichtung des Fahrzeugs gebildet werden, mit wenigstens zwei in Bezug auf einen Bremsdruck elektrisch regelbaren Druckregelkanälen, von welchen ein elektrisch regelbarer Druckregelkanal der erste Druckregelkanal und von welchen ein weiterer elektrisch regelbarer Druckregelkanal ein zweiter elektrisch regelbarer Druckregelkanal ist, wobei
a) für die elektrisch regelbaren Druckregelkanäle auf der Basis der von dem wenigstens einen Druckluftvorrat stammenden Arbeitsluft abhängig von dem elektrischen Bremsanforderungssignal des elektrischen Kanals des Fußbremsventils jeweils ein geregelter Betriebsbremsdruck für den wenigstens einen Betriebsbremszylinder der Betriebsbremseinrichtung erzeugt wird, und wobei
b) der zweite Druckregelkanal einen zweiten geregelten Betriebsbremsdruck in Betriebsbremszylindern an wenigstens einer zweiten Achse erzeugt, und wobei
c) das Druckregelmodul weiterhin wenigstens Folgendes aufweist: Wenigstens den ersten elektrischen Kommunikationsanschluss zum Einsteuern wenigstens von einem einen zweiten Betriebsbrems-Solldruck für den zweiten Druckregelkanal repräsentierenden Signal, welches auf der Basis des elektrischen Bremsanforderungssignals des elektrischen Kanals des Fußbremsventils der elektro-pneumatischen Betriebsbremseinrichtung gebildet wird, wenigstens einen zweiten Arbeitsanschluss des zweiten Druckregelkanals zum Anschließen wenigstens eines Betriebsbremszylinders der wenigstens einen zweiten Achse, eine zweite Entlüftung für den zweiten Druckregelkanal, und wobei
d) in das Druckregelmodul
   d1) das elektronische Steuergerät integriert ist, welches als zentrales elektronisches Bremssteuergerät der Betriebsbremseinrichtung derart ausgebildet ist, dass es abhängig von dem an dem ersten elektrischen Kommunikationsanschluss anstehenden Signal für den zweiten Druckregelkanal ein einem zweiten Soll-Betriebsbremsdruck entsprechendes zweites elektrisches Steuersignal für eine zweite, von der ersten elektromagnetischen Ventileinrichtung unabhängige elektromagnetische Ventileinrichtung des zweiten Druckregelkanals erzeugt, und
   d2) die zweite elektro-magnetische Ventileinrichtung integriert ist, welche abhängig von dem zweiten elektrischen Steuersignal aus dem Vorratsdruck des wenigstens einen Druckluftvorrats einen zweiten Ist-Betriebsbremsdruck für den zweiten Arbeitsanschluss des zweiten Druckregelkanals moduliert, und
   d3) wenigstens ein zweiter Drucksensor integriert ist, wobei der zweite Drucksensor ein den gemessenen zweiten Ist-Betriebsbremsdruck repräsentierendes zweites Druckmesssignal in das elektronische Steuergerät zum Vergleich mit dem zweiten Soll-Betriebsbremsdruck einsteuert, wobei dann das elektronische Steuergerät weiterhin ausgebildet ist, dass es für den zweiten Druckregelkanal einen Abgleich zwischen dem zweiten Ist-Betriebsbremsdruck und dem zweiten Soll-Betriebsbremsdruck vornimmt und abhängig von diesem Abgleich die zweite elektro-magnetische Ventileinrichtung derart ansteuert, dass an dem zweiten Arbeitsanschluss der zweite Soll-Betriebsbremsdruck ansteht, wobei
e) das elektronische Steuergerät weiterhin ausgebildet ist, dass es abhängig von Ausgangssignalen des wenigstens einen Inertialsensors Stellsignale in die erste elektro-magnetische Ventileinrichtung und/oder in die zweite elektro-magnetische Ventileinrichtung einsteuert, um eine einer Fahrdynamik- oder Fahrstabilitätsregelung entsprechende Bremsung durch wenigstens einen Betriebsbremszylinder durchzuführen, und wobei
e) das elektronische Steuergerät die elektrische und elektronische Bauteile tragende Platine aufweist, wobei in den elektrischen und elektronischen Bauteilen Routinen wenigstens für die Bremsdruckregelung innerhalb des ersten und zweiten Druckregelkanals und für die Fahrdynamik- oder Fahrstabilitätsregelung implementiert sind, wobei
f) die Ausgangssignale des wenigstens einen Inertialsensors in die wenigstens einigen elektrischen und elektronischen Bauteile zur Durchführung der Fahrdynamik- oder Fahrstabilitätsregelung einsteuerbar sind.

Mit anderen Worten ist bei einem solchen Druckregelmodul zum einen das zentrale elektronische Bremssteuergerät mit den Routinen für die Bremsdruckregelung und für die Fahrdynamikregelung integriert. Wegen dieser Integration in das zentral Druckregelmodul ist bei der elektropneumatischen Betriebsbremseinrichtung gemäß der Erfindung daher kein außerhalb des zentralen Druckregelmoduls angeordnetes zentrales elektronisches Bremssteuergerät wie in der eingangs erwähnten EP 1 122 142 A1 mehr vorhanden. Vielmehr ist das zentrale elektronische Bremssteuergerät der elektro-pneumatischen Betriebsbremseinrichtung, welches neben der Bremsdruckregelung auch noch höhere Funktionen wie beispielsweise eine Bremskraftverteilung auf Vorder- und Hinterachse, eine Fahrdynamikregelung, eine Fahrstabilitätsregelung (ESP), eine Antriebsschlupfregelung (ASR), eine Überrollschutzregelung (RPS), eine Bremsschlupfregelung (ABS) sowie insbesondere auch Regelungen betreffend wenigstens teilweises autonomes Fahren betreffen kann, in das zentrale Druckregelmodul integriert.

Der Begriff "integriert" bedeutet dabei eine Einbeziehung von Hardware-Komponenten und von Software-Komponenten in das zentrale Druckregelmodul.

Zum andern sind auch an oder auf der elektrische und elektronischen Bauteile tragenden Platine des zentralen elektronischen Bremssteuergeräts, in welchen die Routinen für die Bremsdruckregelung und für die Fahrdynamikregelung implementiert sind, auch wenigstens ein Inertialsensor (z.B. Gierratensensor, Längsbeschleunigungssensor, Querbeschleunigungssensor) angeordnet, dessen Sensorsignale als Eingangssignale für die Fahrdynamikregelung herangezogen werden.

Damit stellt das wenigstens 2-kanalige, weil wenigstens den Bremsdruck im ersten Druckregelkreis (z.B. Vorderachse) und den Bremsdruck im zweiten Druckregelkreis (z.B. Hinterachse) des Fahrzeugs regelnde zentrale Druckregelmodul ein "Zentralmodul" dar, weil es zumindest für die wenigstens eine Vorderachse und die wenigstens eine Hinterachse sämtliche Bremsfunktionen ausführt und damit einen zentralen integrierten Baustein einer elektropneumatischen Betriebsbremseinrichtung eines 4x2 oder 4x4-Fahrzeugs bildet.

Für die Basisfunktion "Betriebsbremsen unter Regelung des Bremsdrucks" in den beiden Druckregelkreisen sind daher bei der elektropneumatischen Betriebsbremseinrichtung über ein solches zentrales Druckregelmodul lediglich noch das Fußbremsventil mit dem elektrischen Kanal (elektrischer Bremswertgeber) zur Erzeugung des betätigungsabhängig gebildeten elektrischen Bremsanforderungssignals, die Betriebsbremszylinder an der Vorder- und Hinterachse sowie der wenigstens eine Druckluftvorrat zu ergänzen. Optional können auch noch zwei pneumatische Back-up-Betriebsbremskreise für die Vorder- und Hinterachse vorgesehen sein.

Folglich sind dann wesentlich weniger elektrische und pneumatische Leitungen zwischen Komponenten der elektropneumatischen Betriebsbremseinrichtung zu ziehen als beim Stand der Technik. Dies spart Aufwand für pneumatische Verrohrung, Kabelverlegungen sowie für elektrische Kontaktierungen. Das zentrale Druckregelmodul kann dann bereits beim Zulieferer der Bremseinrichtung konfektioniert und getestet werden, was die Betriebssicherheit erhöht.

Besonders vorteilhaft ist auch, dass die weitaus meisten Fahrzeuge, für welche eine solche elektropneumatische Bremseinrichtung eingesetzt wird, Fahrzeuge mit der Radformel 4X2 (4 Räder, von welchen 2 Räder angetrieben sind) und Bremsdruckregelung an der ersten und zweiten Achse sind, wobei dann ein solches zentrales Druckregelmodul bzw. dessen integriertes zentrales Bremssteuergerät die Betriebsbremsfunktionen wie auch die oben erwähnten höheren Funktionen übernehmen kann.

In weiteren Ausbaustufen, in welchen dann beispielsweise wenigstens eine weitere gebremste Achse (weitere Vorder- oder Hinterachse) vorhanden ist/sind, kann dann für die betreffende zusätzliche (Vorder-, Hinter-) Achse wenigstens ein weiteres Druckregelmodul vorgesehen werden, für welches dann von dem zentralen Druckregelmodul ("Zentralmodul") und genauer von dessen integriertem zentralem elektronischem Bremssteuergerät ein spezifischer, der zusätzlichen Achse zugeordneter Bremsdrucksollwert vorgegeben wird, so dass dann aufbauend auf dem zentralen Druckregelmodul ("Zentralmodul") nach Art eines Baukastens verschiedene Ausbaustufen einer elektropneumatischen Betriebsbremseinrichtung für beispielsweise ein 4X2-oder 4x4-Fahrzeug ohne großen Aufwand möglich sind, beispielsweise aber auch für ein 6X2-, ein 6X4-, ein 6X6- oder auch ein 8X8-Fahrzeug.

Optional können zwischen dem zentralen Druckregelmodul als "Zentralmodul" und den Bremszylindern an den Rädern der ersten Achse und der zweiten Achse auch ABS-Drucksteuerventile geschaltet sein, welche auch dann eine radindividuelle Steuerung/Regelung des Bremsdrucks in diesen Bremszylindern erlauben, wenn die Radbremszylinder an den linken und rechten Rädern der ersten und zweiten Achse jeweils an einen einzigen Kanal des "Zentralmoduls" angeschlossen sind und dann der Betriebsbremsdruck lediglich achsweise geregelt werden könnte. Mittels der von dem zentralen elektronischen Bremssteuergerät gesteuerten ABS-Drucksteuerventile kann daher nicht nur eine übliche ABS-Regelung, sondern auch eine radindividuelle Anpassung/Steuerung/Regelung des Betriebsbremsdrucks in den Radbremszylindern zur Realisierung der Fahrdynamikregelung vorgenommen werden, falls diese es erfordert. Dann kann mit Hilfe des beispielsweise lediglich zweikanaligen zentralen Druckregelmoduls, welches die Betriebsbremsdrücke beispielsweise für Vorder- und Hinterachse getrennt regelt, zusätzlich radindividuelle Betriebsbremsdrücke erzeugt werden.

Ebenso optional können zwischen dem weiteren Druckregelmodul für die weitere Achse und den Bremszylindern an den Rädern der weiteren Achse ABS-Drucksteuerventile geschaltet sein, welche auch dann eine radindividuelle Steuerung/Regelung des Bremsdrucks in diesen Radbremszylindern erlauben, wenn die Radbremszylinder an den linken und rechten Rädern der weiteren Achse an einen einzigen Druckregelkanal des weiteren Druckregelmoduls angeschlossen sind und dann der Betriebsbremsdruck eigentlich nur achsweise geregelt werden könnte.

Die oben beschriebenen optionalen Maßnahmen erweitern die Ausbaumöglichkeiten einer auf dem zentralen Druckregelmodul basierenden elektropneumatische Betriebsbremseinrichtung als "modularer Baukasten".

Gemäß einer Weiterbildung des zentralen Druckregelmoduls kann die elektrische Kontaktierungsvorrichtung nach dem des zweiten Aspekt der Erfindung (auch) zum federbaren elektrischen Kontaktieren der Platine mit wenigstens einem Magnetventil der zweiten elektromagnetischen Ventileinrichtung vorgesehen sein.

Gemäß einer weiteren Weiterbildung des zentralen Druckregelmoduls kann wenigstens ein Magnetventil der zweiten elektromagnetischen Ventileinrichtung auch durch ein Kippankerventil mit einem schwenkbar ausgebildeten Kippanker nach dem dritten Aspekt der Erfindung gebildet werden.

Insbesondere bei dem zentralen Druckregelmodul oder auch bei einem beliebigen 2-kanaligen Druckregelmodul (zwei Druckregelkanäle) können zur Ausbildung von pneumatisch kreisgetrennten Druckregelkanälen für den ersten Druckregelkanal ein eigener erster Vorratsdruckanschluss und für den zweiten Druckregelkanal ein eigener, in Bezug auf den ersten Vorratsdruckanschluss separater zweiter Vorratsdruckanschluss vorgesehen ist, wobei an den ersten Vorratsdruckanschluss wenigstens ein erster Druckluftvorrat und an den zweiten Vorratsdruckanschluss wenigstens ein in Bezug auf den ersten Druckluftvorrat separater zweiter Druckluftvorrat anschließbar ist, wobei die pneumatischen Strömungswege des ersten Druckregelkanals ausgehend von dem ersten Vorratsdruckanschluss bis zu dem ersten Arbeitsanschluss von den pneumatischen Strömungswegen des zweiten Druckregelkanals ausgehend von dem zweiten Vorratsdruckanschluss bis zu dem zweiten Arbeitsanschluss pneumatisch getrennt ausgebildet sind.

In diesem Fall sind daher pneumatisch vollständig kreisgetrennte Druckregelkanäle ausgehend von dem jeweiligen Druckluftvorrat bis zu den zugeordneten Betriebsbremszylindern mit jeweils eigener Vorratsluftversorgung vorhanden, so dass der Ausfall der einem Druckregelkanal zugeordneten Vorratsluft nicht zu einem Funktionsausfall des gesamten Druckregelmoduls führen kann, da die weiteren Druckregelkanäle aufgrund ihrer getrennten Versorgung mit Vorratsluft weiterhin funktionsfähig bleiben. Nicht zuletzt ist außer den ohnehin den Druckregelkanälen zugeordneten Druckluftvorräten kein zusätzlicher Druckluftvorrat notwendig.

Dies ist insbesondere dann von Vorteil, wenn ein Druckregelmodul zwei pneumatisch getrennte Druckregelkanäle aufweist, von welchen ein Druckregelkanal einer Achse, hier beispielsweise einer Vorderachse und ein Druckregelkanal einer weiteren Achse, hier beispielsweise einer Hinterachse zugeordnet ist. Solche zweiachsigen Fahrzeuge mit vier gebremsten Rädern bilden insbesondere im Nutzfahrzeugbereich die große Mehrzahl. Dann kann bei einem Ausfall eines Druckregelkanals und damit der Bremsen einer Achse immer noch mit den Radbremsen an der anderen Achse gebremst werden.

Bevorzugt ist deshalb bei dem Druckregelmodul ein erster Arbeitsanschluss zum Anschluss wenigstens eines Betriebsbremszylinders der ersten Achse und wenigstens ein zweiter Arbeitsanschluss zum Anschluss wenigstens eines Betriebsbremszylinders wenigstens einer zweiten Achse des Fahrzeugs vorgesehen. Dabei kann beispielsweise ein pneumatisch kreisgetrennter erster Druckregelkanal wenigstens einer Vorderachse und ein pneumatisch kreisgetrennter zweiter Druckregelkanal wenigstens einer Hinterachse zugeordnet sein.

Insbesondere bei dem zentralen Druckregelmodul oder auch bei einem beliebigen 2-kanaligen Druckregelmodul können ein erster Back-up-Anschluss eines ersten pneumatischer Back-up-Kreises und ein zweiter Back-up-Anschluss eines zweiten pneumatischen Back-up-Kreises vorgesehen sein, wobei in den ersten Back-up-Anschluss ein erster, von dem ersten Druckluftvorrat abgeleiteter und von einem ersten pneumatischen Kanal des Fußbremsventils ausgesteuerter Back-up-Druck und in den zweiten zweiter Back-up-Anschluss ein zweiter, von dem zweiten Druckluftvorrat abgeleiteter und von einem zweiten pneumatischen Kanal des Fußbremsventils ausgesteuerter Back-up-Druck einsteuerbar sind, wobei mit Hilfe des ersten Back-up-Kreises und des zweiten Back-up-Kreises bei einem Ausfall oder einer Störung der kreisgetrennt regelbaren elektrischen Druckregelkanäle die Bremsdrücke an den Arbeitsanschlüssen gebildet werden.

Insbesondere bei dem zentralen Druckregelmodul oder auch bei einem beliebigen 2-kanaligen Druckregelmodul können ein erster pneumatischer Backup-Strömungsweg des ersten Backup-Kreises ausgehend von dem ersten Back-up-Anschluss bis zu dem ersten Arbeitsanschluss in Bezug auf einen zweiten pneumatischen Backup-Strömungsweg des zweiten Backup-Kreises ausgehend von dem zweiten Back-up-Anschluss bis zu dem zweiten Arbeitsanschluss pneumatisch getrennt ausgebildet sein.

Insbesondere bei dem zentralen Druckregelmodul oder auch bei einem beliebigen 2-kanaligen Druckregelmodul können in den ersten pneumatischen Backup-Strömungsweg ein erstes elektropneumatisches Back-up-Ventil der ersten elektromagnetischen Ventileinrichtung und in den zweiten pneumatischen Backup-Strömungsweg ein zweites elektropneumatisches Back-up-Ventil der zweiten elektromagnetischen Ventileinrichtung geschaltet sein, wobei die elektropneumatischen Back-up-Ventile ausgebildet und von dem zentralen elektronischen Bremssteuergerät angesteuert sind, dass sie bei intakten elektrischen Druckregelkanälen den ersten und zweiten Backup-Strömungsweg sperren und bei dem Fehler oder der Störung der elektrischen Druckregelkanäle den ersten und zweiten Backup-Strömungsweg durchschalten, um die Funktionssicherheit der elektropneumatischen Betriebsbremseinrichtung noch weiter zu erhöhen.

Insbesondere kann die Fahrdynamik- oder Fahrstabilitätsregelung wenigstens eine der folgenden Regelungen beinhalten: Eine Fahrstabilitätsregelung (ESP), eine Bremsschlupfregelung (ABS), eine Antriebsschlupfregelung (ASR), eine Überrollschutzregelung (RPS), eine Regelung zum wenigstens teilautonomen Fahren.

Insbesondere kann das in das zentrale Druckregelmodul integrierte zentrale elektronische Bremssteuergerät der elektro-pneumatischen Betriebsbremseinrichtung neben der Bremsdruckregelung auch noch höhere Funktionen wie beispielsweise eine Bremskraftverteilung auf Vorder- und Hinterachse, die Fahrdynamik- oder Fahrstabilitätsregelung (ESP), eine Antriebsschlupfregelung (ASR), eine Überrollschutzregelung (RPS), eine Bremsschlupfregelung (ABS) sowie insbesondere auch Regelungen betreffend wenigstens teilweises autonomes Fahren steuern/regeln bzw. ausführen. Der Begriff "integriert" bedeutet dabei eine Einbeziehung von Hardware-Komponenten und von Software-Komponenten in das zentrale Druckregelmodul.

Gemäß einer Weiterbildung kann das zentrale Druckregelmodul wenigstens einen zweiten elektrischen Spannungsversorgungsanschluss zur elektrischen Spannungsversorgung wenigstens eines weiteren Druckregelmoduls und wenigstens einen zweiten Kommunikationsanschluss zur Kommunikation mit dem wenigstens einen weiteren Druckregelmodul aufweisen, wobei
a) das wenigstens eine weitere Druckregelmodul den Bremsdruck in angeschlossenen Betriebsbremszylindern wenigstens einer weiteren Achse selbständig regelt, und wobei
b) das zentrale elektronische Bremssteuergerät der Betriebsbremseinrichtung abhängig von den am ersten Kommunikationsanschluss anstehenden elektrischen Bremsanforderungssignalen in den zweiten Kommunikationsanschluss wenigstens ein einem Soll-Bremsdruck für die wenigstens eine weitere Achse entsprechendes drittes elektrisches Steuersignal für das wenigstens eine weitere Druckregelmodul einsteuert, damit das weitere Druckregelmodul den Bremsdruck in wenigstens einem dort angeschlossenen Betriebsbremszylinder einregelt.

Das wenigstens eine weitere Druckregelmodul kann dabei eines der folgenden Druckregelmodule sein: Ein 1-Kanal-Druckregelmodul, welches an seitenverschiedenen Rädern wenigstens einer Achse denselben Bremsdruck einregelt, ein 2-Kanal-Druckregelmodul, welches an seitenverschiedenen Rädern wenigstens einer Achse einen seitenindividuellen Bremsdruck einregelt.

In Ausbaustufen einer elektropneumatischen Betriebsbremseinrichtung, in welchen dann beispielsweise wenigstens eine weitere gebremste Achse (weitere Vorder- oder Hinterachse) vorhanden ist/sind, kann dann für die betreffende zusätzliche (Vorder-, Hinter-) Achse wenigstens ein solches weiteres Druckregelmodul vorgesehen werden, für welches dann von dem zentralen Druckregelmodul ("Zentralmodul") und genauer von dessen integriertem zentralem elektronischem Bremssteuergerät ein spezifischer, der zusätzlichen Achse zugeordneter Bremsdrucksollwert vorgegeben wird, so dass dann aufbauend auf dem zentralen Druckregelmodul ("Zentralmodul") nach Art eines Baukastens verschiedene Ausbaustufen einer elektropneumatischen Betriebsbremseinrichtung auch für Fahrzeuge mit mehr als zwei Achsen ohne großen Aufwand möglich sind.

Gemäß einer Weiterbildung kann das Druckregelmodul wenigstens einen dritten elektrischen Spannungsversorgungsanschluss zur Spannungsversorgung wenigstens eines Anhängersteuermoduls und wenigstens einen dritten Kommunikationsanschluss zur Kommunikation mit dem Anhängersteuermodul aufweisen, wobei
a) das Anhängersteuermodul den Bremsdruck in Betriebsbremszylindern eines Anhängers mit Hilfe einer integrierten elektronischen Anhängerbremssteuerelektronik regelt, und wobei
b) das zentrale elektronische Bremssteuergerät der Betriebsbremseinrichtung abhängig von den am ersten elektrischen Kommunikationsanschluss anstehenden elektrischen Bremsanforderungssignalen in den dritten Kommunikationsanschluss ein einem Soll-Bremsdruck entsprechendes viertes elektrisches Steuersignal für das Anhängersteuermodul einsteuert, um den Bremsdruck in an das Anhängersteuermodul angeschlossenen Betriebsbremszylindern des Anhängers zu regeln.

Dies betrifft den Fall, dass das Anhängersteuermodul "Intelligenz" in Form der Anhängerbremssteuerelektronik aufweist, durch welche die Regelung auf den Bremsdrucksollwert für den Anhänger erfolgt.

Für den Fall, dass das Anhängersteuermodul keine "Intelligenz" in Form einer Anhängerbremssteuerelektronik aufweist, kann das zentrale Druckregelmodul beispielsweise wenigstens einen Steueranschluss für Magnetventile eines Anhängersteuermoduls und wenigstens einen Sensoranschluss für wenigstens einen Drucksensor des Anhängersteuermoduls aufweisen, wobei dann das zentrale elektronische Bremssteuergerät des zentralen Druckregelmoduls ein viertes elektrisches Steuersignal in den Steueranschluss für die Magnetventile des Anhängersteuermoduls einsteuert, um den Bremsdruck in Betriebsbremszylindern eines Anhängers auf einen Sollbremsdruck für die Betriebsbremszylinder des Anhängers zu regeln. Andererseits empfängt das zentrale elektronische Bremssteuergerät von dem wenigstens einen Drucksensor des Anhängersteuermoduls ein den durch die Ansteuerung der Magnetventile erzeugten Ist-Bremsdruck in den Betriebsbremszylindern des Anhängers repräsentierendes Signal und führt in diesem Fall die Bremsdruckregelung auf den Sollbremsdruck aus.

Auch kann das zentrale Druckregelmodul Endstufen für ABS-Drucksteuerventile aufweisen, welche vorgesehen sind, um zwischen den ersten Arbeitsanschluss der ersten Achse und die Betriebsbremszylinder der ersten Achse und zwischen den zweiten Arbeitsanschluss der zweiten Achse und die Betriebsbremszylinder der zweiten Achse geschaltet zu werden, wobei in dem elektronischen Steuergerät Routinen implementiert sind, durch welche Steuersignale für die ABS-Drucksteuerventile ausgesteuert werden, durch welche mit Hilfe der ABS-Drucksteuerventile auf der Basis der in den Druckregelkanälen der ersten Achse und der zweiten Achse achsweise geregelten Betriebsbremsdrücke jeweils radindividuelle Betriebsbremsdrücke an der ersten Achse und an der zweiten Achse insbesondere zur Durchführung einer Fahrdynamik- oder Fahrstabilitätsregelung erzeugt werden.

Dann kann der Betriebsbremsdruck in einem Radbremszylinder eines gebremsten Rades der ersten Achse und/oder der zweiten Achse durch ein von dem zentralen elektronischen Bremssteuergerät gesteuertes ABS-Drucksteuerventil angepasst/gesteuert oder geregelt werden, um eine radindividuelle Betriebsbremsung des betreffenden Rades durchzuführen, auch wenn der Betriebsbremsdruck in Radbremsen seitenverschiedener Räder einer Achse von einem gemeinsamen Druckregelkanal geregelt wird.

Das zentrale elektronische Bremssteuergerät in dem zentralen Druckregelmodul beinhaltet dann beispielsweise entsprechende Routinen, welche eine radindividuelle Einstellung/Steuerung/Regelung des Bremsdrucks an seitenverschiedenen Rädern einer durch den betreffenden Druckregelkanal eigentlich einheitlich bremsdruckgeregelten Achse ermöglichen. Ein solcher radindividueller Bremsdruck an wenigstens einem gebremsten Rad der ersten Achse und/oder der zweiten Achse wird dann durch das zentrale elektronische Bremssteuergerät des zentralen Druckregelmoduls zur Durchführung einer Steuerung oder Regelung eingestellt, für welche eine solcher radindividueller Bremsdruck notwendig bzw. sinnvoll ist, wie beispielsweise für eine Bremsschlupfregelung (ABS), eine Antriebsschlupfregelung (ASR), eine Fahrdynamik- oder Fahrstabilitätsregelung (ESP), eine Überrollschutzregelung (RPS) und/oder für eine Regelung zum wenigstens teilautonomen Fahren des Fahrzeugs.

Die erste elektro-magnetische Ventileinrichtung und die zweite elektro-magnetische Ventileinrichtung in dem Druckregelmodul können auch jeweils eine von einer elektromagnetischen Einlass-/Auslassventilkombination pneumatisch gesteuerte Relaisventileinrichtung aufweisen, wobei die Relaisventileinrichtungen ausgangsseitig mit den ersten und zweiten Arbeitsanschlüssen und die elektromagnetischen Einlass-/Auslassventilkombinationen von dem elektronischen Steuergerät gesteuert sind.

Die Einlass-/Auslassventilkombination kann beispielsweise wenigstens ein 2/2-Wege-Magnetventil und/oder wenigstens ein 3/2-Wege-Magnetventil beinhalten und die Relaisventileinrichtung wenigstens ein Relaisventil mit integriertem Doppelsitzventil.

Bevorzugt kann das zentrale Druckregelmodul auch Eingänge für Raddrehzahlsensoren der Räder des Fahrzeugs und/oder für Bremsen-Verschleißsensoren aufweisen, um beispielsweise auf der Basis der Signale von Raddrehzahlsensoren beispielsweise eine Fahrdynamikregelung oder Fahrstabilitätsregelung (ESP), eine Antriebsschlupfregelung (ASR) oder eine Bremsschlupfregelung (ABS) mittels des elektronischen Steuergeräts durchzuführen.

Der Inertialsensor kann wenigstens einen der folgenden Sensoren umfassen: Einen Beschleunigungssensor (z.B. Längsbeschleunigungssensor, Querbeschleunigungssensor), welcher die Beschleunigung in einer Achse, in zwei oder in drei Achsen (x-, y-, z-Richtung) misst und/oder einen Drehratensensor.

Auch kann das Druckregelmodul wenigstens einen Fahrzeugdatenbusanschluss zum Anschluss an einen Fahrzeugdatenbus aufweisen. Dann ist eine Kommunikation des an den Fahrzeugdatenbusanschluss angeschlossenen elektronischen Steuergeräts des Druckregelmoduls mit anderen Steuergeräten möglich, welches dann beispielsweise auf dem Fahrzeugdatenbus vorhandene Informationen wie beispielsweise spezifische Fahrzeugparameter und/oder Antriebsmaschinenparameter und/oder Fahrzustandsdaten abfragen kann oder welches Steuersignale von anderen Steuergeräten erhält, wie beispielsweis einem Steuergerät mit Routinen zum wenigstens teilautonomen Fahren, um beispielsweise unabhängig vom Fahrer automatische Bremsungen mit Hilfe der elektropneumatischen Betriebsbremseinrichtung vornehmen zu können.

Die Erfindung betrifft auch eine elektro-pneumatische Betriebsbremseinrichtung eines Fahrzeugs, insbesondere mit wenigstens einem elektrisch regelbaren Druckregelkanal beinhaltend wenigstens ein oben beschriebenes Druckregelmodul.

Bei einer solchen Betriebsbremseinrichtung kann an den wenigstens einen ersten Kommunikationsanschluss des Druckregelmoduls der elektrische Kanal des Fußbremsventils oder aber auch ein anderes Druckregelmodul angeschlossen sein, insbesondere mittels eines Datenbusses oder wenigstens einer analogen Signalleitung.

Weiterhin kann bei einer Weiterbildung der Betriebsbremseinrichtung an den wenigstens einen ersten Kommunikationsanschluss des Druckregelmoduls ein Steuergerät eines Systems zum wenigstens teilautonomen Fahren angeschlossen sein, welches über den wenigstens einen ersten Kommunikationsanschluss Bremsanforderungssignale in das Druckregelmodul einsteuert, beispielsweise über einen Datenbus.

Bevorzugt kann bei der Betriebsbremseinrichtung an einen zweiten Kommunikationsanschluss des Druckregelmoduls beispielsweise durch einen Datenbus oder durch wenigstens eine analoge Signalleitung wenigstens ein weiteres Druckregelmodul, insbesondere ein weiteres Druckregelmodul wie oben beschrieben, angeschlossen sein, wobei das wenigstens eine weitere Druckregelmodul eines der folgenden Druckregelmodule ist: Ein 1-Kanal-Druckregelmodul, welches an seitenverschiedenen Rädern wenigstens einer Achse denselben Bremsdruck einregelt, ein 2-Kanal-Druckregelmodul, welches an seitenverschiedenen Rädern wenigstens einer Achse einen seitenindividuellen Bremsdruck einregelt.

Dabei kann das wenigstens eine weitere Druckregelmodul insbesondere den Bremsdruck in angeschlossenen Betriebsbremszylindern wenigstens einer weiteren Achse selbständig regeln, wobei das elektronische Steuergerät des insbesondere zentralen Druckregelmoduls abhängig von dem am ersten Kommunikationsanschluss anstehenden Signal in den zweiten Kommunikationsanschluss wenigstens ein dem Soll-Bremsdruck für die wenigstens eine weitere Achse entsprechendes drittes elektrisches Steuersignal für das wenigstens eine weitere Druckregelmodul einsteuert, damit das weitere Druckregelmodul den Bremsdruck in den angeschlossenen Betriebsbremszylindern einregelt.

Gemäß einer bevorzugten Maßnahme bei der Betriebsbremseinrichtung kann an einen dritten Kommunikationsanschluss des Druckregelmoduls beispielsweise durch einen Datenbus oder durch wenigstens eine analoge Signalleitung ein den Bremsdruck in Betriebsbremszylindern eines Anhängers mit Hilfe einer elektronischen integrierten Anhängersteuerelektronik regelndes Anhängersteuermodul angeschlossen sein.

Zur Ausbildung von pneumatisch kreisgetrennten Druckregelkanälen kann bei einer Ausführungsform der Betriebsbremseinrichtung an den ersten Vorratsdruckanschluss des Druckregelmoduls wenigstens ein erster Druckluftvorrat und an den zweiten Vorratsdruckanschluss des Druckregelmoduls wenigstens ein in Bezug auf den ersten Druckluftvorrat separater zweiter Druckluftvorrat angeschlossen sein.

Gemäß einer Weiterbildung kann bei der Betriebsbremseinrichtung das Druckregelmodul Endstufen für ABS-Drucksteuerventile aufweisen, welche zwischen den ersten Arbeitsanschluss der ersten Achse und die Betriebsbremszylinder der ersten Achse und zwischen den zweiten Arbeitsanschluss der zweiten Achse und die Betriebsbremszylinder der zweiten Achse geschaltet sind, wobei in dem elektronischen Steuergerät des Druckregelmoduls dann bevorzugt Routinen implementiert sind, durch welche Steuersignale für die ABS-Drucksteuerventile ausgesteuert werden, durch welche mit Hilfe der ABS-Drucksteuerventile auf der Basis der in den Druckregelkanälen der ersten Achse und der zweiten Achse lediglich achsweise geregelten Betriebsbremsdrücke jeweils radindividuelle Betriebsbremsdrücke an der ersten Achse und an der zweiten Achse insbesondere zur Durchführung einer ABS-/ASR-Regelung und/oder der Fahrdynamik- oder Fahrstabilitätsregelung erzeugt werden.

Dann kann der Betriebsbremsdruck in einem Radbremszylinder eines gebremsten Rades der ersten Achse und/oder der zweiten Achse durch ein von dem zentralen elektronischen Bremssteuergerät gesteuertes ABS-Drucksteuerventil angepasst/gesteuert oder geregelt werden, um eine radindividuelle Betriebsbremsung des betreffenden Rades durchzuführen, auch wenn der Betriebsbremsdruck in Radbremsen seitenverschiedener Räder einer Achse von einem gemeinsamen Druckregelkanal geregelt wird. Das elektronische Steuergerät in dem Druckregelmodul beinhaltet dann beispielsweise entsprechende Routinen, welche eine radindividuelle Einstellung/Steuerung/Regelung des Bremsdrucks an seitenverschiedenen Rädern einer durch den betreffenden Druckregelkanal eigentlich einheitlich bremsdruckgeregelten Achse ermöglichen. Ein solcher radindividueller Bremsdruck an wenigstens einem gebremsten Rad der ersten Achse und/oder der zweiten Achse wird dann durch das elektronische Steuergerät des Druckregelmoduls zur Durchführung einer Steuerung oder Regelung eingestellt, für welche eine solcher radindividueller Bremsdruck notwendig bzw. sinnvoll ist, wie beispielsweise für eine Bremsschlupfregelung (ABS), eine Antriebsschlupfregelung (ASR), eine Fahrdynamik- oder Fahrstabilitätsregelung (ESP), eine Überrollschutzregelung (RPS) und/oder für eine Regelung zum wenigstens teilautonomen Fahren des Fahrzeugs.

Auch kann bei der Betriebsbremseinrichtung an einen ersten Arbeitsanschluss des Druckregelmoduls wenigstens ein Betriebsbremszylinder wenigstens einer ersten Achse, und an einen zweiten Arbeitsanschluss des Druckregelmoduls wenigstens ein Betriebsbremszylinder wenigstens einer zweiten Achse angeschlossen sein.

Die Erfindung betrifft auch ein Fahrzeug, insbesondere ein Nutzfahrzeug mit einer oben beschriebenen elektro-pneumatischen Betriebsbremseinrichtung.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: einen schematischen Schaltplan einer elektro-pneumatischen Betriebsbremseinrichtung eines Nutzfahrzeugs mit einem zentralen Druckregelmodul gemäß einer bevorzugten Ausführungsform der Erfindung;
- Fig.2: eine schematische Querschnittsansicht des zentralen Druckregelmoduls von Fig.1 in Explosionsdarstellung;
- Fig.3A und Fig.3B: stark schematisierte Ansichten von Systemarchitekturen von elektro-pneumatischen Betriebsbremseinrichtungen beinhaltend ein zentrales Druckregelmodul gemäß Fig.2;
- Fig.4: eine schematische Darstellung des zentralen Druckregelmoduls von Fig.1;
- Fig.5: einen schematischen Schaltplan einer elektro-pneumatischen Betriebsbremseinrichtung eines Nutzfahrzeugs mit einem zentralen Druckregelmodul gemäß einer weiteren Ausführungsform der Erfindung für ein 6x4-Fahrzeug;
- Fig.6: einen schematischen Schaltplan einer elektro-pneumatischen Betriebsbremseinrichtung eines Nutzfahrzeugs mit einem zentralen Druckregelmodul gemäß einer weiteren Ausführungsform der Erfindung für ein 6x2-Fahrzeug;
- Fig.7: einen schematischen Schaltplan einer elektro-pneumatischen Betriebsbremseinrichtung eines Nutzfahrzeugs mit einem zentralen Druckregelmodul gemäß einer weiteren Ausführungsform der Erfindung für ein 6x2-Fahrzeug;
- Fig.8: einen schematischen Schaltplan einer elektro-pneumatischen Betriebsbremseinrichtung eines Nutzfahrzeugs mit einem zentralen Druckregelmodul gemäß einer weiteren Ausführungsform der Erfindung für ein 8x8-Fahrzeug;
- Fig.9: einen schematischen Schaltplan einer elektro-pneumatischen Betriebsbremseinrichtung eines Nutzfahrzeugs mit einem zentralen Druckregelmodul gemäß einer weiteren Ausführungsform der Erfindung für ein 10x10-Fahrzeug
- Fig.10: eine schematische Schnittdarstellung eines Kippankerventils, wie es als elektromagnetisches Ventil einzeln oder mehrfach in einer elektromagnetischen Ventileinrichtung des zentralen Druckregelmoduls verwendet wird;
- Fig. 11-22: Ausführungsformen von Schwingungsentkopplungsmitteln.

### Beschreibung der Ausführungsbeispiele

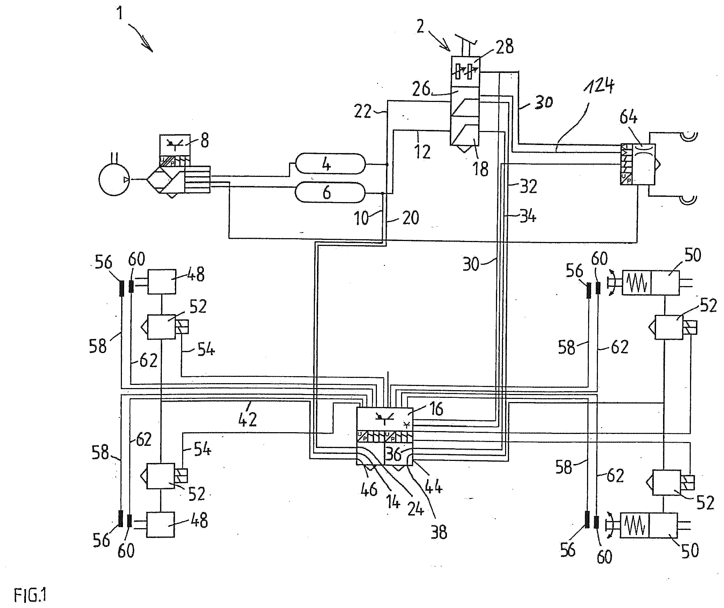

**Fig. 1** zeigt ein Schaltschema einer elektro-pneumatischen Betriebsbremseinrichtung 1 beispielsweise eines schweren Nutzfahrzeugs mit einem Fußbremswertventil oder Fußbremsmodul 2, einem ersten (Vorderachs-) Vorratsdruckbehälter 4 zur Versorgung eines ersten (Vorderachs-) Druckregelkanals 9 und einem zweiten (Hinterachs-) Vorratsdruckbehälter 6 zur Versorgung eines zweiten (Hinterachs-) Druckregelkanals 11.

Die Luftbeschaffung, Luftaufbereitung und die Absicherung ist wie gesetzlich vorgeschrieben ausgeführt durch ein hier nicht näher beschriebenes Luftaufbereitungsmodul 8.

Der zweite (Hinterachs-) Vorratsdruckbehälter 6 ist über pneumatische Versorgungsleitungen 10, 12 einerseits mit einem zweiten (Hinterachs-) Vorratsanschluss 14 eines zentralen, beispielsweise zweikanaligen Druckregelmoduls 16 sowie mit einem zweiten (Hinterachs-) Kanal 26 des Fußbremsventils 2 verbunden.

In analoger Weise ist der erste (Vorderachs-) Vorratsdruckbehälter 4 über pneumatische Versorgungsleitungen 20, 22 mit einem ersten (Vorderachs-)
Vorratsanschluss 24 des zentralen Druckregelmoduls 16 sowie mit einem ersten (Vorderachs-) Kanal 18 des Fußbremsventils 2 verbunden.

Das Fußbremsventil 2 umfasst als Bremswertgeber daher zwei pneumatische Kanäle 18, 26 mit jeweils einem Bremsventil, in welchen abhängig von einer durch den Fuß des Fahrers vorgegebenen Bremsanforderung jeweils ein pneumatischer Back-up-Druck oder Steuerdruck an den Ausgängen der beiden Kanäle 18, 26 erzeugt wird. Parallel hierzu sind in einem elektrischen Kanal 28 des Fußbremsventils 2 ein elektrischer Vorderachskanal und ein elektrischer Hinterachskanal zusammengefasst, welcher abhängig von der Bremsanforderung ein elektrisches Bremsanforderungssignal in eine vorzugsweise als Datenbus 30 ausgebildete elektrische Verbindung zwischen dem Fußbremsventil 2 und dem zentralen Druckregelmodul 16 einsteuert, welches das Bremsanforderungssignal beispielsweise aus Lastverteilungsgründen in für die Vorderachse und die Hinterachse verschiedener Weise umsetzt.

Weiterhin sind der Vorderachs-Kanal 18 und der Hinterachs-Kanal 26 des Fußbremsventils 2 jeweils über eine pneumatische Steuerleitung 32, 34 mit zugeordneten Back-up-Anschlüssen 36, 38 des zentralen Druckregelmoduls 16 verbunden. Schließlich führt jeweils eine pneumatische Bremsleitung 40, 42 von jeweils einem Arbeitsanschluss 44, 46 des zentralen Druckregelmoduls 16 zu radweisen pneumatischen Betriebsbremszylindern 48, 50 der Vorderachse bzw. der Hinterachse, wobei in diesen pneumatischen Bremsleitungen 40, 42 bevorzugt je Rad ein Drucksteuerventil 52 für den ABS-Betrieb angeordnet ist. Diese ABS-Drucksteuerventile 52 werden mittels elektrischer Steuerleitungen 54 von dem zentralen Druckregelmodul 16 angesteuert.

Drehzahlsensoren 56 melden die aktuelle Drehzahl der Räder des Zweiachsfahrzeugs über elektrische Signalleitungen 58 an das zentrale Druckregelmodul 16. Ebenso sind bevorzugt Verschleißsensoren 60 je Radbremse vorgesehen, welche abhängig vom aktuellen Bremsenverschleiß Signale über elektrische Signalleitungen 62 in das zentrale Druckregelmodul 16 einsteuern.

Nicht zuletzt ist ein an sich bekanntes Anhängersteuermodul 64 vorgesehen, in welches einerseits ein pneumatischer Steuerdruck vom Hinterachs-Kanal 26 des Fußbremsventils 2 über eine pneumatische Steuerleitung 124 und andererseits auch ein elektrisches Steuersignal vom zentralen Druckregelmodul 16 beispielsweise über den Datenbus 30 eingesteuert wird.

Die Bremszuspanneinrichtungen 50 der Hinterachse sind bevorzugt als bekannte Kombizylinder, d.h. als Kombination eines aktiven Betriebsbremszylinders und eines passiven Federspeicherbremszylinders ausgebildet. "Aktiv" bedeutet in diesem Zusammenhang, dass die Betriebsbremszylinder bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit beispielsweise in einem gemeinsamen Modulgehäuse 92 ausgeführte zentrale elektro-pneumatische Druckregelmodul 16 hat zwei getrennt regelbare Druckregelkanäle, wobei für jeden Druckregelkanal 9, 11 auf der Basis einer von einem zugeordneten Druckluftvorrat (Vorderachs-Druckluftvorrat 4 bzw. Hinterachs-Druckluftvorrat 6) stammenden Arbeitsluft abhängig von den elektrischen Bremsanforderungssignalen des elektrischen Kanals 28 des Fußbremsventils 2 ein geregelter, an den zugeordneten Arbeitsanschlüssen 44, 46 anstehender Arbeitsdruck für die Betriebsbremszylinder 48, 50 der Vorderachse bzw. der Hinterachse erzeugt werden.

Zur Ausbildung von pneumatisch kreisgetrennten Druckregelkanälen (hier: Vorderachs-Druckregelkanal 9 und Hinterachs-Druckregelkanal 11) ist jedem Druckregelkanal 9, 11 folglich ein eigener Druckluftvorrat 4, 6 sowie eine eigene Entlüftung 5, 7 zugeordnet, wobei die pneumatischen Strömungswege eines jeden Druckregelkanals 9, 11 ausgehend von dem zugeordneten Druckluftvorrat 4, 6 über die zugeordneten Arbeitsanschlüsse 44, 46 bis zu den zugeordneten Betriebsbremszylindern 48, 50 von dem pneumatischen Strömungsweg eines jeweils anderen Druckregelkanals pneumatisch getrennt ausgebildet sind. Insbesondere sind für jeden der kreisgetrennt regelbaren Druckregelkanäle (Vorderachs-Druckregelkanal 9 und Hinterachs-Druckregelkanal 11) jeweils ein separater Druckluftvorrat 4, 6 und am 2-Kanal-Druckregelmodul 16 jeweils ein separater Vorratsanschluss 14, 24 zum Anschluss des jeweils zugeordneten Druckluftvorrats 4, 6 sowie eine eigene Entlüftung 5, 7 vorgesehen.

Zur Ausbildung einer elektro-pneumatischen Betriebsbremseinrichtung mit vorrangig elektrisch betätigten Druckregelkanälen (Vorderachs-Druckregelkanal 9 und Hinterachs-Druckregelkanal 11) und einer nachrangigen pneumatischen Rückfallebene bei einem Ausfall der Elektrik ist jedem Druckregelkanal 9, 11 besonders bevorzugt ein eigener pneumatischer Back-up-Kreis zugeordnet, mit eigenem Back-up-Anschluss 36, 38 am zentralen Druckregelmodul 16 für die Einsteuerung von von dem Vorratsdruck des dem jeweiligen Druckregelkanals 9, 11 zugeordneten Druckluftvorrat 4, 6 abgeleiteten und von dem Vorderachs-Kanal 18 und dem Hinterachs-Kanal 26 des Fußbremsventils 2 gebildeten pneumatischen Back-up- oder Steuerdrücken, aus welchen bei einem Ausfall von elektrischen Komponenten des vorrangigen elektrischen Betriebsbremskreises die Bremsdrücke an den Arbeitsanschlüssen 44, 46 der Druckregelkanäle 9, 11 kanalweise gebildet werden.

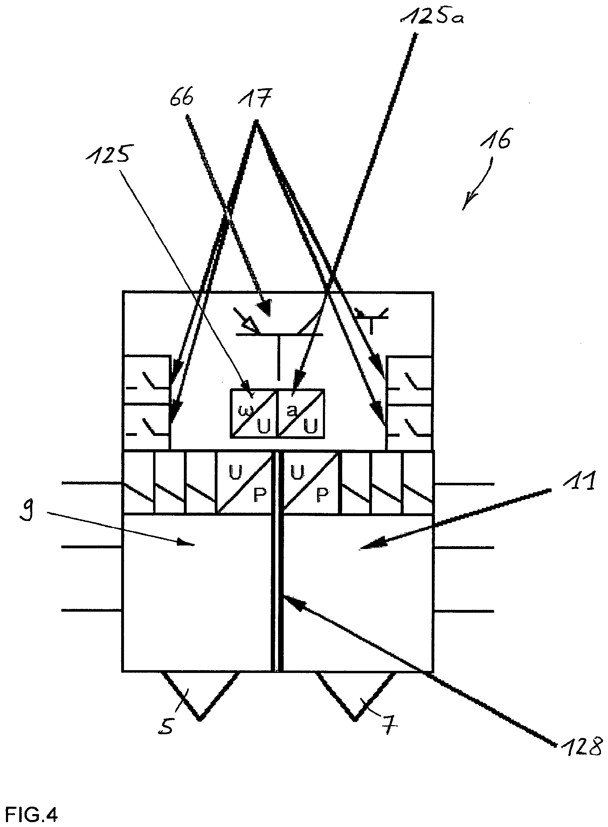

Alternativ könnte bei Betriebsbremseinrichtungen 1, bei denen das Fußbremsventil 2 lediglich einen pneumatischen Kanal aufweist und welche mit dem zentralen zweikanaligen Druckregelmodul 16 ausgerüstet werden sollen, das zentrale Druckregelmodul 16 auch nur einen einzigen Back-up-Anschluss für die Einsteuerung nur eines vom pneumatischen Kanal des Fußbremsventils 2 erzeugten pneumatischen Back-up-Drucks aufweisen, aus welchem dann bei einem Ausfall von elektrischen Komponenten mit Hilfe von integrierten Kreistrennungsmitteln separate Bremsdrücke an den Arbeitsanschlüssen 44, 46 des zentralen Druckregelmoduls 16 gebildet werden. Bei dieser Variante wirkt derselbe Back-up-Druck beispielsweise auf Relaiskolben von Relaisventilen beider Druckregelkanäle. In Ländern mit Bremsenvorschriften nach ECE R13 kann zwischen dem Back-up-Druck oder Steuerdruck des einen pneumatischen Bremskreises und dem aus dem Vorratsdruck des anderen pneumatischen Bremskreises abgeleiteten Bremsdruck eine geeignete Kreistrennung beispielsweise durch eine doppelte Kolbendichtung mit Zwischenentlüftung am Relaiskolben vorgesehen werden. Die Kreistrennung 128 wird in Fig. 4 mittels einer dicken mittigen durch das zentrale Druckregelmodul 16 hindurchgezogene Linie symbolisiert.

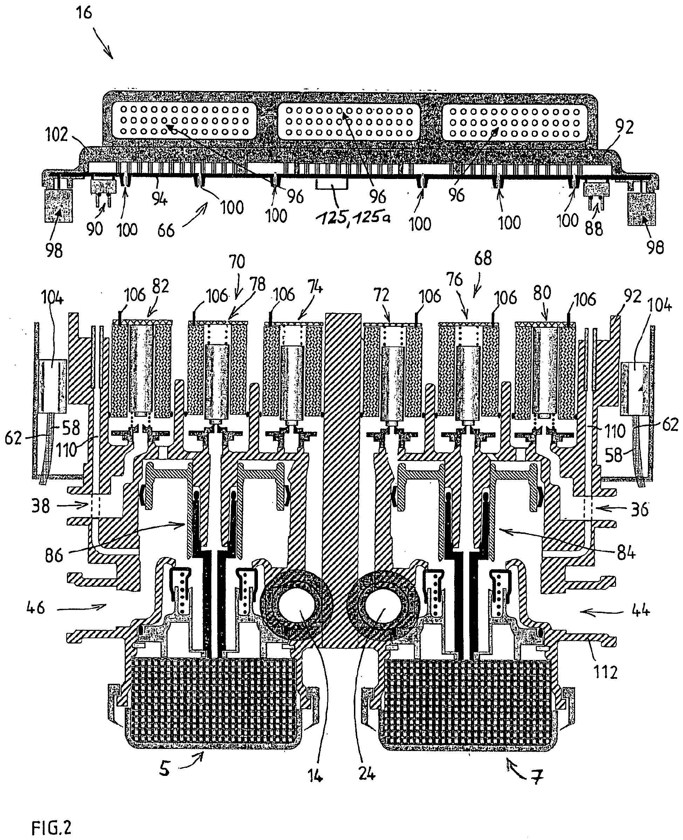

Gemäß **Fig. 2** und **Fig. 4** beinhaltet das zentrale hier zweikanalige Druckregelmodul 16 ein zentrales elektronisches Bremssteuergerät 66, welche wenigstens sämtliche für die Druckregelung der Druckregelkanäle (Vorderachs-Druckregelkanal 9 bzw. Hinterachs-Druckregelkanal 11) notwendigen Routinen durchführt und für jeden Druckregelkanal abhängig von den elektrischen Bremsanforderungssignalen des elektrischen Kanals 28 des Fußbremsventils 2 ein einem ersten Soll-Bremsdruck entsprechendes erstes elektrisches Steuersignal für den Vorderachs-Druckregelkanal 9 und ein einem zweiten Soll-Bremsdruck entsprechendes zweites elektrisches Steuersignal für den Hinterachs-Druckregelkanal 11 erzeugt. Weiterhin sind in dem zentralen Druckregelmodul 16 für jeden Druckregelkanal (Vorderachs-Druckregelkanal 9 bzw. Hinterachs-Druckregelkanal 11) eine eigene elektromagnetische Ventileinrichtung 68, 70 vorhanden, welche abhängig von den elektrischen Steuersignalen der elektronischen Steuereinrichtung 66 aus dem Vorratsdruck des zugeordneten Druckluftvorrats 4, 6 einen Ist-Arbeitsdruck für den dem jeweiligen Druckregelkanal 9, 11 zugeordneten Arbeitsdruckanschluss 44, 46 erzeugt.

Eine solche elektro-magnetbetätigte Ventileinrichtung 68, 70 beinhaltet bevorzugt jeweils ein Einlassventil 72, 74, ein Auslassventil 76, 78 sowie ein Back-up- oder Rückhalteventil 80, 82. Zur Bewältigung größerer Luftmengen können das Einlassventil 72, 74 und das Auslassventil 76, 78 auch jeweils einen Steueranschluss eines Relaisventils 84, 86 ansteuern, welches dann den Bremsdruck erzeugt. Die Arbeitsweise von solchen elektro-magnetbetätigten Ventileinrichtungen 68, 70 ist hinlänglich bekannt, beispielsweise aus der EP 0 845 397 A2 , so dass hier nicht weiter darauf eingegangen wird.

Für jeden Druckregelkanal (Vorderachs-Druckregelkanal 9 bzw. Hinterachs-Druckregelkanal 11) ist weiterhin ein eigener Drucksensor 88, 90 in dem zentralen Druckregelmodul 16 angeordnet, welcher abhängig von dem von der zugeordneten elektromagnetischen Ventileinrichtung 68, 70 ausgesteuerten Ist-Bremssdruck ein Druckmesssignal in das zentrale elektronische Bremssteuergerät 66 zum Vergleich mit dem jeweiligen Soll-Bremsdruck einsteuert, welcher für den Vorderachs-Druckregelkanal durch das erste elektrische Steuersignal und für den Hinterachs-Druckregelkanal durch das zweite elektrische Steuersignal repräsentiert wird, zur geregelten Be- und Entlüftung der an den betreffenden Druckregelkanal 9, 11 angeschlossenen Betriebsbremszylinder 48, 50. Über Entlüftungen 5, 7 (Fig. 4) werden die Arbeitsanschlüsse 44, 46 und damit die daran angeschlossenen Betriebsbremszylinder 48, 50 entlüftet. Eine Belüftung der Betriebsbremszylinder 48, 50 erfolgt indes über die Vorratsanschlüsse 14, 24.

Das gemeinsame zentrale elektronische Bremssteuergerät 66 regelt dann den Druck in den Druckregelkanälen (Vorderachs-Druckregelkanal 9 bzw. Hinterachs-Druckregelkanal 11), mithin sind sämtliche Steuerungs- und Regelungsroutinen bzw. die gesamte Steuerungselektronik der elektrischen Druckregelkanäle in dem zentralen elektronischen Bremssteuergerät 66 des zentralen Druckregelmoduls 16 integriert. Weiterhin sind auch bevorzugt Routinen eines Fahrstabilitätssystems ESP (Elektronisches Stabilitäts-Programm), eines ASR-Systems (Antriebsschlupfregelung), eines ABS-Systems (Bremssschlupfregelung) und/oder eines RSP-Systems (Roll-Over-Stability) in dem zentralen elektronischen Bremssteuergerät 66 implementiert, welches dann beispielsweise auch in eine Motorsteuerung eines Motors des Fahrzeugs bzw. in eine Lenksteuerung einer elektrischen Lenkung des Fahrzeugs eingreifen kann.

Besonders bevorzugt sind wenigstens die den Druckregelkanälen (Vorderachs-Druckregelkanal 9 bzw. Hinterachs-Druckregelkanal 11) zugeordneten elektro-magnetbetätigten Ventileinrichtungen 68, 70, die Drucksensoren 88, 90 sowie das zentrale elektronische Bremssteuergerät 66 in einem gemeinsamen Modulgehäuse 92 untergebracht.

Wie aus **Fig. 2** hervorgeht ist das zentrale Druckregelmodul 16 bevorzugt so ausgeführt, dass eine elektrische und elektronische Komponenten des zentralen elektronischen Bremssteuergeräts 66 tragende Platine 94, elektrische erste, zweite und dritte Kommunikationsanschlüsse 96 zur Verbindung der elektrischen/elektronischen Komponenten wie etwa Mikroprozessoren und elektronische Schaltungen auf der Platine 94 beispielsweise mit dem Datenbus 30, die Drucksensoren 88, 90, mit der Platine 94 verbundene elektrische Steckkontakte 98, 100 in oder an einem beispielsweise als Kopfteil ausgeführten Gehäuseteil 102 angeordnet sind, aber die elektro-magnetbetätigten Ventileinrichtungen 68, 70 mit den elektrischen Steckkontakten 98, 100 des einen Gehäuseteils 102 komplementären elektrischen Steckkontakten 104, 106 sowie mit den dortigen Arbeitsanschlüssen 44, 46 in Verbindung stehenden Druckkanälen 108, 110 in einem weiteren, hier beispielsweise unteren Gehäuseteil 112 angeordnet sind. Die beiden Gehäuseteile 102, 112 sind miteinander lösbar verbunden, wobei bei einer Verbindung der Gehäuseteile 102,112 die einander zugeordneten elektrischen Steckkontakte 98, 104 bzw. 100, 106 miteinander elektrisch sowie die Drucksensoren 88, 90 mit ihrer Druckmessseite einerseits und Mündungen der Druckkanäle 108, 110 andererseits zur Messung des an den Arbeitsdruckanschlüssen 44, 46 anstehenden Ist-Arbeitsdruck durch die Drucksensoren 88, 90 miteinander pneumatisch verbunden werden.

Die Steckkontakte 100 sind bevorzugt an der Platine 94 ausgebildet und fügen sich bei der Montage der Gehäuseteile 102, 112 automatisch mit den Steckkontakten 106, welche an den elektromagnet-betätigten Ventilen 72, 74 bzw. 76, 78 bzw. 80, 82 jeweils kopfseitig ausgebildet sind. Dadurch können diese Ventile durch das zentrale elektronische Bremssteuergerät 66 bzw. durch die elektrischen und elektronischen Komponenten wie Mikroprozessoren oder elektrische Schaltkreise auf der Platine 94 angesteuert werden. Andererseits geraten dann auch die Steckkontakte 98 und 104 miteinander in leitenden Eingriff, welche radbezogene Signale wie die Raddrehzahl und den Belagverschleiß von den Drehzahlsensoren 56 bzw. den Verschleißsensoren 60 über die Signalleitungen 58, 62 beispielsweise in das untere Gehäuseteil 112 einleiten und dann von dort über die Steckkontakte 98, 104 in die Platine 94 eingesteuert werden, damit das zentrale elektronische Bremssteuergerät 66 mit entsprechenden Daten versorgt wird, um die bevorzugt integrierten ESP-, ABS-, ASR- und RSP-Funktionen sowie eventuell noch weitere Funktionen durchführen zu können.

Alternativ könnten die Drucksensoren 88, 90 auch in dem unteren Gehäuseteil 112 untergebracht sein, in welchem auch die elektromagnetischen Ventileinrichtungen 68, 70 angeordnet sind, wobei in diesem Fall die pneumatischen Verbindungen zwischen den Arbeitsanschlüssen 44, 46 und den Drucksensoren 88, 90 bereits in dem betreffenden Gehäuseteil 112 ausgebildet sind. Dann sind allerdings zusätzlich bei der Montage der Gehäuseteile 102, 112 in Verbindung bringbare elektrische Kontakte an beiden Gehäuseteilen 102, 112 vorzusehen, damit die Drucksensoren 88, 90 über die dann geschossene elektrische Signalverbindung die den ist-Arbeitsdruck repräsentierenden Signale in das zentrale elektronische Bremssteuergerät 66 einsteuern kann.

Weiterhin weist das zentrale Druckregelmodul 16 hier nicht explizit gezeigte erste, zweite und dritte Spannungsversorgungsanschlüsse auf, wobei der erste Spannungsversorgungsanschluss zur Versorgung des zentralen Druckregelmoduls mit elektrischer Energie, der zweite Spannungsversorgungsanschluss zur Versorgung wenigstens eines weiteren Druckregelmoduls 122 mit elektrischer Energie von dem zentralen Druckregelmodul 16 aus und der dritte Spannungsversorgungsanschluss zur Versorgung des Anhängersteuermoduls 64 mit elektrischer Energie von dem zentralen Druckregelmodul 16 aus dient.

Das zentrale Druckregelmodul 16 weist einen dritten Kommunikationsanschluss 96 zur Kommunikation mit dem Anhängersteuermodul 64 auf, wobei das Anhängersteuermodul 64 den Bremsdruck in Betriebsbremszylindern eines Anhängers mit Hilfe einer integrierten elektronischen Anhängerbremssteuerelektronik regelt. Das zentrale elektronische Bremssteuergerät 66 des zentralen Druckregelmoduls 16 steuert dann abhängig von den am ersten elektrischen Kommunikationsanschluss 94 anstehenden elektrischen Bremsanforderungssignalen in den dritten Kommunikationsanschluss 94 ein einem Soll-Bremsdruck entsprechendes viertes elektrisches Steuersignal für das Anhängersteuermodul 64 ein, woraufhin das Anhängersteuermodul 64 den Soll-Bremsdruck in den an das Anhängersteuermodul angeschlossenen Betriebsbremszylindern durch einen integrierten Drucksensor, eine integriertes elektronisches Steuergerät und eine integrierte elektropneumatische Ventileinrichtung einregelt. Insofern ist das Anhängersteuermodul 64 wie ein einkanaliges Druckregelmodul aufgebaut. Der dritte Kommunikationsanschluss 94 kann zur Datenübertragung dann insbesondere an den Datenbus 30 angeschlossen sein, an welchem auch das Anhängersteuermodul 64 angeschlossen ist.

Alternativ kann für den Fall, dass das Anhängersteuermodul 64 über kein integriertes elektronisches Steuergerät und damit über keine eigene "Intelligenz" verfügt, das zentrale Druckregelmodul 16 wenigstens einen Steueranschluss zur Übertragung von Steuersignalen für die integrierten Magnetventile des Anhängersteuermoduls 64 und wenigstens einen Sensoranschluss zum Empfang von Sensorsignalen wenigstens eines integrierten Drucksensors des Anhängersteuermoduls 64 aufweisen, wobei dann in dem zentralen elektronischen Bremssteuergerät 66 Anhängerbremsdruck-Regelroutinen implementiert sind, welche auf der Basis der Steuersignale und der Sensorsignale den Bremsdruck in Betriebsbremszylindern des Anhängers auf den Soll-Bremsdruck einregeln.

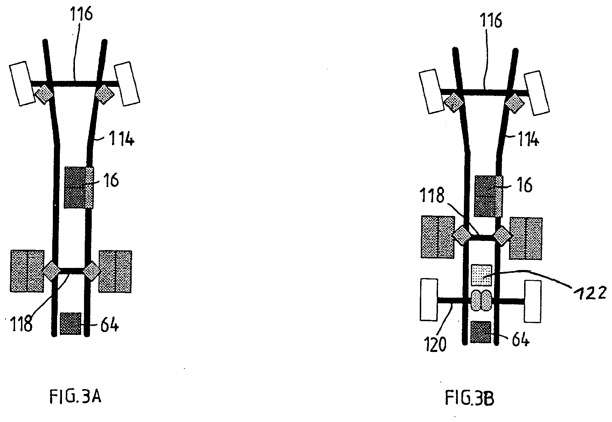

Das zentrale Druckregelmodul 16 ist bevorzugt an einem Rahmen 114 eines Nutzfahrzeugs, im Wesentlichen mittig zwischen der Vorderachse 116 und der Hinterachse 118 angeordnet, wie insbesondere aus Fig. 3A hervorgeht.

Bei einer elektro-pneumatischen Betriebsbremseinrichtung 1 mit einem wie oben beschriebenen zweikanaligen zentralen Druckregelmodul 16 sind daher bevorzugt zwei pneumatisch kreisgetrennte Druckregelkanäle (Vorderachs-Druckregelkanal 9 und Hinterachs-Druckregelkana 111) für die Betriebsbremszylinder 48, 50 der Vorderachse 116 und der Hinterachse 118 vorgesehen, wobei für die Betriebsbremszylinder jeder weiteren Achse 120, beispielsweise einer zweiten Hinterachse oder Liftachse wie in **Fig. 3B** gezeigt, beispielsweise ein weiteres, hier beispielsweise einkanaliges Druckregelmodul 122 vorgesehen werden kann, dessen integriertes elektronisches Steuergerät dann über einen Datenbus mit dem zentralen elektronischen Bremssteuergerät 66 des zentralen Druckregelmoduls 16 kommuniziert und von diesem dann auch zentral gesteuert wird.

Anstatt einer Vorderachse 116 und einer Hinterachse 118 kann in dem zentralen Druckregelmodul 16 ein pneumatisch kreisgetrennter Druckregelkanal 9 wenigstens einer Hinterachse und ein pneumatisch kreisgetrennter Druckregelkanal 11 wenigstens einer weiteren Hinterachse ausgebildet sein. Das zentrale Druckregelmodul 16 ist auch nicht auf zwei Druckregelkanäle beschränkt, sondern kann auch mehr als zwei Druckregelkanäle aufweisen.

Im Normalbetrieb wird das zentrale Druckregelmodul 16 über den Datenbus 30 von dem elektrischen Kanal 28 des Fußbremsventils 2 2 durch ein Bremsanforderungssignal angesteuert, woraufhin dessen zentrales elektronisches Bremssteuergerät 66 entsprechend dieser Vorgabe für die Druckregelkanäle der Vorderachse 116 und der Hinterachse 118 das erste elektrische Steuersignal und das zweite elektrische Steuersignal erzeugt, welche jeweils einen bestimmten Soll-Bremsdruck repräsentieren und in die elektromagnetischen Ventileinrichtungen 68, 70 eingesteuert werden. Diese erzeugen dann auf der Basis des jeweiligen Vorratsdrucks in dem jeweiligen Druckluftvorrat 4, 6 auf elektrischer Basis einen Ist-Bremsdruck, welcher in die Betriebsbremszylinder 48, 50 eingesteuert wird. Die pneumatischen Kanäle 18, 26 des Fußbremswertventils 2 steuern weiterhin die Back-up- oder Steuerdrücke für jeden Druckregelkanal (Vorderachs-Druckregelkanal 9 bzw. Hinterachs-Druckregelkanal 11) getrennt in die beiden Back-up-Anschlüsse 36, 38 des zentralen Druckregelmoduls 16 ein, wobei die dortigen Back-up- oder Rückhalteventile 80, 82 in Sperrstellung geschaltet sind, weil die elektrische Ansteuerung Vorrang hat.

Bei einem Ausfall der Elektronik wird über die beiden Back-up-Bremskreise, d.h. über die beiden pneumatischen Kanäle 18, 26 des Fußbremsventils 2 und die beiden pneumatischen Steuerleitungen 32, 34 Druckluft aus den beiden Druckluftvorräten 4, 6 über die in dem zentralen Druckregelmodul 16 nun durchgeschalteten Back-up- oder Rückhalteventile 80, 82 in die Betriebsbremszylinder 48, 50 eingesteuert. Diese beiden Back-up-Bremskreise bilden dann den Rückhalt für die elektronische Regelung und reichen aus, die gesetzlich vorgeschriebene Hilfsbremswirkung zu erzeugen.

Wie oben bereits angedeutet, ist das zentrale elektronische Bremssteuergerät 66 weiterhin ausgebildet, dass es abhängig von Ausgangssignalen hier beispielsweise eines Inertialsensors in Form eines Gierratensensors (Yaw Rate Sensor) 125 Stellsignale in die erste elektro-magnetische Ventileinrichtung 68 und/oder in die zweite elektro-magnetische Ventileinrichtung 70 einsteuert, um eine Fahrdynamikregelung durchzuführen. Die Stellsignale, mit welchen das zentrale elektronische Bremssteuergerät 66 die erste elektro-magnetische Ventileinrichtung 68 und/oder die zweite elektro-magnetische Ventileinrichtung 70 steuert, stellen dann Bremsstellsignale statt, um die Radbremsen an der Vorderachse 116 und/oder an der Hinterachse 118 bedarfsweise zu aktivieren, um hier beispielsweise beim Fahren Fahrzeugstabilität im Rahmen eines ESP-Systems herzustellen. Im Rahmen der Fahrstabilitätsregelung werden hier bevorzugt auch die ABS-Drucksteuerventile 52 von dem zentralen Druckregelmodul 16 angesteuert, um eine radindividuelle Regelung des Bremsdrucks in den Radbremsen an der Vorderachse 116 und/oder an der Hinterachse 118 vorzunehmen, weil die Radbremsen an der Vorderachse 116 bzw. an der Hinterachse ansonsten lediglich mit einem jeweils einheitlichen Bremsdruck in dem jeweiligen Druckregelkanal 9, 11 beaufschlagbar wären.

Wie insbesondere **Fig. 4** zeigt, weist das zentrale Druckregelmodul 16 Endstufen 17 für die ABS-Drucksteuerventile 52 auf, welche zwischen den ersten Arbeitsanschluss 44 der ersten Achse 116 und die Betriebsbremszylinder 48 der ersten Achse 116 und zwischen den zweiten Arbeitsanschluss 46 der zweiten Achse 118 und die Betriebsbremszylinder 50 der zweiten Achse 118 geschaltet sind, wobei in dem zentralen elektronischen Bremssteuergerät 66 Routinen implementiert sind, durch welche Steuersignale für die ABS-Drucksteuerventile 52 ausgesteuert werden, durch welche mit Hilfe der ABS-Drucksteuerventile 52 auf der Basis der in den Druckregelkanälen der ersten Achse 116 und der zweiten Achse 118 lediglich achsweise geregelten Betriebsbremsdrücke jeweils radindividuelle Betriebsbremsdrücke an den Rädern der ersten Achse 116 und an der zweiten Achse 118 insbesondere zur Durchführung einer ABS-Regelung und/oder der Fahrdynamikregelung erzeugt werden.

Dann kann der Betriebsbremsdruck in einem Radbremszylinder eines gebremsten Rades der ersten Achse 116 und/oder der zweiten Achse 118 durch ein von dem zentralen elektronischen Bremssteuergerät 66 gesteuertes ABS-Drucksteuerventil 52 angepasst/gesteuert oder geregelt werden, um eine radindividuelle Betriebsbremsung des betreffenden Rades durchzuführen, auch wenn der Betriebsbremsdruck in Radbremsen seitenverschiedener Räder einer Achse 116 oder 118 von einem gemeinsamen Druckregelkanal 9 oder 11 geregelt wird. Das zentrale elektronische Bremssteuergerät 66 in dem zentralen Druckregelmodul 16 beinhaltet dann entsprechende Routinen, welche eine radindividuelle Einstellung/Steuerung/Regelung des Bremsdrucks an seitenverschiedenen Rädern einer durch den betreffenden Druckregelkanal 9 oder 11 eigentlich einheitlich bremsdruckgeregelten Achse 116, 118 ermöglichen. Ein solcher radindividueller Bremsdruck an wenigstens einem gebremsten Rad der ersten Achse 116 und/oder der zweiten Achse 118 wird dann durch das zentrale elektronische Bremssteuergerät 66 des zentralen Druckregelmoduls 16 zur Durchführung einer Steuerung oder Regelung eingestellt, für welche eine solcher radindividueller Bremsdruck notwendig bzw. sinnvoll ist, wie beispielsweise für eine Bremsschlupfregelung (ABS), eine Antriebsschlupfregelung (ASR), eine Fahrstabilitätsregelung (ESP), eine Überrollschutzregelung (RPS) und/oder für eine Regelung zum wenigstens teilautonomen Fahren des Fahrzeugs.

Für eine hier beispielsweise durch entsprechende Routinen in dem zentralen elektronischen Bremssteuergerät 66 realisierte Fahrstabilitäts- oder Fahrdynamikregelung ESP ist auf oder an der Platine 94 der Gierratensensor 125 und hier beispielsweise auch ein Beschleunigungssensor 125a angeordnet und mit wenigstens einigen der elektrischen und elektronischen Bauteilen auf der Platine 94 derart elektrisch leitend verbunden ist, dass die Ausgangssignale des Gierratensensors 125 und des Beschleunigungssensors 125a in die wenigstens einigen elektrischen und elektronischen Bauteile auf der Platine 94 zur Durchführung der Fahrstabilitätsregelung ESP einsteuerbar sind. Mit anderen Worten sind elektrische Kontakte des hier beispielsweise als Gierratensensor 125 und als Beschleunigungssensor 125a ausgeführten Inertialsensors mit Leiterbahnen und/oder elektrischen Kontakten auf der Platine 94 verbunden, beispielsweise gebondet.

Wie bereits aus **Fig. 3B** hervorgeht, kann an den zweiten Kommunikationsanschluss 96 des zentralen Druckregelmoduls 16 wenigstens ein weiteres Druckregelmodul 122 angeschlossen sein. Der zweite Kommunikationsanschluss 94 kann zur Datenübertragung dann insbesondere an den Datenbus 30 angeschlossen sein, an welchem auch das weitere Druckregelmodul 122 angeschlossen ist.

Das weitere Druckregelmodul 122 kann insbesondere durch ein 1-Kanal-Druckregelmodul, welches an seitenverschiedenen Rädern wenigstens einer weiteren Achse 120 denselben Bremsdruck einregelt oder durch ein 2-Kanal-Druckregelmodul gebildet werden, welches an seitenverschiedenen Rädern wenigstens einer weiteren Achse 120 einen seitenindividuellen Bremsdruck einregelt.

Im Falle eines 1-Kanal-Druckregelmoduls als weiteres Druckregelmodul 122 steuert das zentrale Druckregelmodul 16 bzw. dessen zentrales elektronisches Bremssteuergerät 66 dann für das weitere Druckregelmodul 122 der weiteren Achse 120 des Fahrzeugs basierend auf den elektrischen Bremsanforderungssignalen des elektrischen Kanals 28 des Fußbremsventils 2 einen spezifischen Bremsdrucksollwert beispielsweise für alle Radbremszylinder dieser weiteren Achse 120 aus, damit das weitere Druckregelmodul 122 in die angeschlossenen Betriebsbremszylinder durch eine integrierte elektropneumatische Ventileinrichtung einen Betriebsbremsdruck einsteuert, welcher durch einen integrierten Drucksensor gemessen und dann durch ein integriertes elektronisches Steuergerät auf den für die weitere Achse 120 vorgesehenen Bremsdrucksollwert eingeregelt wird. Das zentrale Druckregelmodul 16 gibt daher dem weiteren Druckregelmodul 122 den spezifischen Bremsdrucksollwert für die an das weitere Druckregelmodul angeschlossenen Betriebsbremszylinder vor, welcher beispielsweise an eine Last der weiteren Achse 120 angepasst ist.

In dem Fall eines 1-Kanal-Druckregelmoduls als weiteres Druckregelmodul 122 kann das zentrale elektronisches Bremssteuergerät 66 des zentralen Druckregelmoduls 16 auch zwei für die für die weitere Achse 120 spezifische Bremsdrucksollwerte vorgeben und in das weitere Druckregelmodul 122 einsteuern, wobei dann zwischen dem weiteren Druckregelmodul 122 und den an dieses angeschlossenen Radbremszylindern in analoger Vorgehensweise zum zentralen Druckregelmodul 16 je Seite ein ABS-Drucksteuerventil angeordnet ist, durch welches der vom weiteren Druckregelmodul einkanalig geregelte Bremsdruck dann mittels des in das weitere Druckregelmodul integrierten elektronischen Steuergeräts seitenweise angepasst werden kann.

Im Falle eines 2-Kanal-Druckregelmoduls als weiteres Druckregelmodul 122 steuert das zentrale Druckregelmodul 16 bzw. dessen zentrales elektronisches Bremssteuergerät 66 dann für das weitere Druckregelmodul 122 der weiteren Achse 120 des Fahrzeugs basierend auf den elektrischen Bremsanforderungssignalen des elektrischen Kanals 28 des Fußbremsventils 2 jeweils einen spezifischen Bremsdrucksollwert für jeden Druckregelkanal des weiteren Druckregelmoduls 122, um beispielsweise den Betriebsbremsdruck an der weiteren Achse 120 seitenweise zu regeln.

In das weitere Druckregelmodul 122 sind dann für jeden seiner Druckregelkanäle (1-kanalige oder 2-kanalige Ausführung) analog zu dem zentralen Druckregelmodul 16 eine elektromagnetische Ventileinrichtung, optional beinhaltend ein Relaisventil und ein Drucksensor integriert. Ferner ist ein elektronisches Steuergerät integriert, welches eine Druckregelung des Betriebsbremsdrucks in wenigstens einem Druckregelkanal mit Hilfe der betreffenden elektromagnetischen Ventileinrichtung und des betreffenden Drucksensors vornimmt.

Solch ein weiteres Druckregelmodul 122 bzw. dessen integriertes elektronisches Steuergerät ist dann beispielsweise über den Datenbus 30 an den zweiten Kommunikationsanschluss 96 des zentralen Druckregelmoduls 16 angeschlossen, um Bremssteuersignale von dem zentralen elektronischen Bremssteuergerät 66 des zentralen Druckregelmoduls 16 in das weitere Druckregelmodul zu übertragen. Ebenso werden Rückmelde- und Sensorsignale des weiteren Druckregelmoduls 122 über den Datenbus 30 in das zentrale Druckregelmodul 16 übertragen, beispielsweise Sensorsignale eines in dem weiteren Druckregelmodul 122 integrierten Drucksensors, welcher den Betriebsbremsdruck in wenigstens einem Druckregelkanal des weiteren Druckregelmoduls 122 misst. Darüber hinaus erfolgt die Versorgung des zusätzlichen Druckregelmoduls 122 mit elektrischer Energie beispielsweise über den zweiten Spannungsversorgungsanschluss des zentralen Druckregelmoduls 16.

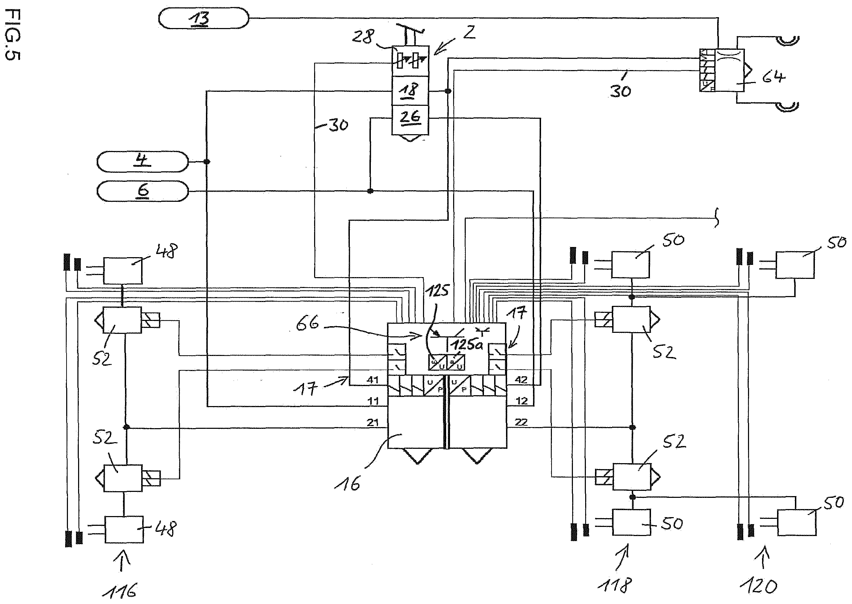

In **Fig. 5** bis **Fig. 9** sind Beispiele für auf dem zentralen Druckregelmodul 16 aufbauende Ausführungen von elektropneumatischen Bremseinrichtungen in verschiedenen Ausbaustufen gezeigt. Dort sind gleiche und gleichwirkende Bauteile und Komponenten durch die gleichen Bezugszahlen gekennzeichnet.

In **Fig. 5** ist der Schaltplan einer Ausführungsform einer elektro-pneumatischen Betriebsbremseinrichtung beispielsweise für ein 6x4-Fahrzeug gezeigt, welche auf dem zentralen Druckregelmodul 16 aufbaut. Dabei ist neben der zweiten Achse 118 als erste Hinterachse eine weitere Achse 120 z.B. als zweite Hinterachse vorgesehen, wobei der Bremsdruck in den Radbremszylinder an der zweiten Hinterachse 120 zunächst zusammen mit dem Betriebsbremsdruck in den Radbremszylindern der ersten Hinterachse 118 geregelt wird, weil hier kein weiteres Druckregelmodul vorhanden ist. Die gemeinsame Regelung des Betriebsbremsdrucks in den Radbremszylindern der beiden Hinterachsen 118, 120 erfolgt durch den zweiten (Hinterachs-) Druckregelkanal 11 des zentralen 2-Kanal-Druckregelmoduls 16 und durch die für beide Hinterachsen 118, 120 gemeinsamen ABS-Drucksteuerventile 52 dann seitenweise, um beispielsweise hier die Fahrdynamik- oder Fahrstabilitätsregelung durchzuführen. Weiterhin wird das Anhängersteuermodul 64 durch einen eigenen dritten Vorratsdruckbehälter 13 druckluftversorgt und wird vom pneumatischen ersten pneumatischen Back-up-Kreis durch den ersten Kanal 18 des Fußbremsventils 2 pneumatisch gesteuert. Die elektrische Steuerung des Anhängersteuermoduls 64 erfolgt wie bei **Fig.1** durch das zentrale elektronische Bremssteuergerät 66 beispielsweise über den Datenbus 30.

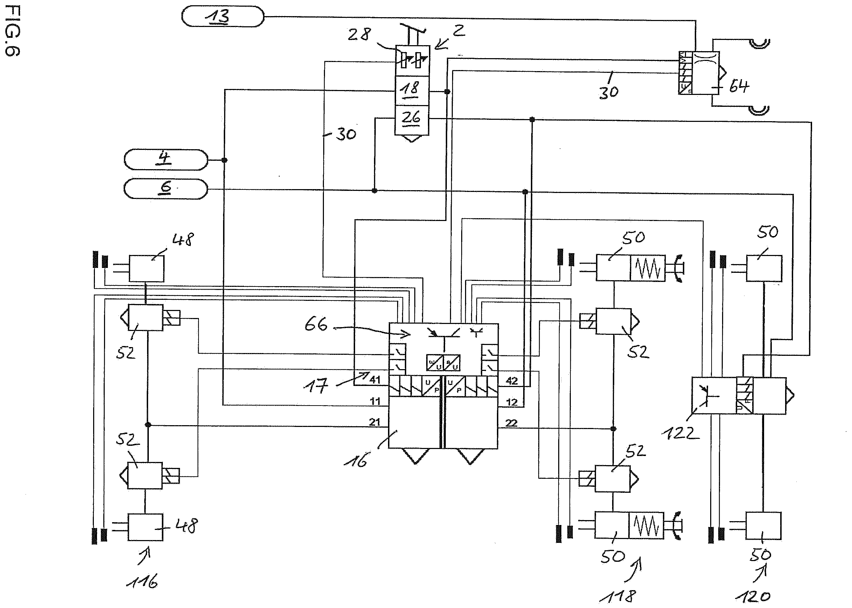

In **Fig. 6** ist der Schaltplan einer weiteren Ausführungsform einer elektro-pneumatischen Betriebsbremseinrichtung beispielsweise für ein 6x2-Fahrzeug gezeigt, welche auf dem zentralen Druckregelmodul 16 aufbaut. Dabei ist neben der zweiten Achse 118 als erste Hinterachse wiederum eine weitere Achse 120 z.B. als zweite Hinterachse vorgesehen, wobei der Bremsdruck in den Radbremszylindern an der zweiten Hinterachse 120 durch ein weiteres beispielsweise einkanaliges Druckregelmodul 122 geregelt wird, welches von dem zentralen elektronischen Bremssteuergerät 66 des zentralen Druckregelmoduls durch einen der weiteren Achse 120 zugeordneten spezifischen Bremsdrucksollwert gesteuert wird, wobei das weitere einkanalige Druckregelmodul 122 den vorgegebenen Bremsdrucksollwert hier beispielsweise achsweise für alle gebremsten Räder der weiteren Achse 120 einregelt. Hingegen ist hier aufgrund der an der zweiten Achse (erste Hinterachse) 118 vorgesehenen ABS-Drucksteuerventile 52 eine seitenindividuelle Steuerung/Regelung der Bremsdrücke möglich.

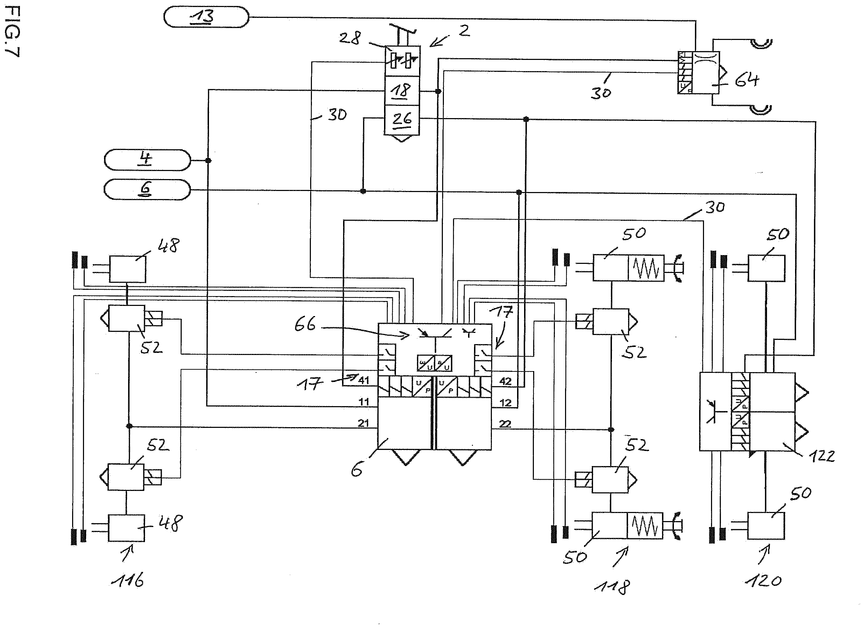

In **Fig. 7** ist der Schaltplan einer weiteren Ausführungsform einer elektro-pneumatischen Betriebsbremseinrichtung beispielsweise für ein 6x2-Fahrzeug gezeigt, welche auf dem zentralen Druckregelmodul 16 aufbaut. Dabei ist neben der zweiten Achse 118 als erste Hinterachse wiederum eine weitere Achse 120 z.B. als zweite Hinterachse vorgesehen, wobei der Bremsdruck in den Radbremszylindern an der zweiten Hinterachse 120 durch ein weiteres beispielsweise zweikanaliges Druckregelmodul 122 geregelt wird, welches von dem zentralen elektronischen Bremssteuergerät 66 des zentralen Druckregelmoduls durch zwei der weiteren Achse 120 zugeordnete spezifische Bremsdrucksollwerte gesteuert wird, wobei das zusätzliche zweikanalige Druckregelmodul 122 in jeweils einem Druckregelkanal (rechts, links) den jeweils vorgegebenen Bremsdrucksollwert hier beispielsweise für die Radbremszylinder auf der rechten Seite und für die Radbremszylinder auf der linken Seite der weiteren Achse 120 seitenweise einregelt. Weiterhin ist aufgrund der an der zweiten Achse (erste Hinterachse) 118 vorgesehenen ABS-Drucksteuerventile 52 auch an der zweiten Achse 118 eine seitenindividuelle Steuerung/Regelung der Bremsdrücke möglich.

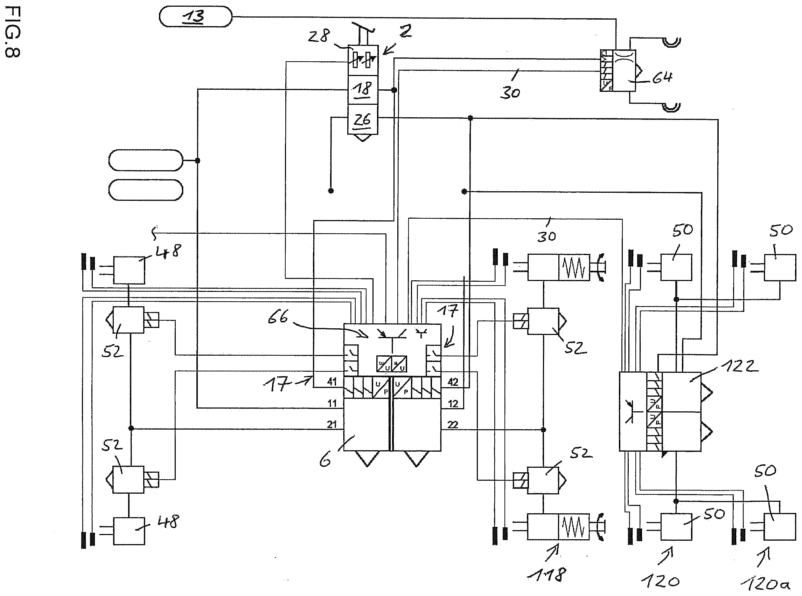

In **Fig. 8** ist der Schaltplan einer weiteren Ausführungsform einer elektro-pneumatischen Betriebsbremseinrichtung beispielsweise für ein 8x8-Fahrzeug gezeigt, welche auf dem zentralen Druckregelmodul 16 aufbaut. Dabei ist neben der zweiten Achse 118 als erste Hinterachse wiederum eine erste weitere Achse 120 z.B. als zweite Hinterachse sowie eine zweite weitere Achse 120a als dritte Hinterachse vorgesehen, wobei der Bremsdruck in den Radbremszylindern an der zweiten Hinterachse 120 und auch an der dritten Hinterachse 120a wiederum durch ein weiteres beispielsweise zweikanaliges Druckregelmodul 122 geregelt wird, welches von dem zentralen elektronischen Bremssteuergerät 66 des zentralen Druckregelmoduls durch zwei der zweiten Hinterachse 120 und der dritten Hinterachse 120a zugeordnete spezifische Bremsdrucksollwerte gesteuert wird, wobei das zusätzliche zweikanalige Druckregelmodul 122 in jeweils einem Druckregelkanal (rechts, links) den jeweils vorgegebenen Bremsdrucksollwert hier beispielsweise für die Radbremszylinder auf der rechten Seite und für die Radbremszylinder auf der linken Seite der zweiten und dritten Hinterachse 120, 120a seitenweise einregelt. Weiterhin ist aufgrund der an der zweiten Achse (erste Hinterachse) 118 vorgesehenen ABS-Drucksteuerventile 52 auch an der zweiten Achse 118 (erste Hinterachse) eine seitenindividuelle Steuerung/Regelung der Bremsdrücke möglich.

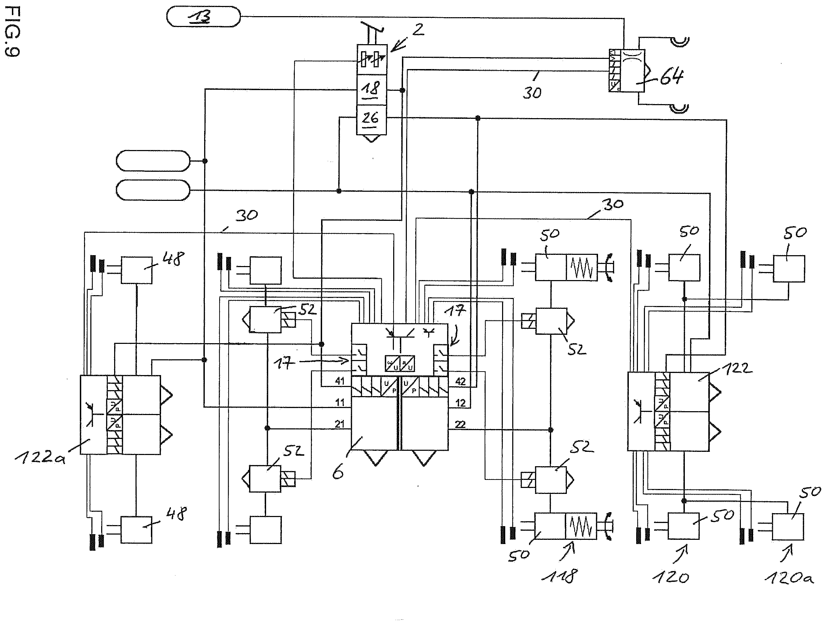

In **Fig. 9** ist der Schaltplan einer weiteren Ausführungsform einer elektro-pneumatischen Betriebsbremseinrichtung beispielsweise für ein 10x10-Fahrzeug gezeigt, welche auf dem zentralen Druckregelmodul 16 aufbaut. Im Unterscheid zu **Fig. 9** ist dort ein zweites weiteres, beispielsweise zweikanaliges Druckregelmodul 116a für eine weitere Vorderachse 116a vorgesehen, wobei dadurch die Bremsdrücke in den rechten und linken Radbremszylindern der weiteren Vorderachse 116a seitenweise regelbar sind.

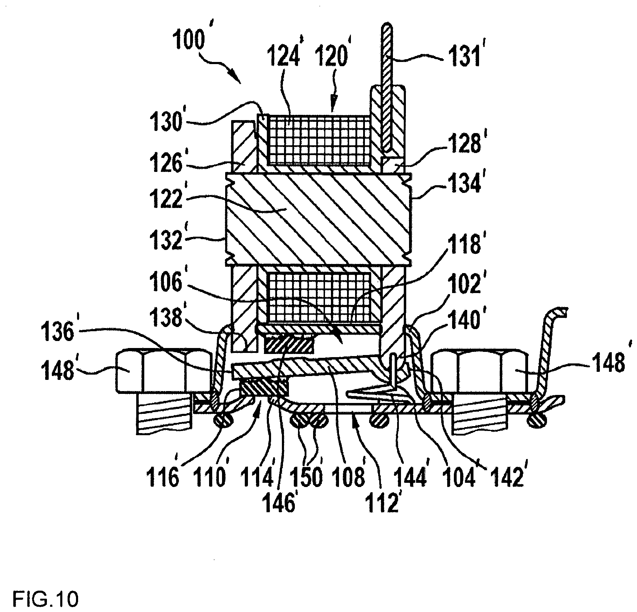

Bevorzugt wird wenigstens ein elektromagnetisches Ventil (Einlassventil 72, Einlassventil 74, Auslassventil 76, Auslassventil 78) der ersten elektromagnetischen Ventileinrichtung 68 und/oder der zweiten elektromagnetischen Ventileinrichtung 70 durch ein in **Fig.10** in schematischer Querschnittsdarstellung dargestelltes Kippankerventil 100' gebildet.

Das Kippankerventil 100' weist eine Halbschale 102' auf, die durch ein Deckelelement 104' fluiddicht verschlossen ist, um einen Ventilraum 106' zu bilden. In dem Ventilraum 106' ist ein Kippanker 108' aus einem magnetisch leitenden Material angeordnet. Der Kippanker 108' ist zwischen einer Schließposition und einer Öffnungsposition drehbar gelagert. In 1 befindet sich der Kippanker 108' in der Schließposition. Das Deckelelement 104' weist eine Steueröffnung 110' und einen Durchlass 112' auf. Durch die Steuereröffnung 110' und den Durchlass 112' kann Druckluft durch den Ventilraum 106' geleitet werden. In **Fig. 10** ist das Deckelelement 104 im Bereich der Steuereröffnung 110' mit einer Einwölbung dargestellt, die als Ventilsitz 114' fungiert. An einer dem Deckelelement 104' zugewandten Unterseite des Kippankers 108' ist ein Dichtelement 116' befestigt, das in der in **Fig. 10** gezeigten Schließposition auf dem Ventilsitz 114' aufliegt und somit die Steueröffnung 110' fluiddicht verschließt.

An einem dem Deckelelement 104' gegenüberliegenden Boden 118' der Halbschale 102' ist eine Spuleneinrichtung 120' zur Betätigung des Kippankers 108' angeordnet.

Die Spuleneinrichtung 120' umfasst einen magnetisch leitenden Spulenkern 122', um den eine Magnetspule 124' gewickelt ist. Die Spuleneinrichtung 120' ist außerhalb des Ventilraums 106` liegend auf dem Boden 118' platziert, sodass sich der Spulenkern 122' in Längsrichtung im Wesentlichen parallel zum Boden 118' erstreckt. Die Spuleneinrichtung 120' dient zum Umschalten des Kippankers 108' zwischen Öffnungs- und Schließposition.

Gemäß dem in **Fig. 10** gezeigten Ausführungsbeispiel umfasst die Spuleneinrichtung 120' eine erste Seitenwand 126' und eine zweite Seitenwand 128' aus einem magnetisch leitenden Material. Die Spule 124' ist um einen zwischen den beiden Seitenwänden 125', 128' befindlichen Spulenträger 130' gewickelt, wobei der Spulenkern 122' durch den Spulenträger 13'0 hindurchgeführt ist. In den Spulenträger 130' ist ein Anschlusskontakt 131' zum elektrischen Kontaktieren der Spule 124' integriert. Ferner ragt ein erstes Ende 132' des Spulenkerns 122' durch eine Öffnung in der ersten Seitenwand 125' und ein zweites Ende 134' des Spulenkerns 120' durch eine Öffnung in der zweiten Seitenwand 128'. Je nach Ausführungsform können die beiden Enden 132', 134' mit der jeweiligen Seitenwand kraft-, form- oder stoffschlüssig verbunden sein.

Der Boden 118' weist in einem einem ersten Ankerende 136' des Kippankers 108' gegenüberliegenden Bereich einen ersten Schlitz auf, durch den ein dem Boden 118' zugewandter Endabschnitt 138' der ersten Seitenwand 125' hindurchgeführt ist. Der im Ventilraum 106' befindliche Endabschnitt 138' liegt somit dem ersten Ankerende 136' gegenüber. In der Schließposition ist der Endabschnitt 138' durch einen Luftspalt vom ersten Ankerende 136' getrennt. Analog dazu ist ein dem Boden 118' zugewandter Endabschnitt 140' der zweiten Seitenwand 128' durch einen zweiten Schlitz im Boden 118' hindurchgeführt, wobei der zweite Schlitz in einem einem zweiten Ankerende 142' des Kippankers 108' gegenüberliegenden Bereich des Bodens 118` ausgebildet ist. Somit liegt der Endabschnitt 140' dem zweiten Ankerende 142' gegenüber. Die Seitenwände 125', 128' sind im Bereich der Schlitze in einem geeigneten Fügeverfahren, etwa durch Laserschweißen oder Kleben, fluiddicht mit dem Boden 118' verbunden.

Gemäß diesem Ausführungsbeispiel ist das Dichtelement 116' im Bereich des ersten Ankerendes 136' mit dem Kippanker 108' verklebt. Das zweite Ankerende 142' ist mit einer Rille ausgeformt, die durch eine am Deckelelement 104' verankerte Feder 144' gegen den Endabschnitt 140' gedrückt wird. Der Endabschnitt 140' ist mit einer einer Kontur der Rille entsprechenden Gegenkontur ausgeformt, genauer mit einer Rundung, durch die eine drehbare Lagerung des Kippankers 108' um den Endabschnitt 140' ermöglicht wird. Die Feder 144' kann ferner ausgebildet sein, um den als Ventilträger dienenden drehgelagerten Kippanker 108' mit einem in Richtung der Schließposition wirkenden Drehmoment zu beaufschlagen, sodass das Dichtelement 116' in der Schließposition gegen den Ventilsitz 114' gedrückt wird. Um den Kippanker 108' in die Schließposition zu bewegen, wird beispielsweise ein Stromfluss durch die Spuleneinrichtung 120' unterbrochen, sodass keine Magnetkraft oder nur noch eine geringe Restmagnetkraft auf den Kippanker 108' wirkt. Dabei wird der Kippanker 108' durch die Feder 144' in die Schließposition gedrückt. Um den Kippanker 108' in die Öffnungsposition zu bewegen, kann die Spuleneinrichtung 120' eingeschaltet werden. Dadurch wirkt eine magnetische Anziehungskraft auf das erste Ankerende 136', die größer ist als eine von der Feder 144' auf den Kippanker 108' ausgeübte Federkraft.

Zwischen den im Ventilraum 106' befindlichen Endabschnitten 138', 140' ist ein Dämpferelement 146' angeordnet, das gemäß diesem Ausführungsbeispiel an einem dem Kippanker 108' gegenüberliegenden Abschnitt des Bodens 118' befestigt ist. Beispielsweise kann das Dämpferelement 146' mit dem Boden 118' verklebt sein. Das Dämpferelement 146' dient als elastisch verformbarer Anschlag für den Kippanker 108'. Durch das Dämpferelement 146 können Schwingungen des Kippankers 108', wie sie beispielsweise durch Stöße oder Erschütterungen oder beim schnellen Bewegen des Kippankers 108 in die Öffnungsposition ausgelöst werden können, verhindert werden. Gemäß einem weiter unten beschriebenen Ausführungsbeispiel kann das Dämpferelement 146' als Dämpferpille und das Dichtelement 116' als Ventilpille aus einem preisgünstigen Blechtopf mit einvulkanisiertem Ventilgummi als Dicht- bzw. Dämpfungsmaterial realisiert sein, wobei die Dämpferpille und die Ventilpille baugleich sein können.

Dadurch, dass das Dämpferelement 146' und das Dichtelement 116' eingeklebt werden, können Fehlwinkel aus Einzeltoleranzen ausgeglichen werden, d. h., durch Einkleben des Dämpferelements 146' und des Dichtelements 116' kann eine Teiletoleranz erweitert werden.

Das in **Fig. 10** gezeigte Magnetventil 100' mit Kippanker 108' (Kippankerventil) bietet den Vorteil eines robusten, einfachen Grundaufbaus sowie einer geringen Neigung zur Schwingungsanregung in dem zentralen Druckregelmodul 16 angrenzender Bauteile wie insbesondere dem Gierratensensor 125, welcher dann eine geringere Tendenz zu Fehlmessungen der Gierrate hat. Außerdem bietet das Kippankerventil 100' eine bessere Temperaturfestigkeit, da die Magnetspule in Form der Spuleneinrichtung 120' außerhalb des Ventilraums 106' angeordnet werden kann. Beispielsweise kann das Kippankerventil 100' mittels einer Klemmverschraubung 148' in das Modulgehäuse 92 (**Fig. 2**) eingebaut werden. Die Klemmverschraubung 148' kann durch einen Trockenkleber gegen Lösen gesichert sein. Ein Kontaktbereich zwischen Deckelelement 104' und Gehäuse kann durch O-Ringe 150' im Bereich der Steueröffnung 110' und des Durchlasses 112' fluiddicht abgedichtet sein. Wie aus **Fig. 10** ersichtlich, befinden sich alle pneumatischen Anschlüsse des Kippankerventils 100' an einer der Spuleneinrichtung 120' gegenüberliegenden Unterseite des Kippankerventils 100'. Dies ermöglicht einen besonders einfachen Einbau des Kippankerventils 100'.

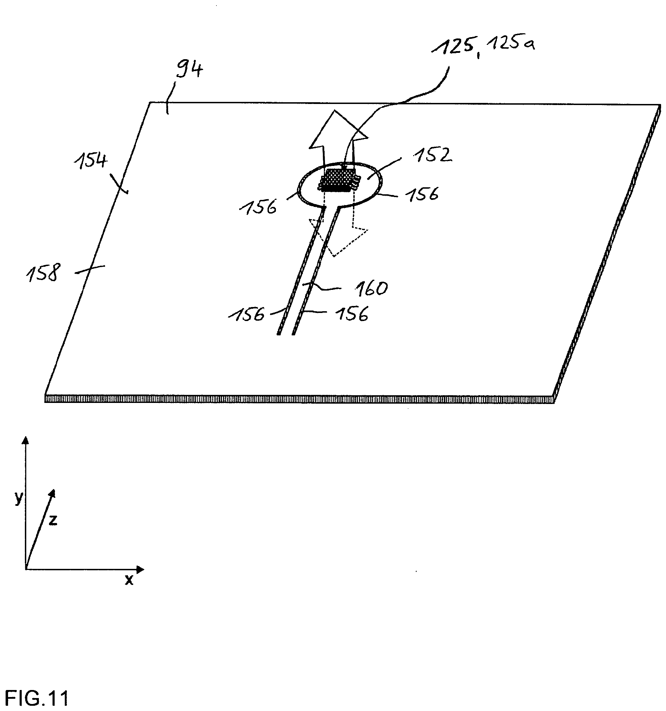

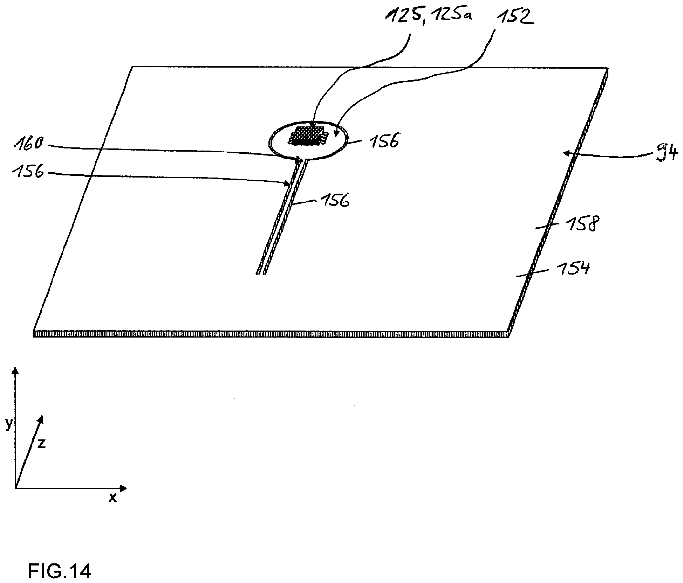

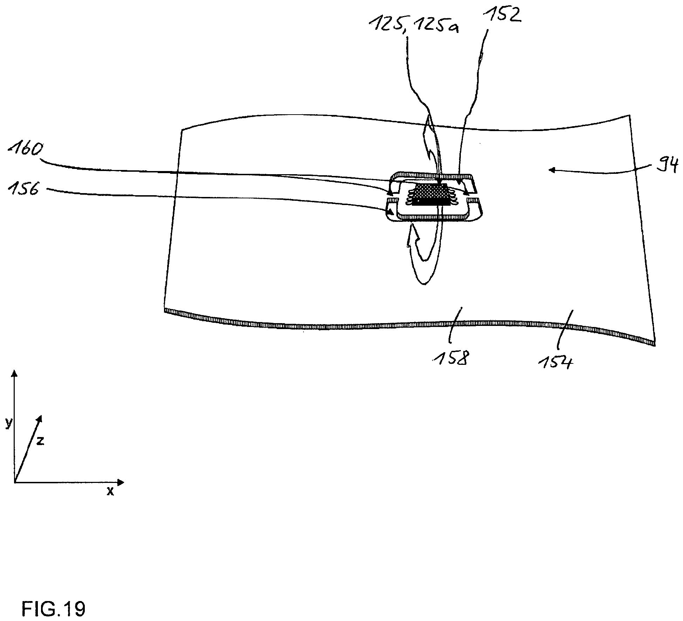

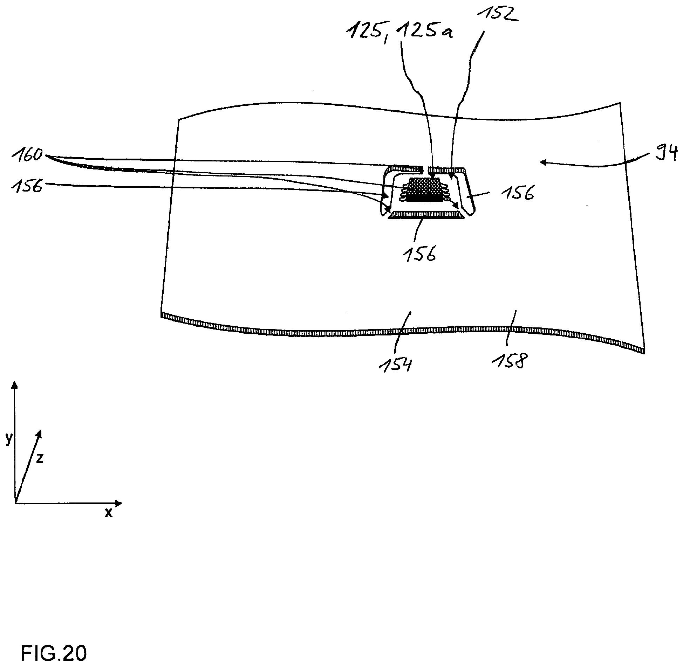

Gemäß den Ausführungsformen von **Fig. 11** bis **Fig. 21** kann das zentrale Druckregelmodul 16 Schwingungsentkopplungsmittel zum wenigstens teilweisen Entkoppeln des Gierratensensors 125 bzw. des Beschleunigungssensors 125a von Schwingungen oder Körperschall beinhaltet, welchen die Platine 94 oder mit dieser verbundene Bauteile des zentralen Druckregelmoduls 16 im Betrieb ausgesetzt ist/sind.

Hier umfassen die Schwingungsentkoppelungsmittel bevorzugt einen Entkopplungsabschnitt 152 eines Platinenkörpers 154 der Platine 94, auf welchem der Gierratensensor 125 gehalten oder angeordnet ist. Dabei ist der der Entkopplungsabschnitt 152 des Platinenkörpers 154 mittels wenigstens einer den Platinenkörper 154 der Platine 94 teilweise oder vollständig durchdringenden Ausnehmung 156 von dem restlichen Platinenkörper 158 des Platinenkörpers 154 mit Ausnahme wenigstens eines Platinenbrückenabschnitts 160 getrennt, welcher den Entkopplungsabschnitt 152 mit dem restlichen Platinenkörper 158 verbindet, wie beispielsweise **Fig. 11** zeigt.

Entlang des Platinenbrückenabschnitts 160 ist dann wenigstens eine elektrische Verbindung zwischen dem Gierratensensor 125 und den elektrischen und elektronischen Bauteilen auf dem restlichen Platinenkörper 158 gezogen, welche die Ausgangssignale des Gierratensensors 125 an die elektrischen und elektronischen Bauteile zur Durchführung der Fahrdynamik- oder Fahrstabilitätsregelung leitet.

Wie in den Ausführungsformen nach **Fig. 11** bis **Fig. 21** gezeigt, besteht eine solche Ausnehmung 156 in wenigstens einem Schlitz im Platinenkörper 154, welcher den Entkopplungsabschnitt 152 mit Ausnahme des wenigstens einen Platinenbrückenabschnitts 160 wenigstens teilweise umgibt. Dabei können insbesondere zwei parallel geführte gerade oder gebogene Schlitze als Ausnehmung 156 in dem Platinenkörper 154 vorgesehen sein (**Fig. 11** bis **Fig. 17**).

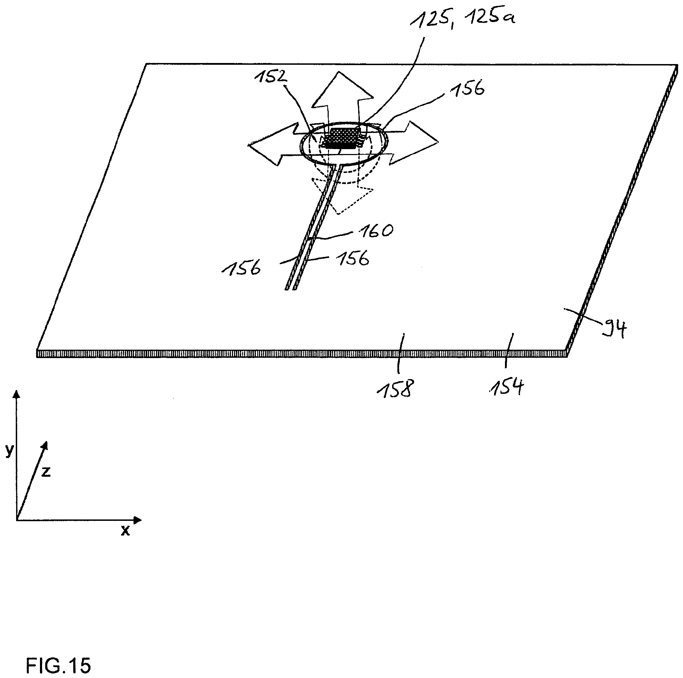

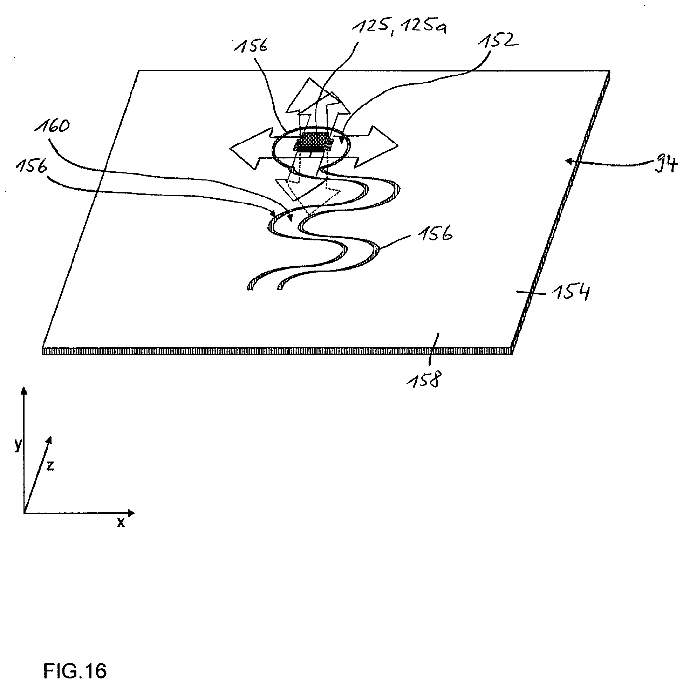

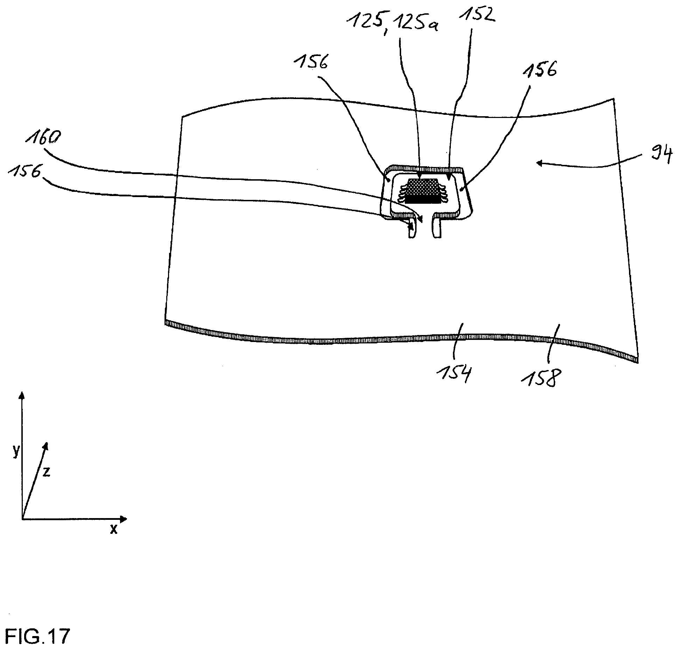

Die Koordinaten X, Y und Z in den **Figuren 11** bis **21** symbolisieren Translationsfreiheitsgrade und als gedachte Drehachsen auch Drehfreiheitsgrade des Entkopplungsabschnitts 152, auf welchem der Gierratensensor 125 angeordnet ist. Die Schlitze 156 erlauben dann beispielsweise eine gefederte Lagerung des Entkopplungsabschnitts 152 zusammen mit dem Gierratensensor 125 relativ zum restlichen Platinenkörper 158 in Y-Richtung, d.h. senkrecht zur Ebene des Platinenkörpers 158 (**Fig. 11****,** **Fig. 12****,** **Fig. 13****,** **Fig.14**) und/oder in X-oder in Z-Richtung (**Fig. 15****,** **Fig. 16**), d.h. in der Ebene des Platinenkörpers 158. Zusätzlich können die Schlitze 156 auch eine gefederte und schwnigungsdämpfende Drehlagerung des Entkopplungsabschnitts 152 in Bezug zum restlichen Platinenkörper 158 ermöglichen, wie in **Fig.17****,** **Fig.18** und **Fig.19** durch die Pfeile angedeutet ist.

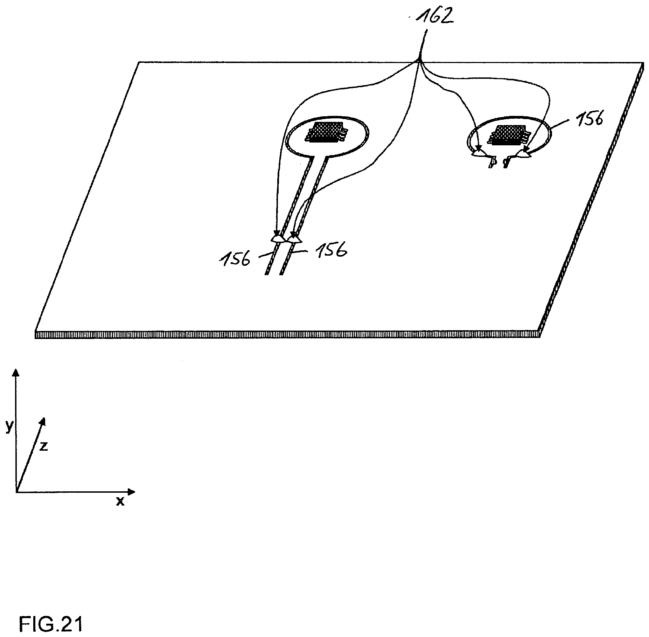

Für eine noch bessere Schwingungsdämpfung des Entkopplungsabschnitts 152 mit dem Gierratensensor 125 in Bezug zum restlichen Platinenkörper 158 kann wenigstens ein Schlitz 156 auch wenigstens teilweise mit einer Dämpfungsmasse 162 wenigstens teilweise oder wenigstens abschnittsweise befüllt sein (**Fig. 21**).

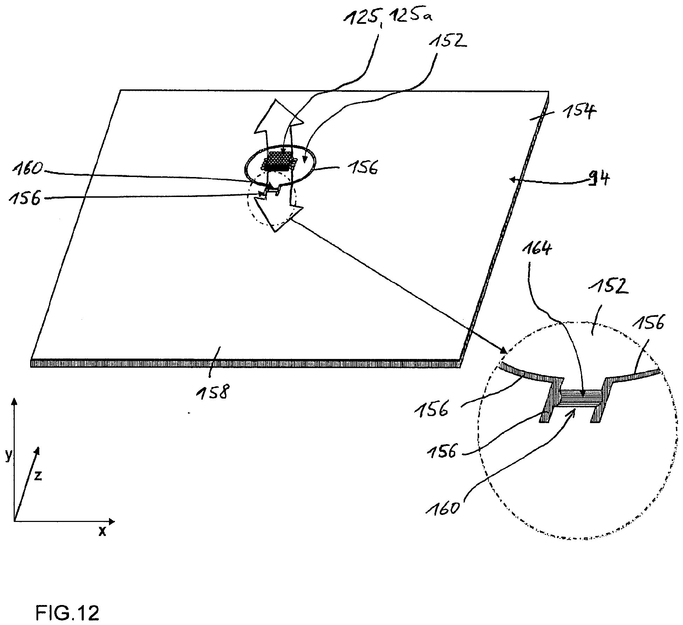

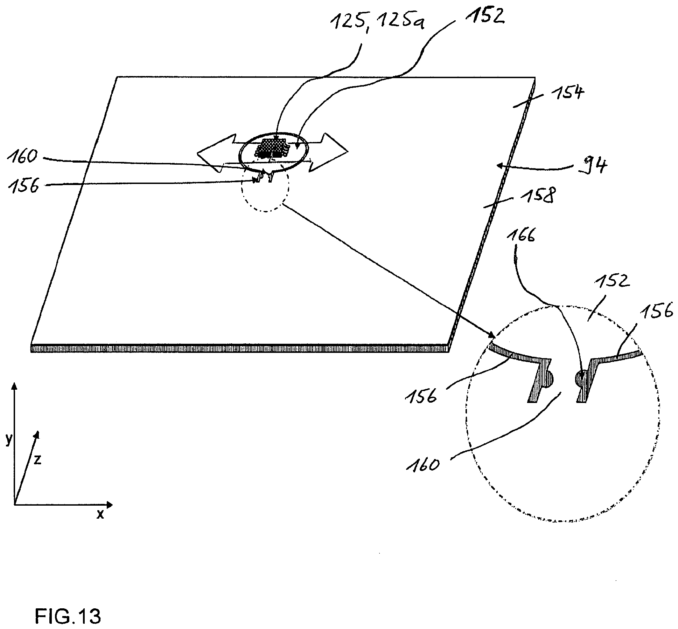

Zusätzlich oder alternativ kann der Platinenbrückenabschnitt 160 wenigstens abschnittsweise eine geringere Dicke als der restliche Platinenkörper 154 und/oder der Entkopplungsabschnitt 152 aufweisen, beispielsweise dadurch, dass der Platinenbrückenabschnitt 160 senkrecht zur Ebene des Platinenkörpers 154 gesehen mit einer Quernut 164 versehen ist (**Fig. 12**), oder dadurch, dass der Platinenbrückenabschnitt 160 in der Ebene des Platinenkörpers 154 gesehen mit wenigstens einer seitlichen, den Querschnitt schwächenden Einkerbung versehen ist (**Fig. 13**).

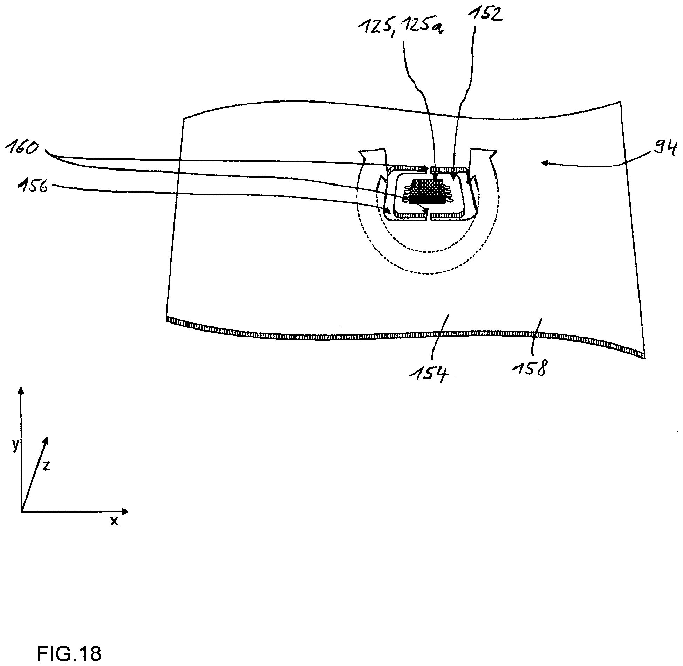

Auch können mehr als nur ein Platinenbrückenabschnitt 160, beispielsweise zwei Platinenbrückenabschnitte 160 vorgesehen sein (**Fig. 18****,** **Fig. 19****,** **Fig. 20**), über welche dann der Entkopplungsabschnitt 152 zusammen mit dem Gierratensensor 125 an dem restlichen Platinenkörper 158 nachgiebig gehalten ist.

Durch eine wahlweise bzw. geeignete Anordnung und Ausbildung des wenigstens einen Platinenbrückenabschnitts 160 und der wenigstens einen Ausnehmung 156 kann dann eine gewünschte Dreh- oder Translationsnachgiebigkeit des Entkopplungsabschnitts 152 mit dem Gierratensensor 125 in Bezug zum restlichen Platinenkörper 154 erzielt werden, was in einer Schwingungsentkopplung des Gierratensensors 125 vom restlichen Platinenkörper 154 und damit auch von schwingungsanregenden Bauteilen und Komponenten wie etwa Magnetventilen des zentralen Druckmoduls 16 resultiert, welche die Platine 94 zu Schwingungen anregen können.

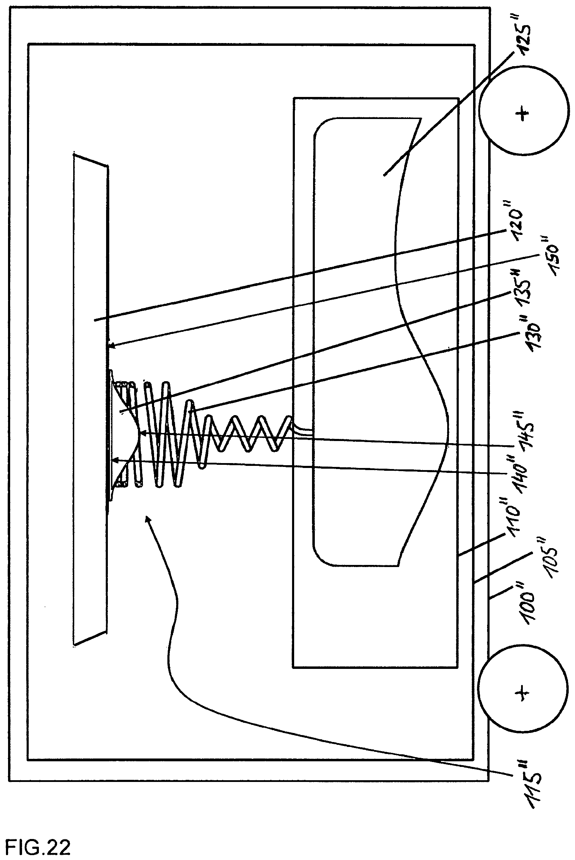

Gemäß einer weiteren Ausführungsform des zentralen Druckregelmoduls 105" von **Fig. 22** kann eine elektrische Kontaktierungsvorrichtung 115" zum federbaren elektrischen Kontaktieren der Platine 120" mit einem Magnetventil 110" der ersten oder zweiten elektromagnetischen Ventileinrichtung 68, 70 vorgesehen sein. Diese elektrische Kontaktierungsvorrichtung 115" umfasst beispielsweise ein sich von der Platine 120" bis zum Magnetventil 110" erstreckendes Federelement 130", durch welches einerseits die Platine 120" und andererseits das Magnetventil 110" in wenigstens einem Bewegungsfreiheitsgrad gegeneinander federnd gelagert und zugleich miteinander elektrisch leitend verbunden sind. Diese federnde Lagerung ist nachgiebig und sorgt daher für eine Schwingungsentkopplung zwischen der Platine 120" einerseits und dem Magnetventil 110" andererseits.

Damit wird eine Übertragung von Schwingungen vom dem durch seinen Betrieb Schwingungen verursachenden Magnetventil 110" zu der Platine 120" mittels des Federelements 130" gemindert bzw. verhindert. Beispielsweise sind ein Gierratensensor 125 und/oder ein Beschleunigungssensor 125a wie in **Fig. 2** direkt oder indirekt auf der Platine 120" angeordnet und dann wegen der federnden Verbindung zwischen Platine 120" und Magnetventil 110" gedämpften, von dem Magnetventil 110" verursachten Schwingungen ausgesetzt, so dass der/die Sensor(en) 125, 125a bessere Messergebnisse den elektrischen und elektronischen Komponenten auf der Platine 120" liefern kann (können), beispielsweise um eine Fahrdynamik- oder Fahrstabilitätsregelung durchzuführen.

Der durch das Federelement 130" ermöglichte Bewegungsfreiheitsgrad kann grundsätzlich einen translatorischen und/oder eine rotatorischen Bewegungsfreiheitsgrad beinhalten.

Im Beispiel von **Fig. 22** wird das Federelement 130" beispielsweise durch eine Schraubenfeder gebildet, welche zwischen einerseits der Platine 120" und andererseits dem Magnetventil 110" eingespannt gelagert ist. Eine solche eingespannte Lagerung der Schraubenfeder 130" kann beispielsweise dadurch realisiert sein, dass die Platine 120" an einer ins Innere des Druckregelmoduls 105" weisenden Fläche des als Deckel ausgebildeten Gehäuseteils 102 (**Fig. 2**) des zentralen Druckregelmoduls 105" gekontert ist und beim Aufsetzen des Deckels dann die beispielsweise an der Platine 120" zentrierte Schraubenfeder 130" zwischen der Platine 120" und dem Magnetventil 110" zusammengedrückt wird.

Genauer zeigt **Fig. 22** eine schematische Darstellung des Fahrzeugs 100" mit dem zentralen Druckregelmodul 105" mit einem Magnetventil 110" und mit einer Kontaktiervorrichtung 115" zum federbaren elektrischen Kontaktieren der Platine 120" mit dem Magnetventil 110". Die Platine 120", der Gierratensensor 125, der Beschleunigungssensor 125a, das Magnetventil 110" und die elektrische Kontaktiervorrichtung 115" sind daher Teile des zentralen Druckregelmoduls 105".

Die elektrische Kontaktiervorrichtung 115" weist das Federelement 130" und ein Platinenbefestigungselement 135" auf. Das Federelement 130" ist hier beispielsweise als Schraubenfeder helixförmig und zwischen der Platine 120" und einem Kontaktelement 125" des Magnetventils 110" eingespannt.

Ein Platinenbefestigungselement 135" weist eine Befestigungsoberfläche 140" und eine der Befestigungsoberfläche 140" gegenüberliegende Zentrieroberfläche 145" auf, wobei die Befestigungsoberfläche 140" an der Platine 120" befestigt ist und zumindest ein Abschnitt der Zentrieroberfläche 145" in einem Betriebszustand der Kontaktiervorrichtung 115" dazu angeordnet ist, um in einen Innenraumabschnitt eines Innenraums des Federelements 130" zu ragen, um das Federelement 130" zu führen und/oder zu zentrieren.

Gemäß diesem Ausführungsbeispiel weist die Zentrieroberfläche 145" eine Erhebung oder Wölbung auf, die in dem Betriebszustand in den Innenraumabschnitt ragt. Gemäß diesem Ausführungsbeispiel erstreckt sich die Erhebung oder Wölbung des Platinenbefestigungselements 135" längenmäßig über einen Längenabschnitt einer Hauptlänge des Innenraums, wobei der Längenabschnitt innerhalb eines Toleranzbereichs von einem bis 20 Prozent Abweichung ein Siebtel einer Länge der Hauptlänge beträgt. Die Hauptlänge entspricht gemäß diesem Ausführungsbeispiel einem Abstand zwischen der Platine 120" und dem Kontaktelement 125". Gemäß diesem Ausführungsbeispiel erstreckt sich eine Mittelachse oder Längsachse des Federelements 130" senkrecht zu einer Hauptoberfläche der Platine 130" und einer Hauptoberfläche des Kontaktelements 125".

Ein erster Federabschnitt des Federelements 130" weist gemäß diesem Ausführungsbeispiel einen ersten Radius und ein zweiter Federabschnitt des Federelements 130" einen zweiten Radius auf, wobei der erste Radius größer ist als der zweite Radius. Der zweite Federabschnitt ist gemäß diesem Ausführungsbeispiel dem Kontaktelement 125" und der erste Federabschnitt der Platine 120" zugewandt angeordnet. In dem hier gezeigten Betriebszustand der Kontaktiervorrichtung 115" ist das Platinenbefestigungselement 135" als ein Anschlag für ein Federende des Federelements 130" angeordnet.

Das Kontaktelement 125" ist gemäß diesem Ausführungsbeispiel als ein Magnet und/oder ein Spulendraht und/oder ein Magnetgehäuse des Magnetventils 110" ausgeformt. Gemäß diesem Ausführungsbeispiel ist das Platinenbefestigungselement 135" beispielsweise stoffschlüssig an der Platine 120" befestigt. Das Federelement 130" ist gemäß diesem Ausführungsbeispiel an dem Kontaktelement 125" befestigt. Gemäß diesem Ausführungsbeispiel ist das Federende als ein freies Ende des ersten Federabschnitts ausgeformt und mit einem umlaufenden Umlaufrandabschnitt der Zentrieroberfläche 145" des Platinenbefestigungselements 135" kontaktiert. Ein dem Federende gegenüberliegendes weiteres Federende ist gemäß diesem Ausführungsbeispiel als ein freies Ende des zweiten Federabschnitts ausgeformt und an dem Kontaktelement 125" befestigt. Gemäß diesem Ausführungsbeispiel ist das weitere Federende mit einem Spulendraht des Kontaktelements 125" verlötet.

Im Folgenden werden Ausführungsbeispiele der hier vorgestellten Kontaktiervorrichtung 115" noch einmal mit anderen Worten beschrieben.

Die Kontaktiervorrichtung 115" ist dazu ausgebildet, um eine elektrische Kontaktierung eines Magnetventils 110" mit einer Platine 120" zu ermöglichen, auf welcher beispielsweise ein Inertialsensor, insbesondere in Form eines Gierratensensors 125 und/oder eines Beschleunigungssensors 125a angeordnet ist.

Das beispielsweise helixförmige Federelement 130, das auch als eine Schraubenfeder bezeichnet werden kann, wird gemäß dem in **Fig. 22** gezeigten Ausführungsbeispiel gegen das Platinenbefestigungselement 135" in Form eines konischen Hütchens gedrückt. Bei einem Zusammenbau der Kontaktiervorrichtung 115" in den hier gezeigten Betriebszustand wird die Schaubenfeder 130" vorteilhafterweise dank des Hütchens automatisch zentriert. Dadurch erfolgt auch ein Toleranzausgleich. Vorteilhafterweise überträgt das Federelement 130" im Betriebszustand keinen oder fast keinen Körperschall und/oder Vibrationen von dem Magnetventil 110" zu der Platine 120". Das Federelement 130" ist vorteilhafterweise fixiert oder zumindest zentriert und kann lateral nicht wandern. Somit entsteht kein oder nur wenig Verschleiß auf oder an der Platine 120" und/oder an dem Federelement 130". Auch Bewegungen oder Mikrobewegungen der Bauteile gegeneinander führen zu kaum Verschleiß. Dank des Platinenbefestigungselements 135" sind außerdem keine Durchkontaktierungen der Platine 120", bei denen Zwischenlayer oder -schichten durchstoßen würden, nötig. Gemäß diesem Ausführungsbeispiel ist eine Leiterbahn 150" zwischen der Befestigungsoberfläche 140" und der Platine 120" angeordnet oder eingepresst. Gemäß diesem Ausführungsbeispiel weist das Platinenbefestigungselement 135" ein metallisches Material auf und/oder ist auf die Platine 150" gelötet. Gemäß einem Ausführungsbeispiel ist das Platinenbefestigungselement 135" durch ein Weichschmelzverfahren wie Wiederaufschmelzlöten, auch Reflow-Löten genannt, an die Platine 120" gelötet angeordnet.

Ansonsten ist das zentrale Druckregelmodul 105" von **Fig. 22** wie das vorangehend beschriebene Druckregelmodul 16 beispielsweise gemäß **Fig. 2** oder **Fig. 4** aufgebaut.

### Bezugszeichenliste

- 1: Betriebsbremseinrichtung
- 2: Fußbremsventil
- 4: erster Vorratsdruckbehälter
- 5: Entlüftung
- 6: zweiter Vorratsdruckbehälter
- 7: Entlüftung
- 8: Luftaufbereitungsmodul
- 9: erster Druckregelkanal
- 10: Versorgungsleitung
- 11: zweiter Druckregelkanal
- 12: Versorgungsleitung
- 13: dritter Vorratsdruckbehälter
- 14: zweiter Vorratsanschluss
- 16: zentrales Druckregelmodul
- 17: Endstufen
- 18: erster Kanal
- 20: Versorgungsleitung
- 22: Versorgungsleitung
- 24: erster Vorratsanschluss
- 26: zweiter Kanal
- 28: elektrischer Kanal
- 30: Datenbus
- 32: Steuerleitung
- 34: Steuerleitung
- 36: Back-up-Anschluss
- 38: Back-up-Anschluss
- 40: Bremsleitung
- 42: Bremsleitung
- 44: erster Arbeitsanschluss
- 46: zweiter Arbeitsanschluss
- 48: erste Betriebsbremszylinder
- 50: zweite Betriebsbremszylinder
- 52: ABS-Drucksteuerventil
- 54: elektrische Steuerleitung
- 56: Drehzahlsensoren
- 58: elektrische Signalleitungen
- 60: Verschleißsensoren
- 62: elektrische Signalleitungen
- 64: Anhängersteuermodul
- 66: zentrales elektronisches Bremssteuergerät
- 68: erste elektromagnetische Ventileinrichtung
- 70: zweite elektromagnetische Ventileinrichtung
- 72: Einlassventil
- 74: Einlassventil
- 76: Auslassventil
- 78: Auslassventil
- 80: Back-up-Ventil
- 82: Back-up-Ventil
- 84: Relaisventil
- 86: Relaisventil
- 88: Drucksensor
- 90: Drucksensor
- 92: Modulgehäuse
- 94: Platine
- 96: erste, zweite und dritte Kommunikationsanschlüsse
- 98: Steckkontakte
- 100: Steckkontakte
- 100': Kippankerventil
- 100": Fahrzeug
- 102: Gehäuseteil
- 102': Halbschale
- 104: Steckkontakte
- 105": zentrales Druckregelmodul
- 106: Steckkontakte
- 106': Ventilraum
- 108: Druckkanal
- 108': Kippanker
- 100": Fahrzeug
- 110: Druckkanal
- 110`: Steueröffnung
- 110": Magnetventil
- 112: Gehäuseteil
- 112': Durchlass
- 114: Rahmen
- 114': Ventilsitz
- 115": Kontaktiervorrichtung
- 116: erste Achse
- 116': Dichtelement
- 116a: zweite Vorderachse
- 118: zweite Achse
- 118': Boden
- 120: weitere Achse
- 120': Spuleneinrichtung
- 120": Platine
- 120a: dritte Hinterachse
- 122: weiteres Druckregelmodul
- 122a: weiteres Druckregelmodul
- 122': Spulenkern
- 124: Steuerleitung
- 124': Spule
- 125: Gierratensensor
- 125a: Beschleunigungssensor
- 125": Kontaktelement
- 126': erste Seitenwand
- 128: Kreistrennung
- 128': zweite Seitenwand
- 130': Spulenträger
- 130": Federelement
- 131': Anschlusskontakt
- 132': erstes Ende
- 135": Platinenbefestigungselement
- 134`: zweites Ende
- 136': erstes Ankerende
- 138': Endabschnitt
- 140': Endabschnitt
- 140": Befestigungsoberfläche
- 142`: zweites Ankerende
- 145": Zentrieroberfläche
- 146': Dämpferelement
- 148': Klemmverschraubung
- 150': O-Ring
- 150": Leiterbahn
- 152: Entkopplungsabschnitt
- 154: Platinenkörper
- 156: Ausnehmung/Schlitz
- 158: restlicher Platinenkörper
- 160: Platinenbrückenabschnitt
- 162: Dämpfungsmasse
- 164: Quernut
- 166: Einkerbung

## Patentansprüche

1. Als Baueinheit ausgeführtes wenigstens einkanaliges elektro-pneumatisches Druckregelmodul (16; 105") für eine elektro-pneumatische Betriebsbremseinrichtung eines Fahrzeugs (100"), mit wenigstens einem ersten in Bezug auf einen ersten Betriebsbremsdruck elektrisch regelbaren Druckregelkanal (9), wobei
a) für den ersten Druckregelkanal (9) auf der Basis einer von wenigstens einem Druckluftvorrat (4) stammenden Arbeitsluft abhängig von einem elektrischen Bremsanforderungssignal eines elektrischen Kanals (28) eines Fußbremsventils (2) der erste Betriebsbremsdruck für wenigstens einen Betriebsbremszylinder (48, 50) der Betriebsbremseinrichtung erzeugt wird, und wobei
b) der erste Druckregelkanal (9) den ersten Betriebsbremsdruck in dem wenigstens einen Betriebsbremszylinder (48) an wenigstens einer ersten Achse (116) erzeugt, und wobei
c) das Druckregelmodul (16; 105") wenigstens Folgendes aufweist: Wenigstens einen Vorratsanschluss zum Anschließen des wenigstens einen Druckluftvorrats (4, 6), wenigstens einen ersten Arbeitsanschluss (44) des ersten Druckregelkanals (9) zum Anschließen des wenigstens einen ersten Betriebsbremszylinders (48) an der wenigstens einen ersten Achse (116), wenigstens einen ersten elektrischen Kommunikationsanschluss zum Einsteuern wenigstens von einem einen ersten Betriebsbrems-Solldruck für den ersten Druckregelkanal (9) repräsentierenden Signal, welches auf der Basis eines elektrischen Bremsanforderungssignals eines elektrischen Kanals (28) eines Fußbremsventils (2) der elektro-pneumatischen Betriebsbremseinrichtung gebildet wird, und wenigstens eine erste Entlüftung (5) des ersten Druckregelkanals (9) sowie wenigstens einen ersten Spannungsversorgungsanschluss zur Versorgung des Druckregelmoduls (16) mit elektrischer Spannung, und wobei
d) in das Druckregelmodul (16)
d1) ein elektronisches Steuergerät (66) integriert ist, welches ausgebildet ist, dass es abhängig von den an dem ersten elektrischen Kommunikationsanschluss anstehenden, den ersten Betriebsbrems-Solldruck für den ersten Druckregelkanal (9) repräsentierenden Signal ein dem ersten Soll-Betriebsbremsdruck entsprechendes erstes elektrisches Steuersignal für eine erste elektromagnetische Ventileinrichtung (68) des ersten Druckregelkanals (9) erzeugt, und
d2) die erste elektro-magnetische Ventileinrichtung (68) integriert ist, welche abhängig von dem ersten elektrischen Steuersignal aus dem Vorratsdruck des wenigstens einen Druckluftvorrats (4) einen ersten Ist-Betriebsbremsdruck an dem ersten Arbeitsanschluss (44) des ersten Druckregelkanals (9) moduliert, und
d3) wenigstens ein erster Drucksensor (88) integriert ist, welcher ein den gemessenen ersten Ist-Betriebsbremsdruck repräsentierendes erstes Druckmesssignal in das elektronische Steuergerät (66) zum Vergleich mit dem ersten Soll-Betriebsbremsdruck in das elektronische Steuergerät (66) einsteuert, wobei das elektronische Steuergerät (66) weiterhin ausgebildet ist, dass es für den ersten Druckregelkanal (9) einen Abgleich zwischen dem ersten Ist-Betriebsbremsdruck und dem ersten Soll-Betriebsbremsdruck vornimmt und abhängig von diesem Abgleich die erste elektro-magnetische Ventileinrichtung (68) derart ansteuert, dass an dem ersten Arbeitsanschluss (44) der erste Soll-Betriebsbremsdruck ansteht, wobei
e) das elektronische Steuergerät (66) eine elektrische und elektronische Bauteile tragende Platine (94; 120") aufweist, wobei in den elektrischen und elektronischen Bauteilen Routinen wenigstens für die Betriebsbremsdruckregelung wenigstens für den ersten Druckregelkanal (9) implementiert sind, **dadurch gekennzeichnet, dass**
f) auf oder an der wenigstens einen Platine (94; 120") wenigstens ein Inertialsensor (125, 125a; 110") angeordnet und mit wenigstens einigen der elektrischen und elektronischen Bauteilen auf der Platine (94; 120") derart elektrisch leitend verbunden ist, dass die Ausgangssignale des wenigstens einen Inertialsensors (125, 125a; 110") in die wenigstens einigen elektrischen und elektronischen Bauteile einsteuerbar sind, wobei
g1) das Druckregelmodul (16) Schwingungsentkopplungsmittel zum wenigstens teilweisen Entkoppeln des wenigstens einen Inertialsensors (125, 125a; 110") von Schwingungen oder Körperschall beinhaltet, welchen die Platine (94; 120") oder Bauteile des Druckregelmoduls (16; 105") im Betrieb ausgesetzt ist/sind, und die Schwingungsentkoppelungsmittel einen Entkopplungsabschnitt (152) eines Platinenkörpers (154) der Platine (94) umfassen, auf welchem der wenigstens eine Inertialsensor (125) gehalten oder angeordnet ist, wobei der Entkopplungsabschnitt (152) mittels wenigstens einer den Platinenkörper (154) der Platine (94) teilweise oder vollständig durchdringenden Ausnehmung (156) von einem restlichen Platinenkörper (158) der Platine (94) mit Ausnahme wenigstens eines Platinenbrückenabschnitts (160) getrennt ist, welcher den Entkopplungsabschnitt (152) mit dem restlichen Platinenkörper (158) insbesondere brückenartig verbindet, wobei entlang des Platinenbrückenabschnitts (160) wenigstens eine elektrische Verbindung zwischen dem wenigstens einen Inertialsensor (125) und den elektrischen und elektronischen Bauteilen auf dem restlichen Platinenkörper (158) gezogen ist, welche die Ausgangssignale des wenigstens einen Inertialsensors (125) an die elektrischen und elektronischen Bauteile leitet, oder wobei
g2) eine elektrische Kontaktierungsvorrichtung (115") zum federbaren elektrischen Kontaktieren der Platine (120") mit wenigstens einem Magnetventil (110") wenigstens der ersten elektromagnetischen Ventileinrichtung (68) vorgesehen ist, welche wenigstens ein sich von der Platine (120") bis zu dem wenigstens einen Magnetventil (110") erstreckendes Federelement (130") umfasst, durch welches einerseits die Platine (120") und das wenigstens eine Magnetventil (110") in wenigstens einem Bewegungsfreiheitsgrad gegeneinander federnd gelagert und andererseits die Platine (120") und das wenigstens eine Magnetventil (110") miteinander elektrisch leitend verbunden sind, oder wobei
g3) wenigstens ein Magnetventil der ersten elektromagnetischen Ventileinrichtung (68) durch ein Kippankerventil (100') mit einem schwenkbar ausgebildeten Kippanker (108') gebildet wird.

2. Druckregelmodul nach Anspruch 1, Buchstabe g1, **dadurch gekennzeichnet, dass** die Ausnehmung (156) wenigstens einen Schlitz im Platinenkörper (154) beinhaltet, welcher den Entkopplungsabschnitt (152) mit Ausnahme des wenigstens einen Platinenbrückenabschnitts (160) wenigstens teilweise umgibt.

3. Druckregelmodul nach Anspruch 1, Buchstabe g1, **dadurch gekennzeichnet, dass** die wenigstens eine Ausnehmung (156) wenigstens teilweise mit einer Dämpfungsmasse (162) befüllt ist.

4. Druckregelmodul nach Anspruch 1, Buchstabe g1, **dadurch gekennzeichnet, dass** der Platinenbrückenabschnitt (160) wenigstens abschnittsweise eine geringere Dicke als der restliche Platinenkörper (158) und/oder der Entkopplungsabschnitt (152) aufweist.

5. Druckregelmodul nach Anspruch 1, Buchstabe g2, **dadurch gekennzeichnet, dass** der wenigstens eine Bewegungsfreiheitsgrad einen translatorischen und/oder einen rotatorischen Bewegungsfreiheitsgrad beinhaltet.

6. Druckregelmodul nach Anspruch 1, Buchstabe g2, **dadurch gekennzeichnet, dass** das wenigstens eine Federelement (130") eine Schraubenfeder beinhaltet, welche zwischen der Platine (120") und dem wenigstens einen Magnetventil (110") eingespannt gelagert ist.

7. Druckregelmodul nach Anspruch 1, Buchstabe g2, **dadurch gekennzeichnet, dass** die wenigstens eine Platine (120") an einer ins Innere des Druckregelmoduls (105") weisenden Fläche eines Deckels des Druckregelmoduls (105") gekontert ist und beim Aufsetzen des Deckels auf ein Modulgehäuse (92) des Druckregelmoduls (105") das wenigstens eine Federelement (130") zwischen der Platine (120") und dem wenigstens einen Magnetventil (110") vorgespannt wird.

8. Druckregelmodul nach Anspruch 1, Buchstabe g2, **dadurch gekennzeichnet, dass** das wenigstens eine Federelement (130") an der Platine (120") und/oder an dem wenigstens einen Magnetventil (110") zentriert ist.

9. Druckregelmodul nach Anspruch 1, Buchstabe g3, **dadurch gekennzeichnet, dass** das Kippankerventil (100') wenigstens Folgendes umfasst:
a) eine Halbschale (102'),
b) ein Deckelelement (104'), welches die Halbschale (102') fluiddicht abdeckt, um einen Ventilraum (106') zu bilden, wobei das Deckelelement (104') zumindest eine Steueröffnung (110') und einen Durchlass (112') zum Leiten eines Fluids durch den Ventilraum (106') aufweist;
c) einen magnetisch leitenden Kippanker (108') mit zumindest einem Dichtelement (116'), wobei der Kippanker (108') im Ventilraum (106') zwischen einer Öffnungsposition und einer Schließposition bewegbar angeordnet ist, wobei das Dichtelement (110') die Steueröffnung (110') in der Schließposition fluiddicht verschließt und in der Öffnungsposition freigibt; und
d) eine Spuleneinrichtung (120`), die an einem dem Deckelelement (104') gegenüberliegenden Boden (118') der Halbschale (102') außerhalb des Ventilraums (106') angeordnet und ausgebildet ist, um den Kippanker (108') zwischen der Öffnungsposition und der Schließposition zu bewegen, wobei
e) die Spuleneinrichtung (120') einen magnetisch leitenden Spulenkern (122') und zumindest eine um den Spulenkern (122') gewickelte Spule (124') aufweist, wobei der Spulenkern (122') in Längsrichtung im Wesentlichen parallel zum Boden (118') angeordnet ist.

10. Druckregelmodul nach Anspruch 1, Buchstabe g3, **dadurch gekennzeichnet, dass** zumindest ein Dämpferelement (146`), das an einer dem Boden (118') zugewandten Seite des Kippankers (108') oder an einer dem Kippanker (108') zugewandten Seite des Bodens (118') angeordnet ist, um beim Bewegen des Kippankers (108') in die Öffnungsposition eine mechanische Schwingung des Kippankers (108'), insbesondere eine Vibration und/oder eine Erschütterung und/oder einen Stoß, zu dämpfen, insbesondere wobei das Dämpferelement (146') insbesondere unter Verwendung eines Klebematerials an dem Kippanker (108') oder dem Boden (118') befestigt ist.

11. Druckregelmodul nach Anspruch 1, Buchstabe g3, **dadurch gekennzeichnet, dass** es durch ein in einer Baueinheit ausgeführtes wenigstens zweikanaliges elektro-pneumatisches zentrales Druckregelmodul (16; 105") für die elektro-pneumatische Betriebsbremseinrichtung des Fahrzeugs (100") gebildet wird, mit wenigstens zwei in Bezug auf einen Bremsdruck elektrisch regelbaren Druckregelkanälen (9, 11), von welchen ein elektrisch regelbarer Druckregelkanal der erste Druckregelkanal (9) und von welchen ein weiterer elektrisch regelbarer Druckregelkanal ein zweiter elektrisch regelbarer Druckregelkanal (11) ist, wobei
a) für die elektrisch regelbaren Druckregelkanäle (9, 11) auf der Basis der von dem wenigstens einen Druckluftvorrat (4, 6) stammenden Arbeitsluft abhängig von dem elektrischen Bremsanforderungssignal des elektrischen Kanals (28) des Fußbremsventils (2) jeweils ein geregelter Betriebsbremsdruck für den wenigstens einen Betriebsbremszylinder (48, 50) der Betriebsbremseinrichtung erzeugt wird, und wobei
b) der zweite Druckregelkanal (11) einen zweiten geregelten Betriebsbremsdruck in Betriebsbremszylindern (50) an wenigstens einer zweiten Achse (118) erzeugt, und wobei
c) das Druckregelmodul (16; 105") wenigstens Folgendes aufweist: Wenigstens den ersten elektrischen Kommunikationsanschluss zum Einsteuern wenigstens von einem einen zweiten Betriebsbrems-Solldruck für den zweiten Druckregelkanal (11) repräsentierenden Signal, welches auf der Basis des elektrischen Bremsanforderungssignals des elektrischen Kanals (28) des Fußbremsventils (2) der elektro-pneumatischen Betriebsbremseinrichtung gebildet wird, wenigstens einen zweiten Arbeitsanschluss (46) des zweiten Druckregelkanals (11) zum Anschließen wenigstens eines Betriebsbremszylinders (48) der wenigstens einen zweiten Achse (118), eine zweite Entlüftung (7) für den zweiten Druckregelkanal (11), und wobei
d) in das Druckregelmodul (16)
d1) das elektronische Steuergerät (66) integriert ist, welches als zentrales elektronisches Bremssteuergerät der Betriebsbremseinrichtung derart ausgebildet ist, dass es abhängig von dem an dem ersten elektrischen Kommunikationsanschluss anstehenden Signal für den zweiten Druckregelkanal (11) ein einem zweiten Soll-Betriebsbremsdruck entsprechendes zweites elektrisches Steuersignal für eine zweite, von der ersten elektromagnetischen Ventileinrichtung (68) unabhängige elektromagnetische Ventileinrichtung (70) des zweiten Druckregelkanals (11) erzeugt, und
d2) die zweite elektro-magnetische Ventileinrichtung (70) integriert ist, welche abhängig von dem zweiten elektrischen Steuersignal aus dem Vorratsdruck des wenigstens einen Druckluftvorrats (4, 6) einen zweiten Ist-Betriebsbremsdruck für den zweiten Arbeitsanschluss (46) des zweiten Druckregelkanals (11) moduliert, und
d3) wenigstens ein zweiter Drucksensor (90) integriert ist, wobei der zweite Drucksensor (90) ein den gemessenen zweiten Ist-Betriebsbremsdruck repräsentierendes zweites Druckmesssignal in das elektronische Steuergerät (66) zum Vergleich mit dem zweiten Soll-Betriebsbremsdruck einsteuert, wobei dann das elektronische Steuergerät (66) weiterhin ausgebildet ist, dass es für den zweiten Druckregelkanal (11) einen Abgleich zwischen dem zweiten Ist-Betriebsbremsdruck und dem zweiten Soll-Betriebsbremsdruck vornimmt und abhängig von diesem Abgleich die zweite elektro-magnetische Ventileinrichtung (70) derart ansteuert, dass an dem zweiten Arbeitsanschluss (46) der zweite Soll-Betriebsbremsdruck ansteht, wobei
e) das elektronische Steuergerät (66) weiterhin ausgebildet ist, dass es abhängig von Ausgangssignalen des wenigstens einen Inertialsensors (125, 125a) Stellsignale in die erste elektro-magnetische Ventileinrichtung (68) und/oder in die zweite elektro-magnetische Ventileinrichtung (70) einsteuert, um eine einer Fahrdynamik- oder Fahrstabilitätsregelung entsprechende Bremsung durch wenigstens einen Betriebsbremszylinder (48, 50) durchzuführen, und wobei
e) das elektronische Steuergerät (66) die elektrische und elektronische Bauteile tragende Platine (94; 120") aufweist, wobei in den elektrischen und elektronischen Bauteilen Routinen wenigstens für die Bremsdruckregelung innerhalb des ersten und zweiten Druckregelkanals (9, 11) und für die Fahrdynamik- oder Fahrstabilitätsregelung implementiert sind, wobei
f) die Ausgangssignale des wenigstens einen Inertialsensors (125, 125a) in die wenigstens einigen elektrischen und elektronischen Bauteile zur Durchführung der Fahrdynamik- oder Fahrstabilitätsregelung einsteuerbar sind.

12. Druckregelmodul nach Anspruch 1, Buchstabe g3 und nach Anspruch 11, **dadurch gekennzeichnet, dass** die elektrische Kontaktierungsvorrichtung (115") zum federbaren elektrischen Kontaktieren der Platine (120") mit wenigstens einem Magnetventil (110") der zweiten elektromagnetischen Ventileinrichtung (70) vorgesehen ist.

13. Druckregelmodul nach Anspruch 1, Buchstabe g3 und nach Anspruch 11, **dadurch gekennzeichnet, dass** wenigstens ein Magnetventil der zweiten elektromagnetischen Ventileinrichtung (70) durch ein Kippankerventil (100') mit einem schwenkbar ausgebildeten Kippanker (108') gebildet wird.

14. Druckregelmodul nach Anspruch 1, Buchstabe g3, **dadurch gekennzeichnet, dass** zur Ausbildung von pneumatisch kreisgetrennten Druckregelkanälen (9, 11) für den ersten Druckregelkanal (9) ein eigener erster Vorratsdruckanschluss (24) und für den zweiten Druckregelkanal (11) ein eigener, in Bezug auf den ersten Vorratsdruckanschluss (24) separater zweiter Vorratsdruckanschluss (14) vorgesehen ist, wobei an den ersten Vorratsdruckanschluss (24) wenigstens ein erster Druckluftvorrat (4) und an den zweiten Vorratsdruckanschluss (14) wenigstens ein in Bezug auf den ersten Druckluftvorrat (4) separater zweiter Druckluftvorrat (6) anschließbar ist, wobei die pneumatischen Strömungswege des ersten Druckregelkanals (9) ausgehend von dem ersten Vorratsdruckanschluss (24) bis zu dem ersten Arbeitsanschluss (44) von den pneumatischen Strömungswegen des zweiten Druckregelkanals (11) ausgehend von dem zweiten Vorratsdruckanschluss (14) bis zu dem zweiten Arbeitsanschluss (46) pneumatisch getrennt ausgebildet sind.

15. Druckregelmodul nach Anspruch 14, **dadurch gekennzeichnet, dass** ein erster Back-up-Anschluss (36) eines ersten pneumatischer Back-up-Kreises und ein zweiter Back-up-Anschluss (38) eines zweiten pneumatischen Back-up-Kreises vorgesehen sind, wobei in den ersten Back-up-Anschluss (36) ein erster, von dem ersten Druckluftvorrat (4) abgeleiteter und von einem ersten pneumatischen Kanal des Fußbremsventils (2) ausgesteuerter Back-up-Druck und in den zweiten zweiter Back-up-Anschluss (38) ein zweiter, von dem zweiten Druckluftvorrat (6) abgeleiteter und von einem zweiten pneumatischen Kanal des Fußbremsventils (2) ausgesteuerter Back-up-Druck einsteuerbar sind, wobei mit Hilfe des ersten Back-up-Kreises und des zweiten Back-up-Kreises bei einem Ausfall oder einer Störung der kreisgetrennt regelbaren elektrischen Druckregelkanäle die Bremsdrücke an den Arbeitsanschlüssen (44, 46) gebildet werden.

16. Druckregelmodul nach Anspruch 15, **dadurch gekennzeichnet, dass** ein erster pneumatischer Backup-Strömungsweg des ersten Backup-Kreises ausgehend von dem ersten Back-up-Anschluss (36) bis zu dem ersten Arbeitsanschluss (44) in Bezug auf einen zweiten pneumatischen Backup-Strömungsweg des zweiten Backup-Kreises ausgehend von dem zweiten Back-up-Anschluss (36) bis zu dem zweiten Arbeitsanschluss (46) pneumatisch getrennt ausgebildet ist.

17. Druckregelmodul nach Anspruch 16, **dadurch gekennzeichnet, dass** in den ersten pneumatischen Backup-Strömungsweg ein erstes elektropneumatisches Back-up-Ventil (80) der ersten elektromagnetischen Ventileinrichtung (68) und in den zweiten pneumatischen Backup-Strömungsweg ein zweites elektropneumatisches Back-up-Ventil (82) der zweiten elektromagnetischen Ventileinrichtung (70) geschaltet ist, wobei die elektropneumatischen Back-up-Ventile (80, 82) ausgebildet und von dem zentralen elektronischen Bremssteuergerät (66) angesteuert sind, dass sie bei intakten elektrischen Druckregelkanälen den ersten und zweiten Backup-Strömungsweg sperren und bei dem Fehler oder der Störung der elektrischen Druckregelkanäle den ersten und zweiten Backup-Strömungsweg durchschalten.

18. Druckregelmodul nach einem der Ansprüche 11 bis 17, **dadurch gekennzeichnet, dass** die Fahrdynamik- oder Fahrstabilitätsregelung wenigstens eine der folgenden Regelungen beinhaltet: Eine Fahrstabilitätsregelung (ESP), eine Bremsschlupfregelung (ABS), eine Antriebsschlupfregelung (ASR), eine Überrollschutzregelung (RPS), eine Regelung zum wenigstens teilautonomen Fahren.

19. Druckregelmodul nach einem der Ansprüche 11 bis 18, **dadurch gekennzeichnet, dass** es wenigstens einen zweiten elektrischen Spannungsversorgungsanschluss zur elektrischen Spannungsversorgung wenigstens eines weiteren Druckregelmoduls (122, 122a) und wenigstens einen zweiten Kommunikationsanschluss (96) zur Kommunikation mit dem wenigstens einen weiteren Druckregelmodul (122, 122a) aufweist, wobei
a) das wenigstens eine weitere Druckregelmodul (122, 122a) den Bremsdruck in angeschlossenen Betriebsbremszylindern wenigstens einer weiteren Achse (116a, 120, 120a) selbständig regelt, und wobei
b) das zentrale elektronische Bremssteuergerät (66) der Betriebsbremseinrichtung abhängig von den am ersten Kommunikationsanschluss (96) anstehenden elektrischen Bremsanforderungssignalen in den zweiten Kommunikationsanschluss (96) wenigstens ein einem Soll-Bremsdruck für die wenigstens eine weitere Achse (116a, 120, 120a) entsprechendes drittes elektrisches Steuersignal für das wenigstens eine weitere Druckregelmodul (122, 122a) einsteuert, damit das weitere Druckregelmodul (122, 122a) den Bremsdruck in wenigstens einem dort angeschlossenen Betriebsbremszylinder einregelt.

20. Druckregelmodul nach einem der Ansprüche 11 bis 19, **dadurch gekennzeichnet, dass** es wenigstens einen dritten elektrischen Spannungsversorgungsanschluss zur Spannungsversorgung wenigstens eines Anhängersteuermoduls (64) und wenigstens einen dritten Kommunikationsanschluss (96) zur Kommunikation mit dem Anhängersteuermodul (64) aufweist, wobei
a) das Anhängersteuermodul (64) den Bremsdruck in Betriebsbremszylindern eines Anhängers mit Hilfe einer integrierten elektronischen Anhängerbremssteuerelektronik regelt, und wobei
b) das zentrale elektronische Bremssteuergerät (66) der Betriebsbremseinrichtung abhängig von den am ersten elektrischen Kommunikationsanschluss (96) anstehenden elektrischen Bremsanforderungssignalen in den dritten Kommunikationsanschluss (96) ein einem Soll-Bremsdruck entsprechendes viertes elektrisches Steuersignal für das Anhängersteuermodul (64) einsteuert, um den Bremsdruck in an das Anhängersteuermodul (64) angeschlossenen Betriebsbremszylindern des Anhängers zu regeln.

21. Druckregelmodul nach einem der Ansprüche 11 bis 19, **dadurch gekennzeichnet, dass** es wenigstens einen Steueranschluss für Magnetventile eines Anhängersteuermoduls (64) und wenigstens einen Sensoranschluss für wenigstens einen Drucksensor des Anhängersteuermoduls (64) aufweist, wobei das zentrale elektronische Bremssteuergerät (66) ein viertes elektrisches Steuersignal in den Steueranschluss für die Magnetventile des Anhängersteuermoduls (64) einsteuert, um den Bremsdruck in Betriebsbremszylindern eines Anhängers zu regeln.

22. Druckregelmodul nach einem der Ansprüche 11 bis 21, **dadurch gekennzeichnet, dass** es Endstufen (17) für ABS-Drucksteuerventile (52) aufweist, welche vorgesehen sind, um zwischen den ersten Arbeitsanschluss (44) der ersten Achse (116) und die Betriebsbremszylinder (48) der ersten Achse (116) und zwischen den zweiten Arbeitsanschluss (44) der zweiten Achse (118) und die Betriebsbremszylinder (50) der zweiten Achse (118) geschaltet zu werden, wobei in dem elektronischen Steuergerät (66) Routinen implementiert sind, durch welche Steuersignale für die ABS-Drucksteuerventile (52) ausgesteuert werden, durch welche mit Hilfe der ABS-Drucksteuerventile (52) auf der Basis der in den Druckregelkanälen der ersten Achse (116) und der zweiten Achse (118) achsweise geregelten Betriebsbremsdrücke jeweils radindividuelle Betriebsbremsdrücke an der ersten Achse (116) und an der zweiten Achse (118) insbesondere zur Durchführung der Fahrdynamikregelung erzeugt werden.

23. Druckregelmodul nach einem der Ansprüche 11 bis 22, **dadurch gekennzeichnet, dass** die erste elektro-magnetische Ventileinrichtung (68) und die zweite elektro-magnetische Ventileinrichtung (70) jeweils eine von einer elektromagnetischen Einlass-/Auslassventilkombination pneumatisch gesteuerte Relaisventileinrichtung (84, 86) aufweisen, wobei die Relaisventileinrichtungen (84, 86) ausgangsseitig mit den ersten und zweiten Arbeitsanschlüssen (44, 46) und die elektromagnetischen Einlass-/Auslassventilkombinationen von dem elektronischen Steuergerät (66) gesteuert sind.

24. Druckregelmodul nach einem der vorhergehenden Ansprüche, **dadurch gekennzeichnet, dass** der Inertialsensor (125, 125a; 110") wenigstens einen der folgenden Sensoren umfasst: Einen Beschleunigungssensor, welcher die Beschleunigung in einer Achse, in zwei oder in drei Achsen (x, y, z) misst und/oder einen Drehratensensor.

25. Druckregelmodul nach einem der vorhergehenden Ansprüche, **dadurch gekennzeichnet, dass** es wenigstens einen Fahrzeugdatenbusanschluss zum Anschluss an einen Fahrzeugdatenbus aufweist.

26. Druckregelmodul nach einem der vorhergehenden Ansprüche, **dadurch gekennzeichnet, dass** es Eingänge für Raddrehzahlsensoren (56) der Räder des Fahrzeugs und/oder für Bremsen-Verschleißsensoren (60) aufweist.

27. Elektro-pneumatische Betriebsbremseinrichtung eines Fahrzeugs (100") mit wenigstens einem elektrisch regelbaren Druckregelkanal beinhaltend wenigstens ein Druckregelmodul (16; 105") nach wenigstens einem der vorhergehenden Ansprüche.

28. Betriebsbremseinrichtung nach Anspruch 27, **dadurch gekennzeichnet, dass** an den wenigstens einen ersten Kommunikationsanschluss (96) des Druckregelmoduls (16; 105") der elektrische Kanal (28) des Fußbremsventils (2) oder ein anderes Druckregelmodul angeschlossen ist.

29. Betriebsbremseinrichtung nach Anspruch 27 oder 28, **dadurch gekennzeichnet, dass** an den wenigstens einen ersten Kommunikationsanschluss (96) des Druckregelmoduls (16; 105") ein Steuergerät eines Systems zum wenigstens teilautonomen Fahren angeschlossen ist, welches über den wenigstens einen ersten Kommunikationsanschluss (96) Bremsanforderungssignale in das Druckregelmodul (16; 105") einsteuert.

30. Betriebsbremseinrichtung nach einem der Ansprüche 27 bis 29, **dadurch gekennzeichnet, dass** an einen zweiten Kommunikationsanschluss (96) des Druckregelmoduls (16; 105") wenigstens ein weiteres Druckregelmodul (122, 122a) angeschlossen ist, wobei das wenigstens eine weitere Druckregelmodul (122, 122a) eines der folgenden Druckregelmodule ist: Ein 1-Kanal-Druckregelmodul, welches an seitenverschiedenen Rädern wenigstens einer Achse denselben Bremsdruck einregelt, ein 2-Kanal-Druckregelmodul, welches an seitenverschiedenen Rädern wenigstens einer Achse einen seitenindividuellen Bremsdruck einregelt.

31. Betriebsbremseinrichtung nach Anspruch 30, **dadurch gekennzeichnet, dass** das wenigstens eine weitere Druckregelmodul (122, 122a) den Bremsdruck in angeschlossenen Betriebsbremszylindern wenigstens einer weiteren Achse (116a, 120, 120a) selbständig regelt, wobei das elektronische Steuergerät (66) abhängig von dem am ersten Kommunikationsanschluss (96) anstehenden Signal in den zweiten Kommunikationsanschluss (96) wenigstens ein dem Soll-Bremsdruck für die wenigstens eine weitere Achse (116a, 120, 120a) entsprechendes drittes elektrisches Steuersignal für das wenigstens eine weitere Druckregelmodul (122, 122a) einsteuert, damit das weitere Druckregelmodul (122, 122a) den Bremsdruck in den angeschlossenen Betriebsbremszylindern einregelt.

32. Betriebsbremseinrichtung nach einem der Ansprüche 27 bis 31, **dadurch gekennzeichnet, dass** an einen dritten Kommunikationsanschluss (96) des Druckregelmoduls (16; 105") ein den Bremsdruck in Betriebsbremszylindern eines Anhängers mit Hilfe einer elektronischen integrierten Anhängersteuerelektronik regelndes Anhängersteuermodul (64) angeschlossen ist.

33. Betriebsbremseinrichtung nach einem der Ansprüche 27 bis 32, **dadurch gekennzeichnet, dass** an den ersten Vorratsdruckanschluss (24) des Druckregelmoduls (16; 105") wenigstens ein erster Druckluftvorrat (4) und an den zweiten Vorratsdruckanschluss (14) des Druckregelmoduls (16; 105") wenigstens ein in Bezug auf den ersten Druckluftvorrat (4) separater zweiter Druckluftvorrat (6) angeschlossen ist.

34. Fahrzeug (100") mit einer elektro-pneumatischen Betriebsbremseinrichtung nach einem der Ansprüche 27 bis 33.

## Claims

1. An at least single-channel electro-pneumatic pressure control module (16; 105") in the form of an assembly unit for an electro-pneumatic service-brake device of a vehicle (100"), having at least one first pressure control channel (9) that can be electrically controlled in respect of a first service-brake pressure,
a) for the first pressure control channel (9), the first service-brake pressure being generated for at least one service-brake cylinder (48, 50) of the service-brake device based on working air from at least one compressed-air reservoir (4) and dependent on an electrical brake-request signal of an electrical channel (28) of a foot-brake valve (2); and
b) the first pressure control channel (9) generating the first service-brake pressure in the at least one service-brake cylinder (48) on at least one first axle (116); and
c) the pressure control module (16; 105") having at least the following: at least one reservoir port for connecting the at least one compressed-air reservoir (4, 6); at least one first working port (44) of the first pressure control channel (9) for connecting the at least one first service-brake cylinder (48) on the at least one first axle (116); at least one first electrical communications port for sending at least one signal representing a first set service-brake pressure for the first pressure control channel (9) and generated based on an electrical brake-request signal of an electrical channel (28) of a foot-brake valve (2) of the electro-pneumatic service-brake device; at least one first air vent (5) of the first pressure control channel (9); and at least one first voltage supply port for supplying the pressure control module (16) with an electric voltage; and
d) there being integrated in the pressure control module (16):
d1) an electronic control device (66) that is configured such that, for a first electro-magnetic valve device (68) of the first pressure control channel (9), it generates a first electrical control signal corresponding to the first set service-brake pressure dependent on the signal present at the first electrical communications port and representing the first set service-brake pressure for the first pressure control channel (9); and
d2) the first electro-magnetic valve device (68) that modulates a first actual service-brake pressure at the first working port (44) of the first pressure control channel (9) dependent on the first electrical control signal from the reservoir pressure of the at least one compressed-air reservoir (4); and
d3) at least one first pressure sensor (88) that sends a first pressure measurement signal representing the measured first actual service-brake pressure to the electronic control device (66) for comparison with the first set service-brake pressure, the electronic control device (66) being further configured so as to carry out a reconciliation of the first actual service-brake pressure and the first set service-brake pressure for the first pressure control channel (9) and, dependent on this reconciliation, actuate the first electro-magnetic valve device (68) such that the first set service-brake pressure is present at the first working port (44);
e) the electronic control device (66) having a printed circuit board (94; 120") containing electrical and electronic components, routines for at least the service-brake pressure control system for at least for the first pressure control channel (9) being implemented in these electrical and electronic components; **characterised in that:**
f) at least one inertial sensor (125, 125a; 110") is arranged on or at the at least one printed circuit board (94; 120") and connected in an electroconductive manner to at least some of the electrical and electronic components on the printed circuit board (94; 120") such that the output signals of the at least one inertial sensor (125, 125a; 110") can be sent to these at least some electrical and electronic components;
g1) the pressure control module (16) containing oscillation-decoupling means for at least partially decoupling the at least one inertial sensor (125, 125a; 110") from oscillations or impact sound to which the printed circuit board (94; 120") or components of the pressure control module (16; 105") are exposed during operation, and the oscillation-decoupling means comprising a decoupling portion (152) of a printed circuit board body (154) of the printed circuit board (94) on which the at least one initial sensor (125) is held or arranged, this decoupling portion (152) being separated, by means of at least one cut-out (156) that passes partially or completely through the printed circuit board body (154) of the printed circuit board (94), from the remainder of the printed circuit board body (158) of the printed circuit board (94) with the exception of at least one printed circuit board bridge portion (160) that connects the decoupling portion (152) to the remainder of the printed circuit board body (158), in particular in the manner of a bridge, at least one electrical connection between the at least one inertial sensor (125) and the electrical and electronic components on the remainder of the printed circuit board body (158) running along the printed circuit board bridge portion (160) and sending the output signals of the at least one inertial sensor (125) to the electrical and electronic components, or
g2) there being provided an electrical contact device (115") for making a resilient electrical contact between the printed circuit board (120") and at least one solenoid valve (110") of at least the first electromagnetic valve device (68), this electrical contact device (115") comprising at least one spring element (130") that extends from the printed circuit board (120") to the at least one solenoid valve (110") and serves, on one hand, to spring mount the printed circuit board (120") and the at least one solenoid valve (110") in at least one degree of freedom of movement in relation to one another and, on the other, to connect the printed circuit board (120") and the at least one solenoid valve (110") to one another in an electroconductive manner, or
g3) at least one solenoid valve of the first electromagnetic valve device (68) taking the form of a tilting armature valve (100') having a pivotably configured tilting armature (108').

2. A pressure control module according to claim 1, letter g1, **characterised in that** the cut-out (156) includes at least one slot in the printed circuit board body (154) that at least partially surrounds the decoupling portion (152) with the exception of the at least one printed circuit board bridge portion (160).

3. A pressure control module according to claim 1, letter g1, **characterised in that** the at least one cut-out (156) is at least partially filled with a damping mass (162).

4. A pressure control module according to claim 1, letter g1, **characterised in that** at least certain portions of the printed circuit board bridge portion (160) have a smaller thickness than the remainder of the printed circuit board body (158) and/or the decoupling portion (152).

5. A pressure control module according to claim 1, letter g2, **characterised in that** the at least one degree of freedom of movement includes a translational and/or rotary degree of freedom of movement.

6. A pressure control module according to claim 1, letter g2, **characterised in that** at least one spring element (130") contains a helical spring that is mounted by means of clamping between the printed circuit board (120") and the at least one solenoid valve (110").

7. A pressure control module according to claim 1, letter g2, **characterised in that** the at least one printed circuit board (120") is secured on a face of a cover of the pressure control module (105") that faces into the interior of the pressure control module (105") and that when the cover is placed on a module housing (92) of the pressure control module (105") the at least one spring element (130") is pretensioned between the printed circuit board (120") and the at least one solenoid valve (110").

8. A pressure control module according to claim 1, letter g2, **characterised in that** the at least one spring element (130") is centred on the printed circuit board (120") and/or on the at least one solenoid valve (110").

9. A pressure control module according to claim 1, letter g3, **characterised in that** the tilted armature valve (100') comprises at least the following:
a) a half shell (102');
b) a cover element (104') that covers the half shell (102') in a fluid-tight manner so as to form a valve chamber (106'), the cover element (104') having at least one control aperture (110') and a passage (112') for conveying a fluid through the valve chamber (106');
c) a magnetically conducting tilting armature (108') having at least one sealing element (116'), this tilting armature (108') being arranged in the valve chamber (106') so as to be movable between an opening position and a closing position, the sealing element (110') closing the control aperture (110') in a fluid-tight manner in the closing position and opening it in the opening position;
d) a coil device (120') that is arranged on a base (118') of the half shell (102') outside the valve chamber (106') and opposite the cover element (104') and configured so as to move the tilting armature (108') between the opening position and the closing position;
e) the coil device (102') having a magnetically conducting coil core (122') and at least one coil (124') wound about the coil core (122'), in the longitudinal direction the coil core (122') being arranged substantially parallel to the base (118').

10. A pressure control module according to claim 1, letter g3, **characterised in that** at least one damper element (146') is arranged on a side of the tilting armature (108') facing the base (118') or on a side of the base (118') facing the tiling armature (118') so as to dampen a mechanical oscillation, in particular a vibration and/or a shock and/or an impact, of the tilting armature (108') as the tilting armature (108') is moved to the opening position, in particular the damper element (146') being fastened to the tilting armature (108') or to the base (118'), in particular using an adhesive material.

11. A pressure control module according to claim 1, letter g3, **characterised in that** it takes the form of an at least dual-channel central electro-pneumatic pressure control module (16; 105") in the form of an assembly unit for the electro-pneumatic service-brake device of the vehicle (100"), having at least two pressure control channels (9) that can be electrically controlled in respect of a brake pressure, one of these electrically controllable pressure control channels being the first pressure control channel (9) and another of these electrically controllable pressure control channels being the second pressure control channel (11),
a) for each of the electrically controllable pressure control channels (9, 11), a controlled service-brake pressure for the at least one service-brake cylinder (48, 50) of the service-brake device being generated based on the working air from at least one compressed-air reservoir (4, 6) dependent on the electrical brake-request signal of the electrical channel (28) of a foot-brake valve (2); and
b) the second pressure control channel (11) generating a second controlled service-brake pressure in service-brake cylinders (50) on at least one second axle (116); and
c) the pressure control module (16; 105") having at least the following: at least the first electrical communications port for sending at least one signal representing a second set service-brake pressure for the second pressure control channel (11) and generated based on the electrical brake-request signal of the electrical channel (28) of a foot-brake valve (2) of the electro-pneumatic service-brake device; at least one second working port (46) of the second pressure control channel (11) for connecting at least one service-brake cylinder (48) of the at least one second axle (116); and a second air vent (7) for the second pressure control channel (11); and
d) there being integrated in the pressure control module (16):
d1) the electronic control device (66) that is configured as a central electronic brake control device of the service-brake device such that, for a second electro-magnetic valve device (70) of the second pressure control channel (9) independent of the first electromagnetic valve device (68), it generates a second electrical control signal corresponding to a second set service-brake pressure dependent on the signal for the second pressure control channel (11) present at the first electrical communications port;
d2) the second electro-magnetic valve device (70) that modulates a second actual service-brake pressure for the second working port (46) of the second pressure control channel (11) dependent on the second electrical control signal from the reservoir pressure of the at least one compressed-air reservoir (4, 6); and
d3) at least one second pressure sensor (90), this second pressure sensor (90) sending a second pressure measurement signal representing the measured second actual service-brake pressure to the electronic control device (66) for comparison with the second set service-brake pressure, the electronic control device (66) being further being configured so as to carry out a reconciliation of the second actual service-brake pressure and the second set service-brake pressure for the second pressure control channel (11) and, dependent on this reconciliation, actuate the second electro-magnetic valve device (70) such that the second set service-brake pressure is present at the second working port (46);
e) the electronic control device (66) further being configured so as to send actuating signals to the first electro-magnetic valve device (68) and/or to the second electro-magnetic valve device (70) dependent on output signals of the at least one inertial sensor (125, 125a) so as to carry out braking according to a vehicle dynamics or driving stability control system by means of at least one service-brake cylinder (48, 50); and
f) the electronic control device (66) having the printed circuit board (94; 120") containing electrical and electronic components, routines for at least controlling the brake pressure within the first and the second pressure control channels (9, 11) and for the vehicle dynamics or driving stability control system being implemented in these electrical and electronic components;
g) it being possible to send the output signals of the at least one inertial sensor (125, 125a) to the at least some electrical and electronic components so as to carry out vehicle dynamics and driving stability control.

12. A pressure control module according to claim 1, letter g3, and according to claim 11, **characterised in that** the electrical contact device (115") is provided to make a resilient electrical contact between the printed circuit board (120") and at least one solenoid valve (110") of the second electro-magnetic valve device (70).

13. A pressure control module according to claim 1, letter g3, and according to claim 11, **characterised in that** at least one solenoid valve of the second electro-magnetic valve device (70) takes the form of a tilting armature valve (100') having a pivotably configured tilting armature (108').

14. A pressure control module according to claim 1, letter g3, **characterised in that,** in order to form pressure control channels (9, 11) having separate pneumatic circuits, a dedicated first reservoir pressure port (24) is provided for the first pressure control channel (9) and a dedicated second reservoir pressure port (14) separate from the first reservoir pressure port (24) is provided for the second pressure control channel (11), it being possible to connect at least one first compressed-air reservoir (4) to the first reservoir pressure port (24) and at least one second compressed-air reservoir (6) separate from the first compressed-air reservoir (4) to the second reservoir pressure port (14), the pneumatic flow paths of the first pressure control channel (9) that run from the first reservoir pressure port (24) to the first working port (44) being configured so as to be pneumatically separate from the pneumatic flow paths of the second pressure control channel (11) that run from the second reservoir pressure port (14) to the second working port (46).

15. A pressure control module according to claim 14, **characterised in that** a first backup port (36) of a first pneumatic backup circuit and a second backup port (38) of a second pneumatic backup circuit are provided, it being possible to send to the first backup port (36) a first backup pressure taken from the first compressed-air reservoir (4) and triggered by a first pneumatic channel of the foot-brake valve (2) and to send to the second backup port (38) a second backup pressure taken from the second compressed-air reservoir (6) and triggered by a second pneumatic channel of the foot-brake valve (2), the brake pressures at the working ports (44, 46) being created with the aid of the first backup circuit and the second backup circuit in the event of a failure or malfunction of the electric pressure control channels, which can be controlled as separate circuits,.

16. A pressure control module according to claim 15, **characterised in that** a first pneumatic backup flow path of the first backup circuit running from the first backup port (36) to the first working port (44) is configured so as to be pneumatically separate from a second pneumatic backup flow path of the second backup circuit running from the second backup port (38) up to the second working port (46).

17. A pressure control module according to claim 16, **characterised in that** arranged in the first electro-pneumatic backup flow path is a first electro-pneumatic backup valve (80) of the first electro-magnetic valve device (68) and arranged in the second pneumatic backup flow path is a second electro-pneumatic backup valve (82) of the second electro-magnetic valve device (70), the electro-pneumatic backup valves (80, 82) being configured and actuated by the central electronic brake control device (66) such that they block the first and the second backup flow paths when the electrical pressure control channels are intact, and open the first and the second backup flow paths in the event of an error or malfunction of the electric pressure control channels.

18. A pressure control module according to any one of claims 11 to 17, **characterised in that** the vehicle dynamics or driving stability control system contains at least one of the following programs: an electronic stability program (ESP), an anti-lock braking system (ABS), a traction control system (TCS), a rollover protection system (RPS) or a control system for at least partially autonomous driving.

19. A pressure control module according to any one of claims 11 to 18, **characterised in that** it has at least one second electrical voltage supply port for supplying an electric voltage to at least one further pressure control module (122, 122a), and at least one second communications port (96) for communicating with the at least one further pressure control module (122, 122a),
a) the at least one further pressure control module (122, 122a) independently controlling the brake pressure in connected service-brake cylinders of at least one further axle (116a, 120, 120a), and
b) the central electronic brake control device (66) of the service-brake device sending at least one third electrical control signal corresponding to a set brake pressure for the at least one further axle (116a, 120, 120a) for the at least one further pressure control module (122, 122a) to the second communications port (96) depending on the electrical brake-request signals present at the first communications port (96) so that the further pressure control module (122, 122a) sets the brake pressure in at least one service-brake cylinder connected to it.

20. A pressure control module according to any one of claims 11 to 19, **characterised in that** it has at least one third electrical voltage supply port for supplying a voltage to at least one trailer control module (64) and at least one third communications port (96) for communicating with the trailer control module (64),
a) the trailer control module (64) controlling the brake pressure in service-brake cylinders of a trailer with the aid of an integrated electronic trailer brake control system, and
b) the central electronic brake control device (66) of the service-brake device sending a fourth electric control signal corresponding to a set brake pressure for the trailer control module (64) to the third electric communications port (96) dependent on the electrical brake-request signals present at the first electrical communications port (96) so as to control the brake pressure in service-brake cylinders of the trailer connected to the trailer control module (64).

21. A pressure control module according to any one of claims 11 to 19, **characterised in that** it has at least one control port for solenoid valves of a trailer control module (64) and at least one sensor port for at least one pressure sensor of the trailer control module (64), the central electronic brake control device (66) sending a fourth electrical control signal to the control port for the solenoid valves of the trailer control module (64) so as to control the brake pressure in service-brake cylinders of a trailer.

22. A pressure control module according to any one of claims 11 to 21, **characterised in that** it has output stages (17) for ABS pressure control valves (52) that are provided to be arranged between the first working port (44) of the first axle (116) and the service-brake cylinders (48) of the first axle (116) and between the second working port (44) of the second axle (118) and the service-brake cylinders (50) of the second axle (118), there being implemented in the electronic control device (66) routines by means of which control signals for the ABS pressure control valves (52) are emitted, there being generated by means of these control signals at the first axle (116) and at the second axle (118), with the aid of the ABS pressure control valves (52) and based on the service-brake pressures controlled axle by axle in the pressure control channels of the first axle (116) and the second axle (118), service-brake pressures individual to each wheel, in particular for controlling vehicle dynamics.

23. A pressure control module according to any one of claims 11 to 22, **characterised in that** the first electro-magnetic valve device (68) and the second electro-magnetic valve device (70) each have a relay valve device (84, 86) that is pneumatically controlled by an electro-magnetic inlet/outlet valve combination, the relay valve devices (84, 86) being controlled with the first and second working ports (44, 46) on the output side, and the electro-magnetic inlet/outlet valve combinations being controlled by the electronic control device (66).

24. A pressure control module according to any one of the preceding claims, **characterised in that** the inertial sensor (125, 125a; 110") comprises at least one of the following sensors: an acceleration sensor that measures the acceleration in one axis, in two axes or in three axes (x, y, z), and/or a yaw rate sensor.

25. A pressure control module according to any one of the preceding claims, **characterised in that** it has at least one vehicle data bus port for connecting to a vehicle data bus.

26. A pressure control module according to any one of the preceding claims, **characterised in that** it has inputs for wheel speed sensors (56) of the wheels of the vehicle and/or for brake wear sensors (60).

27. An electro-pneumatic service-brake device of a vehicle (100"), having at least one electrically controllable pressure control channel containing at least one pressure control module (16; 106") according to at least one of the preceding claims.

28. A service-brake device according to claim 27, **characterised in that** the electrical channel (28) of the foot-brake valve (2) or another pressure control module is connected to the at least one first communications port (96) of the pressure control module (16; 105").

29. A service-brake device according to claim 28 or 29, **characterised in that** a control device of a system for at least partially autonomous driving is connected to the at least one first communications port (96) of the pressure control module (16; 105") and sends brake-request signals to the pressure control module (16; 105") via the at least one first communications port (96).

30. A service-brake device according to any one of claims 27 to 29, **characterised in that** at least one further pressure control module (122, 122a) is connected to a second communications port (96) of the pressure control module (16; 105"), this at least one further pressure control module (122, 122a) being one of the following pressure control modules: a single-channel pressure control module that sets the same brake pressure at wheels on different sides of at least one axle; a dual-channel pressure control module that sets side-specific brake pressures at wheels on different sides of at least one axle.

31. A service-brake device according to claim 30, **characterised in that** the at least one further pressure control module (122, 122a) independently controls the brake pressure in connected service-brake cylinders of at least one further axle (116a, 120, 120a), the electronic control device (66) sending at least one third electric control signal for the at least one further pressure control module (122, 122a), which signal corresponds to the set brake pressure for the at least one further axle (116a, 120, 120a), to the second communications port (96) dependent on the signal present at the first communications port (96) so that the further pressure control module (122, 122a) sets the brake pressure in the connected service-brake cylinders.

32. A service-brake device according to any one of claims 27 to 31, **characterised in that** a trailer control module (64) that controls the brake pressure in service-brake cylinders of a trailer with the aid of an integrated electronic trailer control system is connected to a third communications port (96) of the pressure control module (16; 105").

33. A service-brake device according to any one of claims 27 to 32, **characterised in that** at least one first compressed-air reservoir (4) is connected to the first reservoir pressure port (24) of the pressure control module (16; 105") and at least one second compressed-air reservoir (6) separate from the first compressed-air reservoir (4) is connected to the second reservoir pressure port (14) of the pressure control module (16; 105").

34. A vehicle (100") having an electro-pneumatic service-brake device according to any one of claims 27 to 33.

## Revendications

1. Module (16 ; 105'') électropneumatique de réglage de la pression à au moins un canal, réalisé en unité de construction, d'un dispositif électropneumatique de frein de service d'un véhicule (100''), comprenant au moins un premier canal (9) de réglage de la pression réglable électriquement rapporté à une première pression de frein de service, dans lequel
a) pour le premier canal (9) de réglage de la pression sur la base d'air de travail provenant d'au moins un réservoir (4) d'air comprimé, on produit, en fonction d'un signal électrique de demande de frein d'un canal (28) électrique d'une soupape (2) de frein au pied, la première pression de frein de service pour au moins un cylindre (48, 50) de frein de service du dispositif de frein de service, et dans lequel
b) le premier canal (9) de réglage de la pression produit la première pression de frein de service dans le au moins un cylindre (48) de frein sur au moins un premier essieu (116), et dans lequel
c) le module (16 ; 105") de réglage de la pression a au moins ce qui suit : au moins un raccord de réservoir pour le raccordement du au moins un réservoir (4, 6) d'air comprimé, au moins un premier raccord (44) de travail du premier canal (9) de réglage de la pression, pour le raccordement du au moins un premier cylindre (48) de frein de service au au moins un premier essieu (116), au moins une première borne électrique de communication pour l'entrée d'au moins un signal représentant une première pression de consigne de frein de service pour le premier canal (9) de réglage de la pression, signal que l'on forme sur la base d'un signal électrique de demande de frein d'un canal (28) électrique d'une soupape (2) de frein au pied du dispositif électropneumatique de frein de service, et au moins une première mise à l'atmosphère (5) du premier canal (9) de réglage de la pression, ainsi qu'au moins une première borne d'alimentation en tension pour l'alimentation du module (16) de réglage de la pression en une tension électrique, et dans lequel
d) dans le module (16) de réglage de la pression
d1) il est intégré un appareil (66) électronique de commande, qui est constitué de manière à produire, en fonction du signal s'appliquant à la première borne électrique de communication et représentant la première pression de consigne de frein de service pour le premier canal (9) de réglage de la pression, un premier signal électrique de commande, correspondant à la première pression de frein de service de consigne, du premier dispositif (68) électromagnétique de soupape du premier canal (9) de réglage de la pression, et
d2) il est intégré le premier dispositif (68) électromagnétique de soupape, qui, en fonction du premier signal électrique de commande, module, à partir de la pression du au moins un réservoir (4) d'air comprimé, une première pression réelle de frein de service sur le premier raccord (44) de travail du premier canal (9) de réglage de la pression, et
d3) il est intégré au moins un premier capteur (88) de pression, qui entre dans l'appareil (66) électronique de commande, pour la comparaison avec la première pression de frein de service de consigne dans l'appareil (66) électronique de commande, un premier signal de mesure de la pression, représentant la première pression de frein de service réelle mesurée, dans lequel l'appareil (66) électronique de commande est constitué en outre de manière à effectuer, pour le premier canal (9) de réglage de la pression, une égalisation entre la première pression de frein de service réelle et la première pression de frein de service de consigne, de manière à commander, en fonction de cette égalisation, le premier dispositif (68) électromécanique de soupape, de manière à appliquer la première pression de frein de service de consigne au premier raccord (44) de travail, dans lequel
e) l'appareil (66) électronique de commande a une platine (94 ; 120") portant des composants électriques et électroniques, dans lequel, dans les composants électriques et électroniques sont mises en oeuvre des routines, au moins pour le réglage de la pression de frein de service au moins pour le premier canal (9) de réglage de la pression, **caractérisé en ce que**
f) sur ou à la au moins une platine (94 ; 120''), au moins un capteur (125, 125a ; 110") inertiel est disposé et est relié d'une manière conductrice de l'électricité à au moins certains des composants électriques et électroniques sur la platine (94 ; 120''), de manière à ce que les signaux de sortie du au moins un capteur (125, 125a ; 110") inertiel puissent entrer dans les au moins certains composants électriques et électroniques, dans lequel
g1) le module (16) de réglage de la pression comporte des moyens de découplage des oscillations, pour le découplage au moins partiel du au moins un capteur (125, 125a ; 110") inertiel d'oscillations ou du bruit de corps, auquel la platine (94 ; 120") ou des composants du module (16 ; 105'') de la pression est / sont soumis en fonctionnement, et les moyens de découplage des oscillations comprennent une partie (152) de découplage d'un corps (154) de la platine (94), partie sur laquelle est retenu ou disposé le au moins un capteur (125) inertiel, dans lequel la partie (152) de découplage est, au moyen d'un évidement (156) traversant en partie ou complètement le corps (154) de la platine (94), séparé du reste du corps (158) de la platine (94) à l'exception d'au moins une partie (160) de pont de la platine, qui relie, notamment à la manière d'un pont, la partie (152) de découplage au reste du corps (158) de la platine, dans lequel le long de la partie (160) de pont de la platine, il est tiré sur le reste du corps (158) de la platine au moins une liaison électrique entre le au moins un capteur (125) inertiel et les composants électriques et électroniques, liaison qui canal les signaux de sortie du au moins un capteur (125) inertiel aux composants électriques et électroniques, ou dans lequel
g2) il est prévu un dispositif (115'') électrique de mise en contact pour la mise en contact électrique, avec possibilité de ressort, de la platine (120") avec au moins une électrovanne (110") au moins du premier dispositif (68) électromagnétique de (soupape, qui comprend au moins un élément (130") de ressort, qui s'étend de la platine (120") jusqu'à la au moins une électrovanne (110") et par lequel d'une part la platine (120") et la au moins une électrovanne (110") sont montées élastiquement l'une par rapport à l'autre dans au moins un degré de liberté de déplacement et d'autre part la platine (120'') et la au moins une électrovanne (110") sont reliées l'une à l'autre d'une manière conductrice de l'électricité, ou dans lequel
g3) au moins une électrovanne du premier dispositif (68) électromagnétique de soupape est formée par une vanne (100') à armature basculante, ayant une armature (108') basculante constituée de manière à pouvoir pivoter.

2. Module de réglage de la pression suivant la revendication 1, lettre g1, **caractérisé en ce que** l'évidement (156) comporte au moins une fente dans le corps (154) de la platine, fente qui entoure au moins en partie la partie (152) de découplage, à l'exception d'au moins une partie (160) de pont de la platine.

3. Module de réglage de la pression suivant la revendication 1, lettre g1, **caractérisé en ce que** le au moins un évidement (156) est rempli au moins en partie d'une composition (162) d'amortissement.

4. Module de réglage de la pression suivant la revendication 1, lettre g1, **caractérisé en ce que** la partie (160) de pont de la platine a, au moins par endroits, une épaisseur plus petite que le reste du corps (158) de la platine et/ou que la partie (152) de découplage.

5. Module de réglage de la pression suivant la revendication 1, lettre g2, **caractérisé en ce que** le au moins un degré de liberté de déplacement comporte un degré de liberté de déplacement en translation et/ou en rotation.

6. Module de réglage de la pression suivant la revendication 1, lettre g2, **caractérisé en ce que** le au moins un élément (130") de ressort comporte un ressort hélicoïdal, qui est monté encastré entre la platine (120") et la au moins une électrovanne (110'').

7. Module de réglage de la pression suivant la revendication 1, lettre g2, **caractérisé en ce que** la au moins une platine (120'') est bloquée sur une surface, tournée vers l'intérieur du module (105") de réglage de la pression, d'un couvercle du module (105") de réglage de la pression et, lorsque le couvercle est mis sur un corps (92) du module (105") de réglage de la pression, le au moins un élément (130").de ressort est précontraint entre la platine (120") et la au moins une électrovanne (110").

8. Module de réglage de la pression suivant la revendication 1, lettre g2, **caractérisé en ce que** le au moins un élément (130") de ressort est centré sur la platine (120") et/ou sur la au moins une électrovanne (110").

9. Module de réglage de la pression suivant la revendication 1, lettre g3, **caractérisé en ce que** la vanne (100') à armature basculante comprend au moins ce qui suit :
a) une hémicoquille (102'),
b) un élément (104') de couvercle, qui recouvre d'une manière étanche au fluide l'hémicoquille (102') pour former un espace (106') de vanne, dans lequel l'élément (104') de couvercle a au moins une ouverture (110') de commande et une traversée (112') pour la canale d'un fluide dans l'espace (106') de vanne ;
c) une armature (108') basculante conductrice magnétiquement, ayant au moins un élément (116') d'étanchéité, dans laquelle l'armature (108') basculante est montée mobile dans l'espace (106') de vanne entre une position d'ouverture et une position de fermeture, dans laquelle l'élément (110') d'étanchéité ferme d'une manière étanche au fluide l'ouverture (110') de commande dans la position de fermeture et la dégage dans la position d'ouverture ; et
d) un dispositif (120') à bobine, qui est disposé et constitué à l'extérieur de l'espace (106') de vanne sur un fond (118'), opposé à l'élément (104') de couvercle, de l'hémicoquille (102'), afin de déplacer l'armature (108') basculante entre la position d'ouverture et la position de fermeture, dans lequel
e) le dispositif (120') à bobine a un noyau (122') de bobine conducteur magnétiquement et au moins une bobine (124') enroulée autour du noyau (122') de bobine, dans lequel le noyau (122') de bobine est disposé dans la direction longitudinale sensiblement parallèlement au fond (118').

10. Module de réglage de la pression suivant la revendication 1, lettre g3, **caractérisé en ce qu'**au moins un élément (146') d'amortissement, qui est disposé d'un côté, tourné vers le fond (118'), de l'armature (108') basculante ou d'un côté, tourné vers l'armature (108') basculante, du fond (118') pour amortir, lorsque l'armature (108') basculante vient dans la position d'ouverture, une oscillation mécanique de l'armature (108') basculante, en particulier une vibration et/ou une secousse et/ou un choc, en particulier dans lequel l'élément (146') d'amortissement est fixé, en particulier en utilisant une colle à l'armature (108') basculante ou au fond (118').

11. Module de réglage de la pression suivant la revendication 1, lettre g3, **caractérisé en ce qu'**il est formé par un module (16 ; 105'') de réglage de la pression électropneumatique central à au moins deux canaux, réalisé en une unité de construction, pour le dispositif électropneumatique du frein de service du véhicule (100''), comprenant au moins deux canaux (9, 11) de réglage de la pression réglables électriquement rapportés à une pression de frein, dont un canal de réglage de la pression réglable électriquement est le premier canal (9) de réglage de la pression et dont un autre canal de réglage de la pression réglable électriquement est un deuxième canal (11) de réglage de la pression réglable électriquement, dans lequel
a) pour les canaux (9, 11) de la pression réglables électriquement, il est produit, sur la base de l'air de travail provenant du au moins un réservoir (4, 6) d'air comprimé, en fonction du signal électrique de demande de frein du canal (28) électrique de la soupape (2) de frein au pied, respectivement une pression réglée de frein de service pour le au moins un cylindre (48, 50) de frein de service du dispositif de frein de service, et dans lequel
b) le deuxième canal (11) de réglage de la pression produit une deuxième pression réglée de frein de service dans des cylindres (50) de frein de service sur au moins un deuxième essieu (118), et dans lequel
c) le module (16 ; 105") de réglage de la pression a au moins ce qui suit : au moins la première borne de communication électrique pour l'entrée d'au moins un signal, qui représente une deuxième pression de consigne de frein de service pour le deuxième canal (11) de réglage de la pression et qui est formé sur la base du signal électrique de demande de frein du canal (28) électrique de la soupape (2) de frein au pied du dispositif électropneumatique de frein de service, au moins un deuxième raccord (46) de travail du deuxième canal (11) de réglage de la pression pour le raccordement d'au moins un cylindre (48) de frein de service du au moins un deuxième essieu (118), une deuxième mise à l'atmosphère (7) du deuxième canal (11) de réglage de la pression, et dans lequel
d) dans le module (16) de réglage de la pression
d1) est intégré l'appareil (66) électronique de commande, qui est constitué en appareil électronique central de commande de frein du dispositif de frein de service, de manière à produire, en fonction du signal appliqué à la première borne électrique de communication, pour le deuxième canal (11) de réglage de la pression, un deuxième signal électrique de commande, correspondant à une deuxième pression de frein de service de consigne, pour un deuxième dispositif (70) électromagnétique de soupape, indépendant du premier dispositif (68) électromagnétique de soupape, du deuxième canal (11) de réglage de la pression, et
d2) est intégré le deuxième dispositif (70) électromagnétique de soupape qui, en fonction du deuxième signal électrique de commande, module à partir de la pression du au moins un réservoir (4, 6) d'air comprimé, une deuxième pression réelle de frein de service pour le deuxième raccord (46) de travail du deuxième canal (11) de réglage de la pression, et
d3) est intégré au moins un deuxième capteur (90) de pression, dans lequel le deuxième capteur (90) de pression entre un deuxième signal de mesure de la pression, représentant la deuxième pression réelle de frein de service mesurée, dans l'appareil (66) électronique de commande, pour la comparaison à la deuxième pression de frein de service de consigne, dans lequel l'appareil (66) électronique de commande est constitué en outre de manière à effectuer, pour le deuxième canal (11) de réglage de la pression, une égalisation entre la deuxième pression réelle de frein de service et la deuxième pression de frein de service de consigne, et commande, en fonction de cette égalisation, le deuxième dispositif (70) électromagnétique de soupape, de manière à appliquer la deuxième pression de frein de service de consigne au deuxième raccord (46) de travail, dans lequel
e) l'appareil (66) électronique de commande est constitué en outre de manière à entrer, en fonction de signaux de sortie du au moins un capteur (125, 125a) inertiel, des signaux de réglage dans le premier dispositif (68) électromagnétique de soupape et/ou dans le deuxième dispositif (70) électromagnétique de soupape, afin d'effectuer, par au moins un cylindre (48, 50) de frein de service, un freinage correspondant à une dynamique de conduite ou à une stabilité de conduite, et dans lequel
f) l'appareil (66) électronique de commande a une platine (94 ; 120") portant les composants électriques et électroniques, dans lequel dans les composants électriques et électroniques sont mises en œuvre des routines, au moins pour le réglage de la pression de frein dans le premier et le deuxième canal (9, 11) de réglage de la pression et pour le réglage de la dynamique de conduite ou de la stabilité de conduite, dans lequel
g) les signaux de sortie du au moins un capteur (125, 125a) inertiel peuvent être entrés dans certains des au moins composants électriques et électroniques pour effectuer le réglage de la dynamique de conduite ou de la stabilité de conduite.

12. Module de réglage de la pression suivant la revendication 1, lettre g3 et suivant la revendication 11, **caractérisé en ce que** le dispositif (115'') de mise en contact électrique est prévu pour la mise en contact, avec possibilité d'effet de ressort, de la platine (120'') avec au moins une électrovanne (110") du deuxième dispositif (70) électromagnétique de soupape.

13. Module de réglage de la pression suivant la revendication 1, lettre g3 et suivant la revendication 11, **caractérisé en ce qu'**au moins une électrovanne du deuxième dispositif (70) électromagnétique de soupape est formée par une vanne (100') à armature basculante ayant une armature (108') basculante constituée de manière à pouvoir pivoter.

14. Module de réglage de la pression suivant la revendication 1, lettre g3, **caractérisé en ce que,** pour la constitution de canaux (9, 11) de régulation de la pression en circuits séparés pneumatiquement pour le premier canal (9) de réglage de la pression, il est prévu un premier raccord (24) de pression de réservoir, qui lui est propre, et pour le deuxième canal (11) de réglage de la pression, un deuxième raccord (14) de pression de réservoir, qui lui est propre et qui est distinct du premier raccord (24) de pression du réservoir, dans lequel il peut être raccordé, au premier raccord (24) de pression du réservoir, au moins un premier réservoir (4) d'air comprimé et, au deuxième raccord (14) de pression du réservoir, au moins un deuxième réservoir (6) d'air comprimé distinct du premier réservoir (4) d'air comprimé, dans lequel les chemins pneumatiques d'écoulement du premier canal (9) de réglage de la pression, partant du premier raccord (24) de pression de réservoir et allant jusqu'au premier raccord (44) de travail, sont constitués de manière séparée pneumatiquement des chemins pneumatiques d'écoulement du deuxième canal (11) de réglage de la pression, partant du deuxième raccord (14) de pression de réservoir et allant jusqu'au deuxième raccord (46) de travail.

15. Module de réglage de la pression suivant la revendication 14, **caractérisé en ce qu'**il est prévu un premier raccord (36) de back-up d'un premier circuit pneumatique de back-up et un deuxième raccord (38) de back-up d'un deuxième circuit pneumatique de back-up, dans lequel peuvent être appliquées, dans le premier raccord (36) de back-up, une première pression de back-up dérivée du premier réservoir (4) d'air comprimé et commandée par un premier canal pneumatique de la soupape (2) de frein à pied, et dans le deuxième raccord (38) de back-up, une deuxième pression de back-up dérivée du deuxième réservoir (6) d'air comprimé et commandée par un deuxième canal pneumatique de la soupape (2) de frein à pied, dans lequel il est formé, à l'aide du premier circuit de back-up et du deuxième circuit de back-up, lors d'une défaillance ou d'une perturbation des canaux de réglage électriques de la pression, réglables de manière séparée en circuit, les pressions de frein sur les raccords (44, 46) de travail.

16. Module de réglage de la pression suivant la revendication 15, **caractérisé en ce qu'**un premier chemin pneumatique d'écoulement de back-up du premier circuit de back-up, partant du premier raccord (36) de back-up et allant au premier raccord (44) de travail, est formé en étant séparé pneumatiquement d'un deuxième chemin pneumatique d'écoulement de back-up du deuxième circuit de back-up, partant du deuxième raccord (36) de back-up et allant au deuxième raccord (46) de travail.

17. Module de réglage de la pression suivant la revendication 16, **caractérisé en ce que,** dans le premier chemin pneumatique d'écoulement de back-up est montée une première soupape (80) électropneumatique de back-up du premier dispositif (68) électromagnétique de soupape et dans le deuxième chemin pneumatique d'écoulement de back-up, une deuxième soupape (82) électropneumatique de back-up du deuxième dispositif (70) électromagnétique de soupape, dans lequel les soupapes (80, 82) électropneumatiques de back-up sont constituées et sont commandées par l'appareil (66) électronique central de commande de frein, de manière à interrompre, lorsque les canaux électriques de régulation de la pression sont intacts, le premier et le deuxième chemin d'écoulement de back-up et, si les canaux électriques de régulation de la pression sont défaillants ou perturbés, elles ouvrent le premier et le deuxième chemin d'écoulement de back-up.

18. Module de réglage de la pression suivant l'une des revendications 11 à 17, **caractérisé en ce que** le réglage de la dynamique de conduite ou de la stabilité de conduite comporte au moins l'un des réglages suivants : un réglage (ESP) de la stabilité de conduite, un réglage (ABS) du glissement de freinage, un réglage (ASR) du glissement d'entraînement, un réglage (RPS) de protection vis-à-vis d'un renversement, un réglage de conduite au moins en partie autonome.

19. Module de réglage de la pression suivant l'une des revendications 11 à 18, **caractérisé en ce qu'**il a au moins une deuxième borne électrique d'alimentation en tension, pour l'alimentation électrique en tension d'au moins un autre module (122, 122a) de réglage de la pression et au moins une deuxième borne (96) de communication pour la communication avec le au moins un autre module (122, 122a) de réglage de la pression, dans lequel
a) le au moins un autre module (122, 122a) de réglage de la pression règle, de manière autonome, la pression de frein dans des cylindres raccordés de frein de service d'au moins un autre essieu (116a, 120, 120a), et dans lequel
b) l'appareil (66) électronique central de commande de frein du dispositif de frein de service entre, en fonction des signaux électriques de demande de frein appliqués à la première borne (96) de communication, dans la deuxième borne (96) de communication au moins un troisième signal électrique de commande, correspondant à une pression de frein de consigne pour le au moins un autre essieu (116a, 120, 120a), du au moins un autre module (122, 122a) de réglage de la pression, afin que l'autre module (122, 122a) de réglage de la pression règle la pression de frein dans au moins un cylindre de frein de service, qui y est raccordé.

20. Module de réglage de la pression suivant l'une des revendications 11 à 19, **caractérisé en ce qu'**il a au moins une troisième borne électrique d'alimentation en tension pour l'alimentation en tension d'au moins un module (64) de commande de remorque, et au moins une troisième borne (96) de communication pour la communication avec le module (64) de commande de remorque, dans lequel
a) le module (64) de commande de remorque règle la pression de frein dans des cylindres de frein de service d'une remorque, à l'aide d'une électronique intégrée de commande de frein de remorque, et dans lequel
b) l'appareil (66) électronique central de commande de frein du dispositif de frein de service entre, en fonction des signaux électriques de demande de frein appliqués à la première borne (96) électrique de communication, dans la troisième borne (96) de communication un quatrième signal électrique de commande, correspondant à une pression de frein de consigne, du module (64) de commande de remorque, afin de régler la pression de frein dans des cylindres de frein de service de la remorque raccordés au module (64) de commande de la remorque.

21. Module de réglage de la pression suivant l'une des revendications 11 à 19, **caractérisé en ce qu'**il a au moins une borne de commande d'électrovanne d'un module (64) de commande de remorque et au moins une borne de capteur pour au moins un capteur de pression du module (64) de commande de la remorque, dans lequel l'appareil (66) électronique central de commande de frein entre un quatrième signal électrique de commande dans la borne de commande des électrovannes du module (64) de commande de la remorque, afin de régler la pression de service dans les cylindres de frein de service d'une remorque.

22. Module de réglage de la pression suivant l'une des revendications 11 à 21, **caractérisé en ce qu'**il a des étages (17) terminaux de soupapes (52) de commande de pression ABS, qui sont prévus pour être montés entre le premier raccord (44) de travail du premier essieu (116) et le cylindre (48) de frein de service du premier essieu (116) et entre le deuxième raccord (44) de travail du deuxième essieu (118) et les cylindres (50) de frein de service du deuxième essieu (118), dans lequel il est mis en œuvre, dans l'appareil (66) électronique de commande, des routines, par lesquels il est sorti des signaux de commande des soupapes (52) de commande de pression ABS, par lesquels, à l'aide des soupapes (52) de commande de pression ABS, il est produit, sur la base des pressions de frein de service réglées essieu par essieu, dans les canaux de réglage de la pression du premier essieu (116) et du deuxième essieu (118) respectivement des pressions de frein de service individuelles par roue sur le premier essieu (116) et sur le deuxième essieu (118), en particulier pour effectuer la régulation de la dynamique de la conduite.

23. Module de réglage de la pression suivant l'une des revendications 11 à 22, **caractérisé en ce que** le premier dispositif (68) électromagnétique de soupape et le deuxième dispositif (70) électromagnétique de soupape ont chacun un dispositif (84, 86) de vanne relais commandé pneumatiquement par une combinaison électromagnétique de vanne d'entrée / sortie, dans lequel les dispositifs (84, 86) de vanne relais sont commandés du côté de la sortie par les premier et deuxième raccords (44, 46) de travail, et les combinaisons de vanne électromagnétique d'entrée / sortie par l'appareil (66) électronique de commande.

24. Module de réglage de la pression suivant l'une des revendications précédentes, **caractérisé en ce que** le capteur (125, 125a ; 110'') inertiel comprend au moins l'un des capteurs suivants : un capteur d'accélération, qui mesure l'accélération dans un essieu, dans deux ou trois axes (x, y, z), et/ou un capteur de vitesse de rotation.

25. Module de réglage de la pression suivant l'une des revendications précédentes, **caractérisé en ce qu'**il a au moins un raccord de bus de données de véhicule pour le raccordement à un bus de données de véhicule.

26. Module de réglage de la pression suivant l'une des revendications précédentes, **caractérisé en ce qu'**il a des entrées de capteur (56) de vitesse de rotation de roue des roues du véhicule et/ou pour des capteurs (60) d'usure de frein.

27. Dispositif électropneumatique de frein de service d'un véhicule (100") comprenant au moins un canal de réglage de la pression réglable électriquement comportant un module (16 ; 105") de réglage de la pression suivant au moins l'une des revendications précédentes.

28. Dispositif électropneumatique de frein de service suivant la revendication 27, **caractérisé en ce que** le canal (28) électrique de la soupape (2) de frein au pied ou un autre module de réglage de la pression est raccordé à la au moins une première borne (96) de communication du module (16 ; 105") de réglage de la pression.

29. Dispositif électropneumatique de frein de service suivant la revendication 27 ou 28, **caractérisé en ce qu'**il est au moins raccordé à la au moins une première borne (96) de communication du module (16 ; 105'') de réglage de la pression, un appareil de commande d'un système pour la canale au moins en partie autonome, qui entre par la au moins une première borne (96) de communication des signaux de demande de frein dans le module (16 ; 105'') de réglage de la pression.

30. Dispositif électropneumatique de frein de service suivant l'une des revendications 27 à 29, **caractérisé en ce qu'**au moins un autre module (122, 122a) de réglage de la pression est raccordé à une deuxième borne (96) de communication du module (16 ; 105'') de réglage de la pression, dans lequel le au moins un autre module (122, 122a) de réglage de la pression est l'un des modules de réglage de la pression suivants : un module de réglage de la pression à 1 canal, qui règle la même pression de frein sur des roues sur des côtés différents d'au moins un essieu, un module de réglage de la pression à 2 canaux, qui règle sur des roues sur des côtés différents d'au moins un essieu, une pression de frein individuelle par côté.

31. Dispositif électropneumatique de frein de service suivant la revendication 30, **caractérisé en ce que** le au moins un autre module (122, 122a) de réglage de la pression règle, de manière autonome, la pression de frein dans des cylindres de frein de service raccordés d'au moins un autre essieu (116a, 120, 120a), dans lequel l'appareil (66) électronique de commande entre, en fonction du signal appliqué sur la première borne (96) de communication, dans la deuxième borne (96) de communication au moins un troisième signal électrique de commande, correspondant à la pression de frein de consigne pour le au moins un autre essieu (116a, 120, 120a) du au moins un autre module (122, 122a) de réglage de la pression, afin que l'autre module (122, 122a) de réglage de la pression règle la pression de frein dans les cylindres de frein de service raccordés.

32. Dispositif électropneumatique de frein de service suivant l'une des revendications 27 à 31, **caractérisé en ce qu'**à une troisième borne (96) de communication du module (16 ; 105") de réglage de la pression est raccordé un module (64) de commande de remorque réglant la pression de frein dans les cylindres de frein de service d'une remorque, à l'aide d'une électronique intégrée de commande de remorque.

33. Dispositif électropneumatique de frein de service suivant l'une des revendications 27 à 32, **caractérisé en ce qu'**au premier raccord (24) de pression de réservoir du module (16 ; 105'') de réglage de la pression est raccordé au moins un premier réservoir (4) d'air comprimé et, au deuxième raccord (14) de pression de pression du module (16 ; 105") de réglage de la pression, un deuxième réservoir (6) d'air comprimé distinct du premier réservoir (4) d'air comprimé.

34. Véhicule (100") ayant un dispositif électropneumatique de frein de service suivant l'une des revendications 27 à 33.
